(19) Europäisches Patentamt
European Patent Office
Office européen des brevets

(11) EP 2 985 324 A1

(12) EUROPEAN PATENT APPLICATION
published in accordance with Art. 153(4) EPC

(43) Date of publication:
**17.02.2016 Bulletin 2016/07**

(21) Application number: **14782728.1**

(22) Date of filing: **07.04.2014**

(51) Int Cl.:
*C09D 143/00* (2006.01)
*B32B 27/28* (2006.01)
*C09D 5/02* (2006.01)
*C09D 5/16* (2006.01)
*C09D 7/12* (2006.01)
*C09D 201/02* (2006.01)
*C09D 201/06* (2006.01)
*C09D 201/10* (2006.01)

(86) International application number:
**PCT/JP2014/060119**

(87) International publication number:
**WO 2014/168123 (16.10.2014 Gazette 2014/42)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.04.2013 JP 2013083915**

(71) Applicant: **Mitsui Chemicals, Inc.**
**Tokyo 105-7117 (JP)**

(72) Inventors:
- **OKAZAKI, Koju**
  **Sodegaura-shi**
  **Chiba 299-0265 (JP)**
- **HANAWA, Takayuki**
  **Omuta-shi**
  **Fukuoka 836-8610 (JP)**
- **KUMA, Shigetoshi**
  **Omuta-shi**
  **Fukuoka 836-8610 (JP)**

(74) Representative: **Hoffmann Eitle**
**Patent- und Rechtsanwälte PartmbB**
**Arabellastraße 30**
**81925 München (DE)**

# (54) FILM COMPRISING COPOLYMER OR COMPOSITION

(57) Provided are a film in which the balance between hydrophilicity and abrasion resistance is superior, decrease in hydrophilicity by water is minimal, and the weather resistance is also superior; as well as a polymer and a polymer composition that can yield such a film. The film of the invention is prepared from a specific copolymer (i) having a sulfonic acid-containing group, an epoxy group, and a specific alkoxysilyl group in a molecule, or from a composition including the copolymer (i).

EP 2 985 324 A1

## Description

[Technical Field]

The present invention relates to a film obtained from a hydrophilic copolymer or a composition containing the copolymer, provided with antifogging performance, antifouling performance, and antistatic performance, and superior in abrasion resistance and weather resistance; and a use thereof.

[Background Art]

Improvement of fogging and fouling to occur on a substrate surface, such as a plastic surface and a glass surface, has been demanded recently more strongly.

As a method for resolving a fogging problem, an antifogging paint containing a reactive surfactant in addition to an acrylic oligomer has been proposed, and a cured film obtained from the antifogging paint has allegedly improved hydrophilicity and water absorbency (Non Patent Literature 1). Further, as a method for resolving a fouling problem, for example, an anti-tinting material having self-cleaning performance (anti-tainting performance) has drawn an attention, which can remove efficiently dirt stuck to an exterior wall, etc. (a hydrophobic substance in the air, etc.) by detaching the same with rainfall, sprinkled water, or the like, by means of enhancing the hydrophilicity of the surface (Non Patent Literature 2 and 3).

The inventor *et al.* have proposed a monolayer film graduating (concentrating) anionic hydrophilic groups in a surface as a method for resolving the fogging and fouling problems (Patent Literature 1). A film obtained according to the invention is transparent and highly hydrophilic; superior in antifogging performance, antifouling performance, antistatic performance, quick-drying property (high drying speed of adsorbed water), and chemical resistance; and further hard and superior in a scratch property. However, through investigations of the inventor *et al.* it has been found that there is a room for improvement in terms of abrasion resistance and weather resistance.

Generally, as a method for improving the weather resistance and abrasion resistance of a substrate surface, a method of coating the substrate surface with an inorganic compound has been known. One of representative examples is a method of coating a silica compound as a hard coat on a spectacle lens by a sol gel reaction (Non Patent Literature 4).

A hard coat from a silica compound is very hard and as resistant to abrasion as glass due to its dense structure, but, on the other hand the hard coat has drawbacks such as fragility, difficulty in coloring, fogging tendency, and sticking and fixing tendency of dirt.

Various methods have been heretofore proposed for eliminating the drawbacks. For example, as a method for imparting dyeability and toughness, a method, by which a condensation product of melamine and a polyhydric alcohol, and a silane compound having an epoxy group are added to silica (Patent Literature 2), a method, by which an epoxy compound and an aluminum complex are added to silica (Patent Literature 3), and a method, by which an acrylic polymer having a hydroxy group is added to silica (Patent Literature 4) have been proposed.

As a method for imparting antifogging performance, a method, by which a styrenic sulfonic acid polymer is added to silica, has been proposed (Patent Literature 5).

Further, as a water dispersible resin composition for painting a steel plate, a composition composed of (A) a copolymer resin prepared by emulsion polymerization of a polymerizable unsaturated monomer having an epoxy group, a polymerizable unsaturated monomer having an acid radical such as a sulfonic acid group, a polymerizable unsaturated monomer having a hydroxy group, and a polymerizable unsaturated monomer having a hydrolyzable silyl group, each at a content in a range of from 0.1 to 10 wt% with respect to the total amount of the monomers; (B) a zirconium compound; and (C) a silane coupling agent, has been known (Patent Literature 6).

Similarly, as a water dispersible resin treatment agent for a metal surface, a treatment agent composed of (A) a core-shell type resin prepared by emulsion polymerization of a polymerizable unsaturated monomer not having an epoxy group, an acid radical or a hydroxy group, a polymerizable unsaturated monomer having an epoxy group, a polymerizable unsaturated monomer having an acid radical such as a sulfonic acid group, a polymerizable unsaturated monomer having a hydroxy group, a polymerizable unsaturated monomer having a hydrolyzable silyl group, and a polymerizable unsaturated monomer having a cyclic ureido group with a specific structure, each at a content in a range of from 0.1 to 5 wt% with respect to the total amount of the monomers; (B) a zirconium compound; and (C) a silane coupling agent, has been known (Patent Literature 7).

[Citation List]

[Patent Literature]

[Patent Literature 1] International Publication No. WO 2007/064003
[Patent Literature 2] Japanese Unexamined Patent Application Publication No. S56-22365
[Patent Literature 3] Japanese Unexamined Patent Application Publication No. S61-166824
[Patent Literature 4] Japanese Unexamined Patent Application Publication No. H06-166847
[Patent Literature 5] Japanese Unexamined Patent Application Publication No. H11-021512
[Patent Literature 6] Japanese Unexamined Patent Application Publication No. 2006-342221
[Patent Literature 7] Japanese Unexamined Patent Application Publication No. 2006-089589

[Non Patent Literature]

[Non Patent Literature 1] Toagosei Research Annual Report, TREND, 1999, February, page 39 to 44
[Non Patent Literature 2] High Polymers, Japan (Kobunshi), 44(5), page 307, 1995
[Non Patent Literature 3] Expected Materials for the Future, 2 (1), page 36-41, 2002
[Non Patent Literature 4] Technology and Application of Plastic Lens System, page 165-166, CMC Publishing Co., Ltd., 30 June 2003

[Summary of Invention]

[Technical Problem]

Although the proposal according to the Patent Literature 5 is a preferable one, which can easily attain high hydrophilicity, it has become clear through investigations by the inventor, *et al.* that a polymer is apt to leave from a film such that the hydrophilicity tends to decrease by water (which becomes more remarkable, for example, for a smaller film thickness), and there remains a problem of inapplicability to a situation where practical antifogging performance and antifouling performance (self-cleaning by rain water, *etc*.) are required. An object of the present invention is to provide a film in which the balance between hydrophilicity and abrasion resistance is superior, decrease in hydrophilicity by water is minimal, and the weather resistance is also superior, as well as a polymer and a polymer composition that can yield such a film.

[Solution to Problem]

For attaining the object, the inventor, *et al.* have diligently investigated to find that films obtained from a copolymer (i) having a sulfonic acid-containing group, an epoxy group and an alkoxysilyl group in a molecule, and from a composition containing the copolymer (i), are superior in a balance between hydrophilicity and abrasion resistance, minimal in decrease of hydrophilicity by water, and also superior in weather resistance, thereby accomplishing the present invention.
Namely, the present invention relates to the following [1] to [12].

[1] A film which is obtained from a copolymer (i) comprising constitutional units expressed by the following general formulas (1), (2), and (3), or from a composition comprising the copolymer (i), and which has a thickness of not more than 100 nm (0.1 μm),

[Chem. Formula 1]

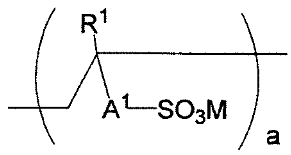

(1)

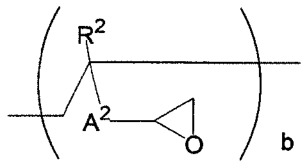

(2)

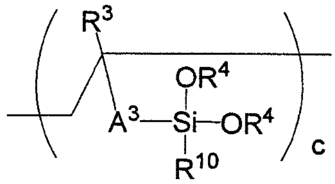

(3)

wherein in the formulas (1), (2) and (3), each of a, b, and c represents the constitutional ratio of each constitutional unit, satisfying a = 0.998 to 0.001, b = 0.001 to 0.998, c = 0.001 to 0.998, and a + b + c = 1;

$A^1$ is a single bond, a C1 to C 10 divalent hydrocarbon group, a group expressed by the following formula (1-1), or a group expressed by the following formula (1-2); $A^2$ is a single bond, a C1 to C 10 divalent hydrocarbon group, a group expressed by the following formula (2-1), or a group expressed by the following formula (2-2) ; $A^3$ is a single bond, a C1 to C 10 divalent hydrocarbon group, a group expressed by the following formula (3-1), or a group expressed by the following formula (3-2);

$R^1$, $R^2$ and $R^3$ independently represent a hydrogen atom, or a methyl group; $R^4$ independently represents a hydrogen atom, a methyl group, an ethyl group, a propyl group, or a butyl group; $R^{10}$ represents a hydrogen atom, a methyl group, an ethyl group, a propyl group, a butyl group, a methoxy group, an ethoxy group, a propoxy group, or a butoxy group; and

M represents a hydrogen atom, an alkali metal ion, a semi-valent alkaline earth metal ion, an ammonium ion, or an amine ion; and

[Chem. Formula 2]

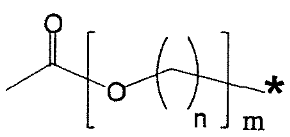 (1−1) 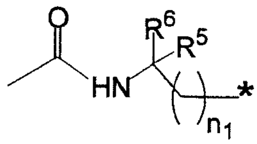 (1−2)

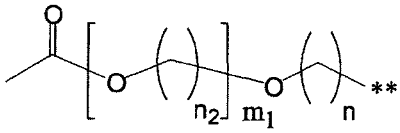 (2−1) 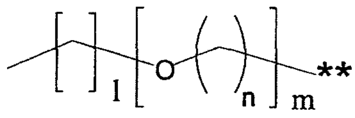 (2−2)

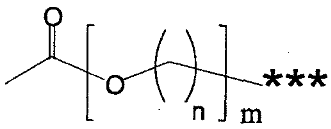 (3−1) 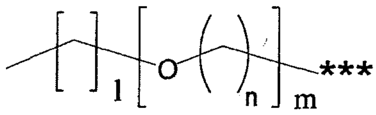 (3−2)

wherein in the formulas (1-1), (1-2), (2-1), (2-2), (3-1), and (3-2), n and $n_2$ independently are an integer from 1 to 10; $n_1$ is an integer from 0 to 10; m is an integer from 1 to 6; $m_1$ is an integer from 0 to 6; 1 is an integer from 0 to 4; $R^5$ and $R^6$ independently represent a hydrogen atom, or a methyl group; * represents an end bonding to $SO_3M$; ** represents an end bonding to an epoxy group; and *** represents an end bonding to a Si atom.

[2] The film according to [1] above, wherein the constitutional units expressed by the general formulas (1), (2), and (3) comprise respectively constitutional units expressed by the following general formulas (4), (5) and (6):

[Chem. Formula 3]

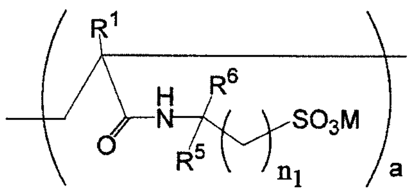 (4)

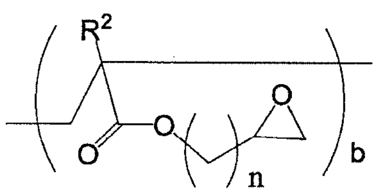 (5)

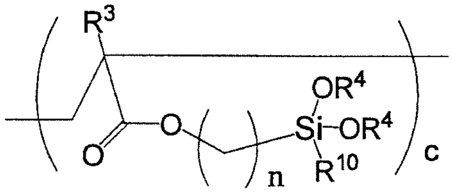 (6)

wherein in the formulas (4), (5) and (6), each of a, b, and c represents the constitutional ratio of each constitutional unit, satisfying a = 0.998 to 0.001, b = 0.001 to 0.998, c = 0.001 to 0.998, and a + b + c = 1;
$n_1$ is an integer from 0 to 10; n is an integer from 1 to 10;
$R^1$, $R^2$, $R^3$, $R^5$, and $R^6$ independently represent a hydrogen atom, or a methyl group; $R^4$ independently represents a hydrogen atom, a methyl group, an ethyl group, a propyl group, or a butyl group; $R^{10}$ represents a hydrogen atom, a methyl group, an ethyl group, a propyl group, a butyl group, a methoxy group, an ethoxy group, a propoxy group, or a butoxy group; and
M represents a hydrogen atom, an alkali metal ion, a semi-valent alkaline earth metal ion, an ammonium ion, or an amine ion.

[3] The film according to [1] or [2] above, wherein the weight-average molecular weight of the copolymer (i) measured by GPC is from 500 to 3,000,000.
[4] The film according to any one of [1] to [3] above, which is obtained from a composition comprising the copolymer (i) and a silane compound (ii) expressed by the following general formula (7) :

[Chem. Formula 4]

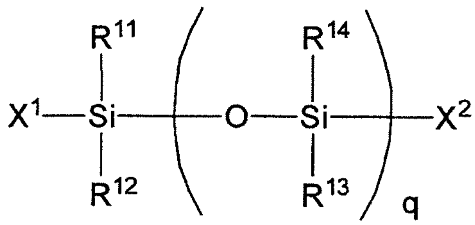

(7)

wherein in the formula (7), $X^1$ and $X^2$ independently represent a hydroxy group, a C1 to C4 alkoxy group, or a halogen atom;
$R^{11}$ to $R^{14}$ independently represent a hydroxy group, a hydrogen atom, a C1 to C4 alkyl group, a vinyl group, an allyl group, a phenyl group, a 2-phenylethyl group, a C1 to C4 alkoxy group, or a halogen atom; and
q is an integer from 0 to 10,000.

[5] The film according to [4] above, wherein the ratio of the weight of the copolymer (i) to the weight of the silane compound (ii) reduced to a $SiO_2$ weight is in a range from 99.9/ 0.1 to 0.1/ 99.9.
[6] The film according to any one of [1] to [5] above, which is obtained by heating.
[7] A laminate comprising a layer (Z) that comprises the film according to any one of [1] to [6] above and a substrate.
[8] The laminate according to [7] above, wherein the layer (Z) is an outermost layer of the laminate.
[9] The laminate according to [7] or [8] above, which comprises a hard coat layer between the layer (Z) and the substrate.
[10] The laminate according to any one of [7] to [9] above, which comprises an antireflection layer between the layer (Z) and the substrate.
[11] The laminate according to any one of [7] to [10] above, wherein the layer (Z) has a change in a water contact angle of 20° or less, the water contact angle being observed before and after the layer (Z), immersed in 25°C water, is ultrasonically treated for 10 minutes.
[12] An optical article or an optical device, comprising the laminate according to any one of [7] to [11] above.

[Advantageous Effects of Invention]

A film obtained from a copolymer or a composition containing the copolymer, according to the present invention, is superior in a balance between hydrophilicity and abrasion resistance, minimal in decrease of hydrophilicity by water, and also superior in weather resistance. Therefore, various laminates prepared by laminating the film according to the present invention onto a substrate, etc. can be also provided.

[Brief Description of Drawings]

[Figure 1] Figure 1 is a diagram showing comparative data (DSC chart) in terms of the thermal stability of typical compounds having a polymerizable functional group with a carbon-carbon double bond and having a sulfonic acid-containing group to give a structural unit expressed by the general formula (1) constituting a copolymer (i) used in the present invention.
[Figure 2] Figure 2 is a diagram showing a cutting method for a sample, and measurement positions for a sulfonic acid concentration, in measuring the degree of gradient in a sample obtained in Example.
[Figure 3] Figure 3 is a diagram showing the reflectance in Example 2B.
[Figure 4] Figure 4 is a diagram showing the reflectance in Example 1A and Comparative Example 5A.

[Description of Embodiments]

A copolymer (i) used for the preparation of the film according to the present invention is characterized by including constitutional units expressed by the following formulas (1), (2) and (3).

[Chem. Formula 5]

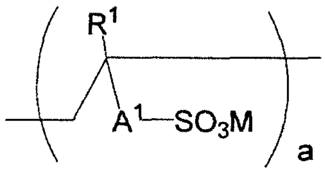

(1)

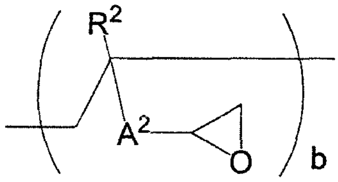

(2)

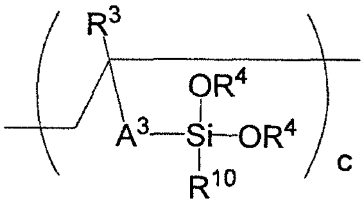

(3)

In the formulas, each of a, b, and c represents the constitutional ratio of each constitutional unit, satisfying a = 0.998 to 0.001, b = 0.001 to 0.998, c = 0.001 to 0.998, and a + b + c = 1.
In the formula, $R^1$, $R^2$ and $R^3$ independently represent a hydrogen atom, or a methyl group; $R^4$ independently represents a hydrogen atom, a methyl group, an ethyl group, a propyl group, or a butyl group; and $R^{10}$ represents a hydrogen atom, a methyl group, an ethyl group, a propyl group, a butyl group, a methoxy group, an ethoxy group, a propoxy group, or a butoxy group.
In the formula, M represents a hydrogen atom, an alkali metal ion, a semi-valent alkaline earth metal ion, an ammonium ion, or an amine ion.
In the formula, $A^1$ is a single bond, a C1 to C 10 divalent hydrocarbon group, a group expressed by the following formula (1-1), or a group expressed by the following formula (1-2); $A^2$ is a single bond, a C1 to C10 divalent hydrocarbon group, a group expressed by the following formula (2-1), or a group expressed by the following formula (2-2); $A^3$ is a single bond, a C1 to C 10 divalent hydrocarbon group, a group expressed by the following formula (3-1), or a group expressed by the following formula (3-2).

[Chem. Formula 6]

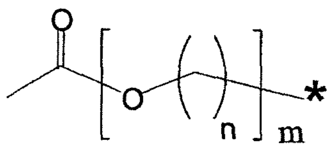
(1-1)

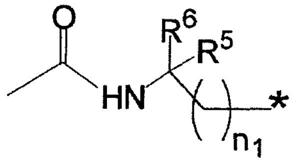
(1-2)

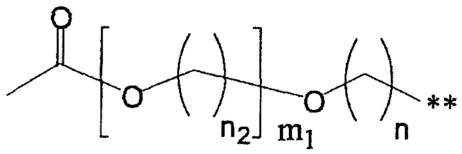
(2-1)

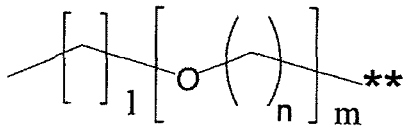
(2-2)

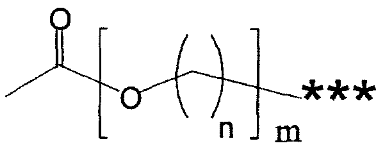
(3-1)

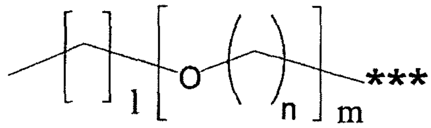
(3-2)

In the formulas (1-1), (2-1), (2-2), and (3-2), n is an integer from 1 to 10; and m is an integer from 1 to 6. In the formula (1-2), $n_1$ is an integer from 0 to 10. In the formula (2-1), $n_2$ is an integer from 1 to 10; and $m_1$ is an integer from 0 to 6. In the formulas (2-2), and (3-2), 1 is an integer from 0 to 4.

In the formula (1-2), $R^5$ and $R^6$ independently represent a hydrogen atom, or a methyl group.

In the formulas (1-1), and (1-2), * represents an end bonding to $SO_3M$; in the formulas (2-1) and (2-2), ** represents an end bonding to an epoxy group; and in the formulas (3-1) and (3-2), *** represents an end bonding to a Si atom.

A copolymer (i), by including the constitutional units, exhibits hydrophilicity and crosslinking reactivity; and from the copolymer (i) or a composition containing the copolymer (i), a film superior in a balance between hydrophilicity and abrasion resistance, minimal in decrease of hydrophilicity by water, and also superior in weather resistance can be produced.

For $A^1$ in the formula (1), a single bond, methylene, phenylene, a group expressed by the formula (1-1), and a group expressed by the formula (1-2) are preferable, and a group expressed by the formula (1-2) is more preferable.

When $A^2$ in the formula (1) is a group expressed by the formula (1-2), a constitutional unit expressed by the formula (1) becomes a constitutional unit expressed by the following formula (4).

[Chem. Formula 7]

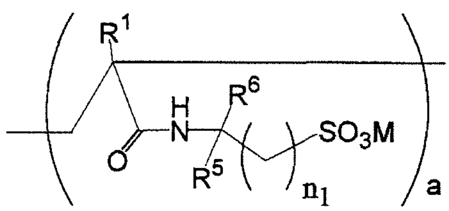
(4)

In the formula (4), a, $R^1$, $R^5$, $R^6$, M, and $n_1$ have the same meanings as in the formula (1).

In the formula (1) and (4), M represents a hydrogen atom, an alkali metal ion, a semi-valent alkaline earth metal ion, an ammonium ion, or an amine ion, however, considering a handling property of a copolymer (i) to be obtained,

$SO_3M$ is preferably not in a form of free acid, and therefore among the above an alkali metal ion, a semi-valent alkaline earth metal ion, an ammonium ion, and an amine ion are preferable.

As the alkali metal ion, a sodium ion, a potassium ion, and a rubidium ion are preferable. As the alkaline earth metal ion, a calcium ion, and a magnesium ion are preferable. As the ammonium ion, a tetrahydroammonium ion ($NH4^+$) is preferable. As the amine ion, a trihydro(methylamine) ion, a trihydro(ethylamine) ion, a trihydro(propylamine) ion, a trihydro(isopropylamine) ion, a trihydro(butylamine) ion, a trihydro(cyclohexylamine) ion, a trihydro(benzylamine) ion, a dihydro(dimethylamine) ion, a hydro(trimethylamine) ion, a trihydro(ethanolamine) ion, a dihydro(diethanolamine) ion, and a hydro(triethanolamine) ion are preferable.

For $A^2$ in the formula (2), a group expressed by the formula (2-1), and a group expressed by the formula (2-2) are preferable, and a group expressed by the formula (2-1) is more preferable.

When $A^2$ in the formula (2) is a group expressed by the formula (2-1), a constitutional unit expressed by the formula (2) becomes a constitutional unit expressed by the following formula (5A).

[Chem. Formula 8]

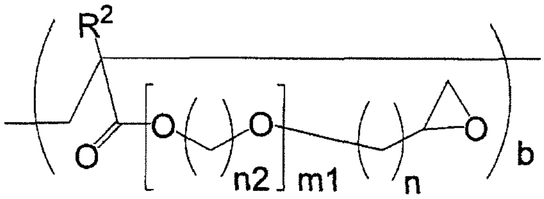

(5A)

In the formula (5A), b, $R^2$, n, $n_2$ and $m_1$ have the same meanings as in the formula (2).

Among constitutional units expressed by the formula (5A), a constitutional unit expressed by the following formula (5), for which $m_1$ is 0, is a preferable mode.

[Chem. Formula 9]

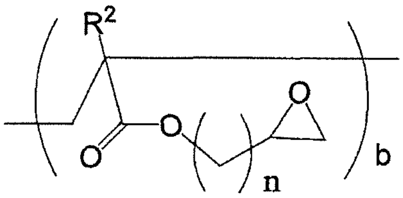

(5)

In the formula (5), b, $R^2$, and n have the same meanings as in the formula (2).

For $A^3$ in the formula (3), a single bond, methylene, phenylene, and a group expressed by the formula (3-1) are preferable, and a group expressed by the formula (3-1) is more preferable.

When $A^3$ in the formula (3) is a group expressed by the formula (3-1), a constitutional unit expressed by the formula (3) becomes a constitutional unit expressed by the following formula (6).

[Chem. Formula 10]

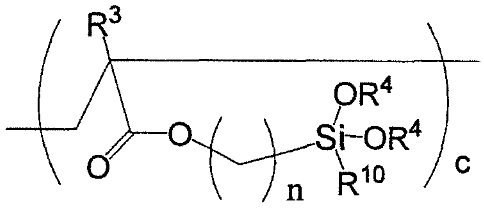

(6)

In the formula (6), c, $R^3$, $R^4$, $R^{10}$, and n have the same meanings as in the formula (3).

With respect to the copolymer (i), each of a, b, and c represents the constitutional ratio of each constitutional unit (molar ratio of each constitutional unit), wherein a + b + c = 1. In this regard, a is in a range of from 0.998 to 0.001, b is in a range of from 0.001 to 0.998, and c is in a range of from 0.001 to 0.998.

For enhancing the hydrophilicity of the copolymer (i), the ratio "a" of a constitutional unit having a sulfonic acid-containing group expressed by the formula (1) should be increased. However, when the ratio of a constitutional unit according to the formula (1) is increased excessively, the ratios of constitutional units according to the formulas (2) and (3) having a group contributing to a crosslinking reaction are decreased relatively, and as the result the crosslink density of a film to be formed from a copolymer (i), or a composition containing a copolymer (i) is decreased, so that the toughness, abrasion resistance, chemical resistance, etc. tend to decrease, which may be sometimes undesirable.

Therefore, with respect to constitutional ratios of the respective constitutional units, it is preferable that a is in a range of from 0.990 to 0.400, b is in a range of from 0.005 to 0.300, and c is in a range of from 0.005 to 0.300, more preferable that a is in a range of from 0.990 to 0.600, b is in a range of from 0.005 to 0.200, and c is in a range of from 0.005 to 0.200, and most preferable that a is in a range of from 0.980 to 0.700, b is in a range of from 0.010 to 0.150, and c is in a range of from 0.010 to 0.150.

There exists the same tendency, even when each constitutional unit is expressed on weight basis, and expressing the weight-% of a constitutional unit according to the formula (1) as a', the weight-% of a constitutional unit according to the formula (2) as b', and the weight-% of a constitutional unit according to the formula (3) as c', wherein the total weight of constitutional units according to Formulas (1), (2) and (3) is set at 100 weight-%, it is preferable that a' is in a range of from 99.0 to 20.0 weight-%, b' is in a range of from 0.5 to 40.0 weight-%, and c' is in a range of from 0.5 to 40.0 weight-%, more preferable that a' is in a range of from 99.0 to 40.0 weight-%, b' is in a range of from 0.5 to 30.0 weight-%, and c' is in a range of from 0.5 to 30.0 weight-%, and most preferable that a' is in a range of from 98.0 to 60.0 weight-%, b' is in a range of from 1.0 to 20.0 weight-%, and c' is in a range of from 1.0 to 20.0 weight-%.

A polymer containing constitutional units expressed by the formulas (1) to (3) can be obtained, for example, by polymerizing a mixture containing a compound having a polymerizable functional group with a carbon-carbon double bond and having a $SO_3M$ group, corresponding to a constitutional unit expressed by the formula (1), a compound having a polymerizable functional group with a carbon-carbon double bond and having an epoxy group, corresponding to a constitutional unit expressed by the formula (2), and a compound having a polymerizable functional group with a carbon-carbon double bond and having an alkoxysilyl group, corresponding to a constitutional unit expressed by the formula (3).

Consequently, the ratios of constitutional units expressed by the formulas (1) to (3), or the weight-% of the constitutional units can be regulated by the percentage of a compound corresponding to a constitutional unit expressed by the formula (1), a compound corresponding to a constitutional unit expressed by the formula (2), and a compound corresponding to a constitutional unit expressed by the formula (3) to be charged for polymerization.

Examples of a compound having a polymerizable functional group with a carbon-carbon double bond and having a $SO_3M$ group, corresponding to a constitutional unit expressed by the formula (1) include a compound expressed by the following general the formula (1').

[Chem. Formula 11]

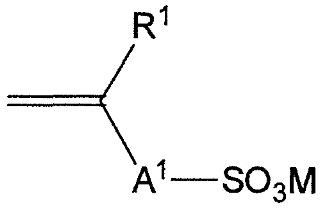

(1')

In the formula (1'), $R^1$, $A^1$, and M have the same meanings as in the formula (1), and a preferable mode thereof is also the same.

Among compounds expressed by the formula (1'), a sulfonic acid-derivative compound having a vinyl group, a sulfonic acid-derivative compound having an allyl group, a sulfonic acid-derivative compound having an isopropenyl group, a sulfonic acid-derivative compound having a styryl group, a sulfonic acid-derivative compound having an acryloyloxy group or a methacryloyloxy group (hereinafter, acryloyloxy and methacryloyloxy may be collectively referred to as " (meth) acryloyloxy", and further, acrylic and methacrylic may be collectively referred to as "(meth)acrylic"), and a sulfonic acid-derivative compound having an acrylamide group or a methacrylamide group (hereinafter, acrylamide and

methacrylamide may be collectively referred to as (meth)acrylamide) are relatively preferable.

As a sulfonic acid-derivative compound having a vinyl group, vinylsulfonic acid, lithium vinylsulfonate, sodium vinylsulfonate, potassium vinylsulfonate, rubidium vinylsulfonate, ammonium vinylsulfonate, etc. are preferable.

As a sulfonic acid-derivative compound having an allyl group, allylsulfonic acid, sodium allylsulfonate, potassium allylsulfonate, etc. are preferable.

As a sulfonic acid-derivative compound having an isopropenyl group, sodium isopropenylsulfonate, potassium isopropenylsulfonate, etc. are preferable.

As a sulfonic acid-derivative compound having a styryl group, 4-styrenesulfonic acid, lithium 4-styrenesulfonate, sodium 4-styrenesulfonate, sodium 3-styrenesulfonate, sodium 2-styrenesulfonate, potassium 4-styrenesulfonate, potassium 3-styrenesulfonate, potassium 2-styrenesulfonate, rubidium 4-styrenesulfonate, calcium 4-styrenesulfonate, magnesium 4-styrenesulfonate, ammonium 4-styrenesulfonate, etc. are preferable.

As a sulfonic acid-derivative compound having a (meth)acryloyloxy group, sodium sulfomethyl (meth)acrylate, 2-sulfoethyl (meth)acrylate, sodium 2-sulfoethyl (meth)acrylate, potassium 2-sulfoethyl (meth)acrylate, 3-sulfopropyl (meth)acrylate, sodium 3-sulfopropyl (meth)acrylate, potassium 3-sulfopropyl (meth)acrylate, rubidium 3-sulfopropyl (meth)acrylate, calcium 3-sulfopropyl (meth)acrylate, magnesium 3-sulfopropyl (meth)acrylate, ammonium 3-sulfopropyl (meth)acrylate, potassium 6-sulfohexyl (meth)acrylate, potassium 10-sulfodecyl (meth)acrylate, potassium 5-sulfo-3-oxapentyl (meth)acrylate, potassium 8-sulfo-3,6-dioxaoctyl (meth)acrylate, etc. are preferable.

As a sulfonic acid-derivative compound having a (meth)acrylamide group, compounds expressed by the following formula (4') are preferable.

[Chem. Formula 12]

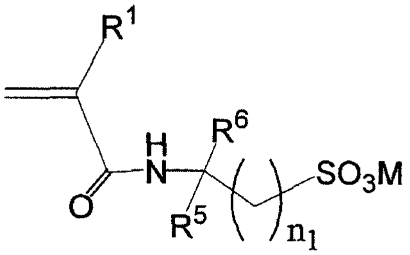

(4')

In the formula (4'), $R^1$, $R^5$, $R^6$, M, and $n_1$ have the same meanings as in the formula (4), and a preferable mode thereof is also the same.

Examples of a compound expressed by the formula (4') include sulfonic acid compounds having a (meth)acryloylamide group, such as 1-(meth)acrylamide-methanesulfonic acid, potassium 1-(meth)acrylamide-methanesulfonate, 2-(meth)acrylamide-ethanesulfonic acid, sodium 2-(meth)acrylamide-ethanesulfonate, 2-(meth)acrylamide-propanesulfonic acid, potassium 2-(meth)acrylamide-propanesulfonate, 2-(meth)acrylamide-2-methylpropanesulfonic acid ((meth)acrylamide-t-butyl sulfonic acid), sodium 2-(meth)acrylamide-2-methylpropanesulfonate, potassium 2-(meth)acrylamide-2-methylpropanesulfonate, rubidium 2-(meth)acrylamide-2-methylpropanesulfonate, calcium 2-(meth)acrylamide-2-methylpropanesulfonate, magnesium 2-(meth)acrylamide-2-methylpropanesulfonate, ammonium 2-(meth)acrylamide-2-methyl-propylsulfonate, and potassium 3-(meth)acrylamide-propanesulfonate.

Among the compounds (1') an acid-derivative compound having a (meth)acrylamide group is preferable; a compound expressed by the formula (4') is more preferable; 2-(meth)acrylamide-2-methyl-propylsulfonic acid ((meth) acrylamide-t-butylsulfonic acid), an alkali metal salt of 2-(meth)acrylamide-2-methyl-propylsulfonic acid ((meth)acrylamide-t-butylsulfonic acid), an alkaline earth metal salt of 2-(meth)acrylamide-2-methyl-propylsulfonic acid ((meth)acrylamide-t-butylsulfonic acid), an ammonium salt of 2-(meth)acrylamide-2-methyl-propylsulfonic acid ((meth)acrylamide-t-butylsulfonic acid), and an amine salt of 2-(meth)acrylamide-2-methyl-propylsulfonic acid ((meth)acrylamide-t-butylsulfonic acid) are further preferable; and an alkali metal salt of 2-(meth)acrylamide-2-methyl-propylsulfonic acid ((meth)acrylamide-*t*-butylsulfonic acid) is most preferable.

A reason, why M in a compound according to the general formula (1') is preferably an alkali metal ion, a semivalent alkaline earth metal ion, an ammonium ion, or an amine ion other than a hydrogen atom, will be described below.

When sulfonic acid is not neutralized (M is a hydrogen atom), a sulfonic acid group may react with an epoxy group contained in a compound having an epoxy group described below (typically a compound expressed by the following general formula (2')) to cause gelation during a polymerization reaction. A schematic reaction formula of the reaction between an epoxy group and a sulfonic acid group will be described below.

[Chem. Formula 13]

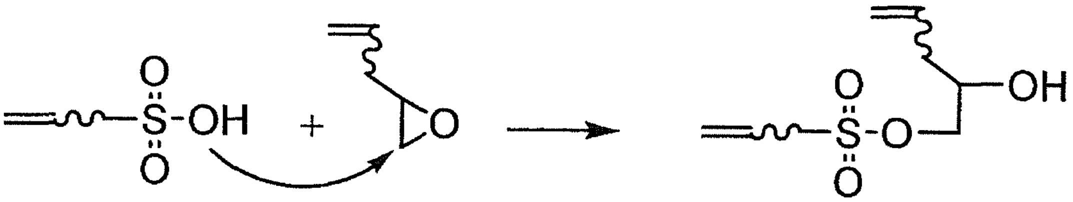

For suppressing the reaction and obtaining a high purity copolymer (i), it is preferable that a sulfonic acid group is neutralized with a counter cation so as to suppress a reaction between a sulfonic acid group and an epoxy group (similarly, a schematic reaction formula will be described below.).

[Chem. Formula 14]

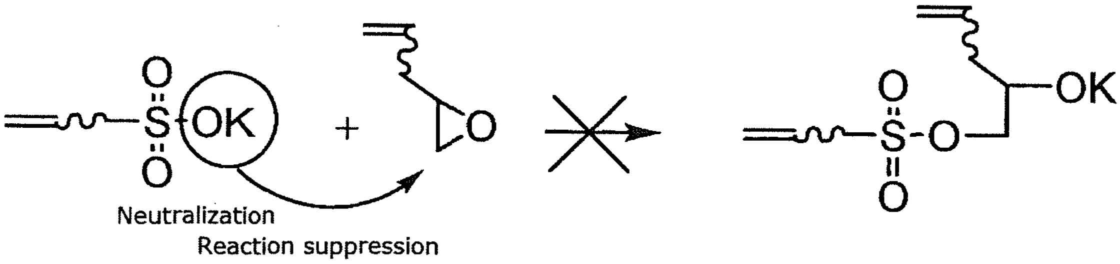


Further, among counter cations, such as an alkali metal ion, an alkaline earth metal ion, an ammonium ion, and an amine ion, an alkali metal ion tends to be preferable, which has tendency for higher reaction inhibitory power and stability. Among alkali metals, sodium and potassium are preferable, and potassium is more preferable. When the counter cation is potassium, the thermal stability is sometimes higher than the case with sodium, although the reason behind the above is not sufficiently clear. For reference, comparative data (DSC chart) in terms of the thermal stability of typical compounds having a polymerizable functional group with a carbon-carbon double bond, and having a sulfonic acid-containing group are shown in Figure 1.

Examples of a compound having a polymerizable a functional group with a carbon-carbon double bond and having an epoxy group corresponding to a constitutional unit according to the formula (2) include a compound expressed by the following general formula (2').

[Chem. Formula 15]

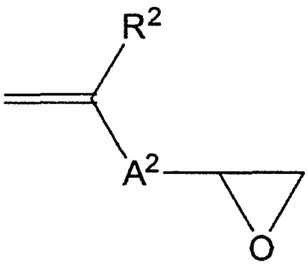

(2')

In the formula (2'), $R^2$, and $A^2$ have the same meanings as in the formula (2), and a preferable mode thereof is also the same.

Among compounds expressed by the formula (2'), an epoxy compound having a vinyl group, an epoxy compound having a vinyl ether group, an epoxy compound having an allyl ether group, an epoxy compound having an isopropenyl ether group, an epoxy compound having a styryl group, and an epoxy compound having a (meth)acryloyloxy group are relatively preferable.

As an epoxy compound having a vinyl group, vinylcyclohexene monoxide, butadiene monoxide, pentadiene monoxide, hexadiene monoxide etc. are preferable.

As an epoxy compound having a vinyl ether group, vinyl glycidyl ether, butanediol-divinyl ether monoxide, cyclohexane dimethanol-divinyl ether monoxide, 4-glycidyloxymethyl-l-vinyloxymethyl-cyclohexane, diethylene glycol-divinyl ether monoxide, tripropylene glycol-divinyl ether monoxide, 4-vinyloxy-l-glycidyloxy-butane, etc. are preferable.

As an epoxy compound having an allyl ether group, allyl glycidyl ether, allyl epoxy ether, butanediol diallyl ether monoxide, cyclohexane dimethanol diallyl ether monoxide, 4-glycidyloxymethyl-1-allyloxymethylcyclohexane, diethylene glycol diallyl ether monoxide, tripropylene glycol diallyl ether monoxide, 4-allyloxy-1-glycidyloxy-butane, *etc.* are preferable.

As an epoxy compound having an isopropenyl ether group, isopropenyl glycidyl ether, isopropenyl epoxy ether, butanediol diisopropenyl ether monooxide, cyclohexanedimethanol diisopropenyl ether monooxide, 4-glycidyloxy methyl-1-isopropenyloxymethyl-cyclohexane, diethylene glycol diisopropenyl ether monooxide, tripropylene glycol diisopropenyl ether monooxide, 4-isopropenyloxy-1-glycidyloxy-butane, etc. are preferable.

As an epoxy compound having a styryl group, divinylbenzene monoxide, 4-(glycidyloxy)styrene, 3-(glycidyloxy)styrene, 2-(glycidyloxy)styrene, 4-(epoxyoxy)styrene, styryl carboxylic acid epoxy ester, styryl carboxylic acid glycidyl ester, etc. are preferable.

As an epoxy compound having a (meth) acryloyloxy group, compounds expressed by the following formula (5') is preferable.

[Chem. Formula 16]

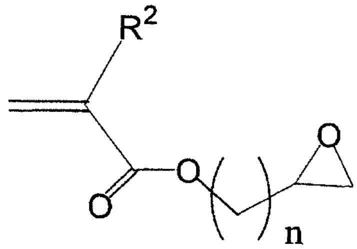

(5')

In the formula (5'), $R^2$, and n have the same meanings as in the formula (5).

Examples of compounds expressed by the formula (5') include glycidyl (meth)acrylate, epoxy (meth)acrylate, 2-(glycidyloxy)ethyl (meth)acrylate, 3-(glycidyloxy)propyl (meth)acrylate, 4-(glycidyloxy)butyl (meth)acrylate, 6-(glycidyloxy)hexyl (meth)acrylate, 5-(glycidyloxy)-3-oxapentyl (meth)acrylate, 3-(glycidyloxy)-2-hydroxypropyl (meth)acrylate, 2,3-bis(glycidyloxy)propyl (meth)acrylate, trimethylolpropane-diglycidyl ether (meth)acrylate, [4-glycidyloxyphenyl]-[(4-(meth)acryloyloxy-3-hydroxy-1-oxabu tyl)phenyl]-2,2-propane, and 7-glycidyloxy-6,6-dimethyl-2-hydroxy-4-oxaheptyl (meth)acrylate.

Among compounds expressed by the formula (2'), an epoxy compound having a (meth) acryloyloxy group, an epoxy compound having an allyl ether group, and an epoxy compound having a styryl group are preferable, and glycidyl (meth)acrylate, 4-glycidyloxybutyl (meth)acrylate, allyl glycidyl ether, and 4-glycidyloxystyrene are more preferable.

Examples of a compound having a polymerizable a functional group with a carbon-carbon double bond and having an alkoxysilyl group, corresponding to a constitutional unit expressed by the formula (3) include a compound expressed by the following general formula (3').

[Chem. Formula 17]

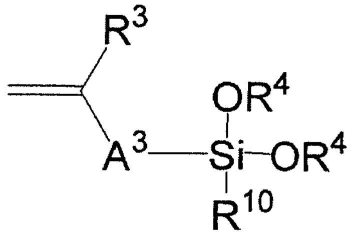

(3')

In the formula (3'), $R^3$, $R^4$, $R^{10}$, and $A^3$ have the same meanings as in the formula (3), and a preferable mode thereof is also the same.

Among compounds expressed by the formula (3'), an alkoxysilyl compound having a vinyl group, an alkoxysilyl compound having a vinyl ether group, an alkoxysilyl compound having an allyl group, an alkoxysilyl compound having an isopropenyl group, an alkoxysilyl compound having an allyl ether group, an alkoxysilyl compound having an isopropenyl ether, an alkoxysilyl compound having a styryl group, and an alkoxysilyl compound having a (meth)acryloyloxy group are relatively preferable.

As an alkoxysilyl compound having a vinyl group, vinyltrimethoxysilane, vinyltriethoxysilane, vinyltripropoxysilane, vinyltriisopropoxysilane, vinyltributoxysilane, vinylmethyldimethoxysilane, vinylphenyldimethoxysilane, vinylethyldiethoxysilane, vinyldiethylmonoethoxysilane, vinyldimethylmonobutoxysilane, etc. are preferable.

As an alkoxysilyl compound having a vinyl ether group, (vinyloxy)ethyl trimethoxysilane, (vinyloxy)propyl trimethoxysilane, etc. are preferable.

As an alkoxysilyl compound having an allyl group, allyltrimethoxysilane, allyltriethoxysilane, allyltripropoxysilane, allyltriisopropoxysilane, allyltributoxysilane, isopropenyltriethoxysilane, allylmethyldimethoxysilane, allylphenyldimethoxysilane, allylethyldiethoxysilane, allyldiethylmonoethoxysilane, allyldimethylmonobutoxysilane, etc. are preferable.

As an alkoxysilyl compound having an allyl ether group, (allyloxy)ethyl trimethoxysilane, (allyloxy)propyl trimethoxysilane, (allyloxy)propyl triethoxysilane, etc. are preferable.

As an alkoxysilyl compound having an isopropenyl ether, (isopropenyloxy)propyltriethoxysilane, etc. are preferable.

As an alkoxysilyl compound having a styryl group, styryltrimethoxysilane, styryltriethoxysilane, styryltributoxysilane, styrylmethyldimethoxysilane, etc. are preferable.

As an alkoxysilyl compound having a (meth) acryloyloxy group, compounds expressed by the following formula (6') are preferable.

[Chem. Formula 18]

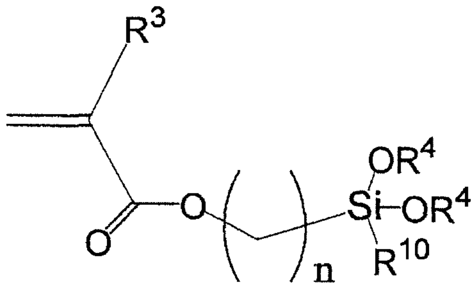

(6')

In the formula (6'), $R^3$, $R^4$, $R^{10}$, and n have the same meanings as in the formula (6).

Examples of compounds expressed by the formula (6') include (meth)acryloyloxyethyltrimethoxysilane, (meth)acryloyloxypropyltrimethoxysilane, (meth)acryloyloxybutyltrimethoxysilane, (meth)acryloyloxyhexyltrimethoxysilane, (meth)acryloyloxydecyltrimethoxysilane, (meth)acryloyloxypropyltriethoxysilane, (meth)acryloyloxypropyltripropoxysilane, (meth)acryloyloxypropyltributoxysilane, (meth)acryloyloxypropylmethyldimethoxysilane, and (meth)acryloyloxypropylethyldiethoxysilane.

Among compounds expressed by the formula (3'), an alkoxysilyl compound having a vinyl group, an alkoxysilyl compound having a styryl group, and an alkoxysilyl compound having a (meth)acryloyloxy group are preferable, and vinyltrimethoxysilane, vinyltriethoxysilane, styryltrimethoxysilane, styryltriethoxysilane, (meth)acryloyloxypropyltrimethoxysilane, and (meth)acryloyloxypropyltriethoxysilane are more preferable.

The copolymer (i) may include a constitutional unit other than constitutional units expressed by the general formulas (1) to (3).

Such other constitutional unit can be obtained, for example, by adding a compound corresponding to such other constitutional unit to a monomer mixture containing compounds expressed by the (1') to (3'), and polymerizing the same.

Examples of a compound corresponding to such other constitutional unit include acrylic acid, methacrylic acid, methyl (meth)acrylate, butyl (meth)acrylate, isobornyl (meth)acrylate, tetrahydrofurfuryl (meth)acrylate, phenyl (meth)acrylate, tribromophenyl (meth)acrylate, hydroxyethyl (meth)acrylate, ethyl phosphate (meth)acrylate, tetramethylpiperidyl (meth)acrylate, perfluorooctylethyl (meth)acrylate, thioglycidyl (meth)acrylate, styrene, acrylonitrile, divinylbenzene, and allyl (meth)acrylate. When divinyl benzene or allyl (meth) acrylate is used, the same should be desirably used in a small amount, such that gelation of a copolymer (i) should not occur.

The ratio (molar ratio) of the total amount of constitutional units expressed by the formula (1), (2), and (3) (a + b + c) to such other constitutional unit (d), namely (a + b + c) / d, is ordinarily in a range of from 100/ 0 to 30/ 70, more preferably from 100/ 0 to 50/ 50, and further preferably from 100/ 0 to 60/ 40. Further, when such other constitutional unit (d) is used, the molar ratio (a + b + c)/ d is ordinarily in a range of from 99.9/ 0.1 to 30/ 70, more preferably in a range of from 99/ 1 to 50/ 50, and further preferably in a range of from 95/ 5 to 60/ 40. In this regard, (a + b + c)/ d is in some cases preferably 70/ 30 or higher, and desirably 80/ 20 or higher. Further, the ratio (mass ratio) of the total amount of constitutional units expressed by the formula (1), (2), and (3) (a + b + c) to such other constitutional unit (d), namely (Wa + Wb + Wc) / Wd, is in some cases preferably from 100/ 0 to 30/ 70, and in such cases more preferably from 100/ 0 to 50/ 50, and further preferably from 100/ 0 to 60/ 40.

A copolymer (i) to be used according to the present invention is obtained typically by solution polymerization of a mixture containing a compound expressed by the formula (1'), a compound expressed by the formula (2'), a compound expressed by the formula (3'), and a compound corresponding to another constitutional unit to be contained according to need, in the presence of a polymerization initiator. Although there is no particular restriction on the bonding form of the copolymer (i), a copolymer (i) produced by radical polymerization using a radical polymerization initiator is preferable. In that case, the bonding form of a copolymer (i) is presumably a bonding form of a random copolymer.

The number of recurring structural units and the molecular weight of a copolymer (i) to be used according to the present invention are regulated mainly by the solvent type, the compound (monomer) concentration, the polymerization initiator amount, the reaction temperature, etc.

The number of recurring structural units of the copolymer (i) is ordinarily in a range of from 1 to 10,000, preferably in a range of from 3 to 3,000, and more preferably in a range of from 30 to 1,500.

The weight-average molecular weight (Mw) of the copolymer (i) by GPC is ordinarily in a range of from 500 to 3,000,000, and from a viewpoint of durability and solubility preferably from 1000 to 1,000,000, and further preferably from 10,000 to 500,000.

The Mw/Mn of a copolymer (i) to be used according to the present invention is ordinarily from 1 to 10, preferably from 1 to 6, and more preferably 1 to 4. When the Mw/Mn is in the range, a copolymer (i), or a composition containing a copolymer (i) is superior in terms of solubility or dispersibility, and a film obtained therefrom tends to be superior in terms of transparency, smoothness, or the like.

As the polymerization initiator, a radical polymerization initiator is preferable.

Examples of a radical polymerization initiator include:

nitriles, such as azobisisobutyronitrile;
ketone peroxides, such as methyl isobutyl ketone peroxide, and cyclohexanone peroxide;
diacyl peroxides, such as isobutyryl peroxide, o-chlorobenzoyl peroxide, and benzoyl peroxide;
dialkyl peroxides, such as tris(t-butylperoxy)triazine, and t-butyl cumyl peroxide;
peroxyketals, such as

2,2-bis(4,4-di-t-butylperoxycyclohexyl)propane, and
2,2-di(t-butylperoxy)butane;

alkyl peresters, such as α-cumyl peroxyneodecanoate, t-butyl peroxypivalate, 2,4,4-trimethylpentylperoxy-2-ethyl hexanoate, t-butylperoxy-2-ethyl hexanoate, and t-butylperoxy-3,5,5-trimethyl hexanoate; and
percarbonates, such as

di(3-methoxybutylperoxy)dicarbonate,
bis(4-t-butylcyclohexyl)peroxydicarbonate, t-butylperoxy isopropyl carbonate, and diethylene glycol bis(*t*-butylperoxycarbonate).

The addition amount of the polymerization initiator is with respect to the total mass of a compound expressed by the formula (1'), a compound expressed by the formula (2'), a compound expressed by the formula (3'), and a compound corresponding to another constitutional unit to be added according to need, approx. in a range of from 0.01 to 10 wt%, preferably in a range of from 0.1 to 5 wt%, and further preferably in a range of from 0.2 to 3 wt%.

There is no particular restriction on a polymerization solvent, insofar as the same does not cause a trouble such as inhibition of a polymerization reaction. A high polarity solvent, which has high dissolving power for a compound expressed by the formula (1'), a compound expressed by the formula (2'), a compound expressed by the formula (3'), and a compound corresponding to another constitutional unit to be added according to need, tends to exhibit favorable

performance.

Examples of such a polymerization solvent include alcohols, such as methanol, ethanol, isopropanol (IPA), 1-propanol, 1-butanol, cyclohexanol, benzyl alcohol, ethylene glycol, propylene glycol, and propylene glycol monomethyl ether; aprotic polar solvents, such as acetonitrile, sulfolane, dimethyl sulfoxide, *N,N*-dimethylformamide (DMF), *N,N*-dimethylacetamide (DMAc), and *N,N*-dimethylimidazolidinone (DMI); water; and a mixture thereof.

The polymerization temperature is set mainly according to a 10 hour half-life temperature of a radical polymerization initiator, which is approx. in a range of from room temperature to 200°C, preferably in a range of from 30 to 120°C, and more preferably in a range of from 40 to 100°C.

Desirable properties and a higher order structure of a copolymer (i) to be used according to the present invention will be described below.

Since the copolymer (i) is occasionally used as a film and a laminate in an application, where high transparency is required, an amorphous polymer enabling high transparency (corresponding to an amorphous polymer or a cryptocrystalline polymer, in which the crystallinity is low or the Tm (melting point) is not measurable, or the heat of fusion is small.) is preferable.

Such a highly transparent copolymer (i) can be produced, for example, by regulating the ratios of the respective constitutional units according to the formula (1) to (3) within desired ranges.

Meanwhile, when a higher order structure such as a core-shell structure is formed, such a core-shell structure generally tends to form large particles in a micrometer size, and even when small particles in a nano size are formed, they tend to form secondary particles by coagulation or otherwise to end up with large aggregates in a micrometer size. The core-shell structure, for example, in a micrometer size has a particle size beyond the 1/ 4 wavelength of light (approx. 100 nm), by which light is scattered to decrease transparency, and therefore is not applicable to a use requiring high transparency.

In other words, a copolymer (i) to be used according to the present invention should preferably not form a higher order structure such as core-shell. Further, such a core-shell structure formed by 2 kinds of polymers, polymer source materials, or the like generally tends to exhibit 2 points of Tg (glass transition temperatures).

Such a copolymer (i), which does not form a higher order structure, can be produced, for example, by solution polymerization, in which compounds (monomers) corresponding to the respective constitutional units are dissolved in a solvent.

The thus produced copolymer (i) is ordinarily a polymer containing a large number of sulfonic acid-containing groups, and is in many cases only soluble in water. Therefore, in such a case, a copolymer precipitates out of a polymerization solution in step with advancement of a polymerization reaction, unless a large amount of water is used as a polymerization solvent.

Therefore, an objective copolymer can be obtained by simple filtration and drying after the polymerization reaction.

Meanwhile, in the case of a copolymer with a small number of sulfonic acid-containing groups, which hardly precipitates out of a polymerization solution, the solution is poured into a poor solvent for precipitation, or after removal of the solvent by distillation in an evaporator, etc., the concentrate is stirred in a poor solvent, and then the polymer is filtered and dried to obtain an objective copolymer.

Since a copolymer (i) according to the present invention (the following general formula (10) shows a schematic diagram of a typical copolymer) has an epoxy group and an alkoxysilyl group having reactivity in a molecule, the copolymer (i) alone can be cured to form a film, by a reaction between the groups (for example, crosslinking reactions such as condensation reactions according to the following general formulas (11) to (14)). The reactions of an epoxy group and an alkoxysilyl group progress ordinarily by heating. Examples of a curing method other than heating include a curing method by irradiation with a microwave, which is a kind of radiation.

Reactions to occur with respect to the respective groups will be described below in detail.

[Chem. Formula 19]

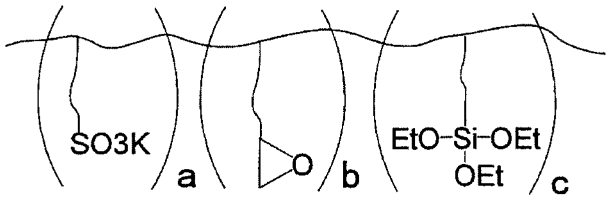

(10)

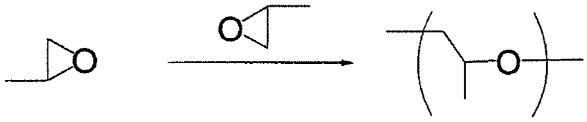

(11)

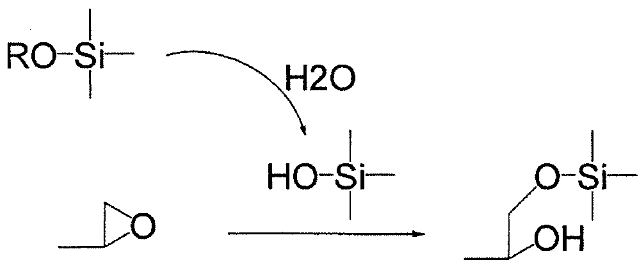


(12)

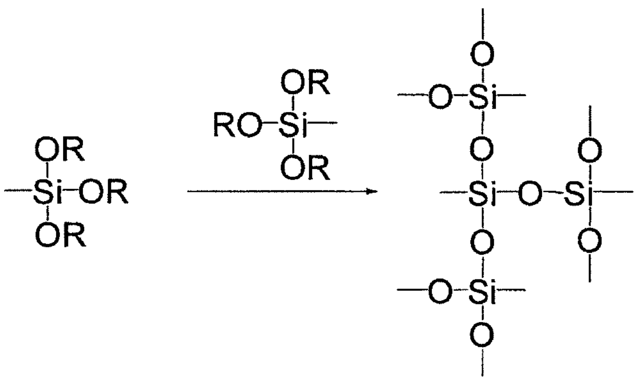

(13)

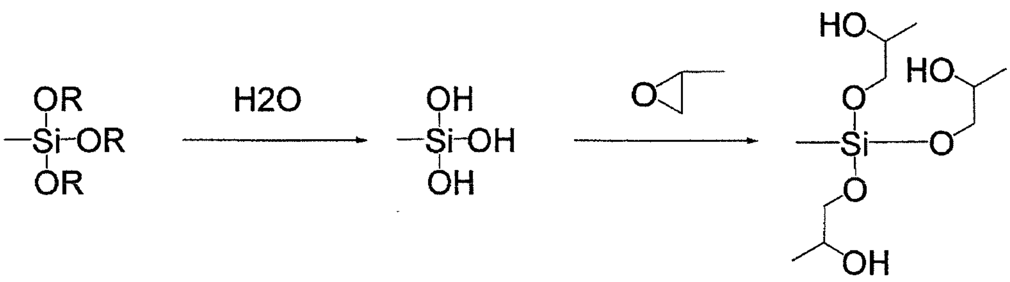


(14)

<Reaction between epoxy groups>

A reaction between epoxy groups is represented by the general formula (11), which is preferably caused by heating. The heating temperature is approximately in a range of from 30 to 250°C, preferably in a range of from 30 to 200°C, and more preferably in a range of from 30 to 150 ° C. The reaction between epoxy groups tends to be accelerated in the presence of a catalyst represented by a cation such as an acid, or an anion such as a base.

<Reaction between epoxy group and alkoxysilyl group>

A reaction between an epoxy group and an alkoxysilyl group is shown in the general formula (12) and the general formula (14).

Generally, an epoxy group cannot easily react directly with an alkoxysilyl group, and ordinarily a reaction takes place between a silanol group generated by hydrolysis of an alkoxysilyl group and an epoxy group. A reaction between an epoxy group and an alkoxysilyl group is preferably also caused by heating. The heating temperature is approximately in a range of from 30 to 300°C, preferably in a range of from 50 to 250°C, and more preferably in a range of from 100 to 200°C.

A hydrolysis reaction of an alkoxysilyl group, and a reaction between an epoxy group and a silanol group tend to be accelerated in the presence of a catalyst represented by a cation such as an acid, or an anion such as a base. Even when a catalyst is used as above, heating is preferably conducted for a reaction. The heating temperature is approximately in a range of from 30 to 250°C, preferably in a range of from 30 to 200°C, and more preferably in a range of from 30 to 180°C.

<Reaction between alkoxysilyl groups>

A reaction between alkoxysilyl groups is shown in the general formula (13), which is preferably caused by heating. The heating temperature is approximately in a range of from 30 to 250°C, preferably in a range of from 30 to 200°C, and more preferably in a range of from 30 to 180°C.

An alkoxysilyl group is relatively easily hydrolyzed by moisture to be changed to a silanol group. The silanol group is highly reactive, and a reaction between silanol groups occurs easier than a reaction between alkoxysilyl groups. Therefore, a reaction between alkoxysilyl groups occurs ordinarily as a reaction between silanol groups generated by hydrolysis with moisture, and a reaction between a silanol group and an alkoxysilyl group. The reaction between silanol groups, and the reaction between a silanol group and an alkoxysilyl group are preferably caused by heating. The heating temperature is approximately in a range of from 30 to 200°C, preferably in a range of from 30 to 180°C, and more preferably in a range of from 30 to 150°C.

A reaction between alkoxysilyl groups, a hydrolysis reaction of an alkoxysilyl group, a reaction between a silanol group and an alkoxysilyl group, and a reaction between silanol groups tend to be accelerated in the presence of a catalyst represented by a cation such as an acid, an anion such as a base, and a metallic compound, such as an alkoxy titanium, and tin oxide.

A film according to the present invention can be produced from a copolymer (i) as described above, but may be also produced from a composition of a copolymer (i) and a reactive compound other than a copolymer (i).

The weight ratio of a copolymer (i) to a reactive compound other than a copolymer (i) in a composition is approximately in a range of from 99.9/ 0.1 to 0.1/ 99.9, preferably in a range of from 99.1/ 0.1 to 0.1/ 99.9, more preferably in a range of from 99/ 1 to 1/ 99, and further preferably in a range of from 90/ 10 to 10/ 90.

Examples of a reactive compound other than a copolymer (i) include a silane compound having a hydrolyzable group other than a copolymer (i), a compound having an epoxy group other than a copolymer (i), a compound having a hydroxy group, a compound having a mercapto group, a compound having a carboxy group, a compound having an amino group, and a reactive compound such as an acid anhydride. The silane compound having a hydrolyzable group means a silane compound, in which 1 to 4 groups (an alkoxy group or a halogen atom) convertible by hydrolysis to a hydroxy group (a silanol group) are bound to a Si atom. The acid anhydride means a compound having 1 or more carboxylic anhydride structures.

Some examples of a reaction, which may occur between the reactive compound and an epoxy group contained in a copolymer (i), are shown in the following general formula (20). Further, some examples of a reaction, which may occur between the reactive compound and an alkoxysilyl group contained in a copolymer (i), are shown in the following general formula (21).

[Chem. Formula 20]

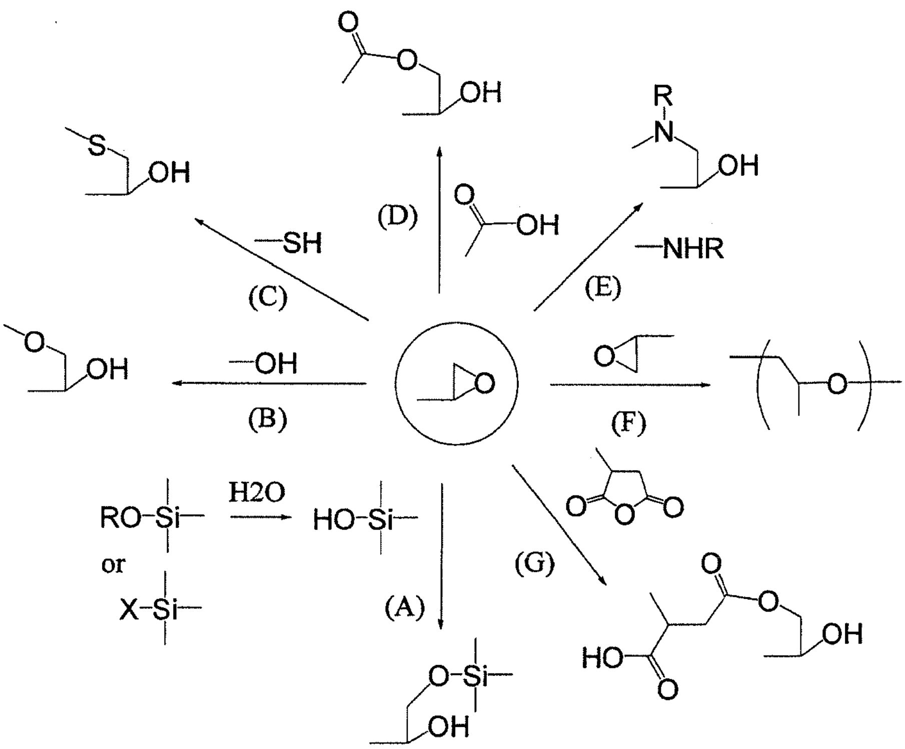


(2 0)

[Chem. Formula 21]

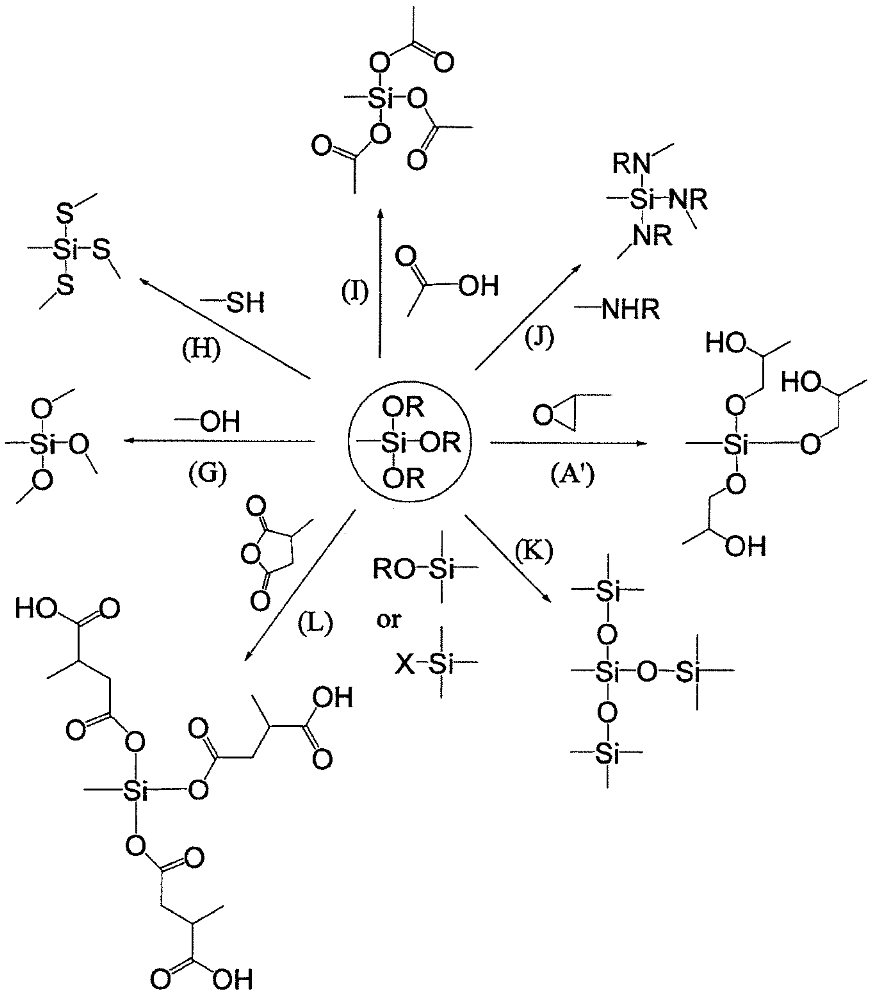


(21)

When a compound having an epoxy group other than a copolymer (i) is used as the reactive compound, with respect to the reaction of the formula (20) (a reaction with an epoxy group of a copolymer (i)), the reaction of the reaction route (F) occurs mainly, and with respect to the reaction of the formula (21) (a reaction with an alkoxysilyl group of a copolymer (i)), the reaction of the reaction route (A') occurs mainly, so that curing occurs.

As a compound having an epoxy group other than a copolymer (i), a multivalent epoxy compound having 2 or more epoxy groups in a molecule is preferable. Examples of a multivalent epoxy compound include bisphenol A bis (glycidyl ether), bisphenol F bis(glycidyl ether), hydrogenated bisphenol A bis(glycidyl ether), *N,N',N''*-tris(glycidyl) isocyanurate, isocyanurate-type polyglycidyl ether (TEPIC-PAS B22, TEPIC-PAS B26, Nissan Chemical Ind., Ltd.), phenol novolac polyglycidyl ether (N-730, DIC Corporation; 152 Mitsubishi Chemical Corporation), 1.1.2.2.-tetrakis(4-glycidyloxyphenyl)ethane, *N,N,N',N'*-tetraglycidyl diaminodiphenylmethane, trimethylolpropane triglycidyl ether, neopentyl glycol diglycidyl ether, butanediol diglycidyl ether, poly(ethylene glycol) diglycidyl ether (YDE205, Mitsubishi Chemical Corporation), diglycidyl cyclohexanedicarboxylate, diglycidyl phthalate, 3,4-epoxycyclohexylmethyl 3',4'-epoxycyclohexane carboxylate, and dicyclodecane poly(glycidyl ether) (EPICLON HP-7200L, EPICLON HP-7200H, DIC Corporation).

When a compound having a hydroxy group is used as the reactive compound, with respect to the reaction of the formula (20) (a reaction with an epoxy group of a copolymer (i)), the reaction of the reaction route (B) occurs mainly, and with respect to the reaction of the formula (21) (a reaction with an alkoxysilyl group of a copolymer (i)), the reaction of the reaction route (G) occurs mainly, so that curing occurs.

As the compound having a hydroxy group, a multivalent hydroxy compound having 2 or more hydroxy groups is preferable. Examples of a multivalent hydroxy compound include ethylene glycol, diethylene glycol, 1,2-propylene glycol, glycerine, trimethylolpropane, pentaerythritol, dipentaerythritol, xylylenediol , resorcinol, bisphenol A, a phenol formaldehyde resin (Mitsui Chemicals, Inc.), a condensation reaction product of melamine and formaldehyde, a condensation reaction product of melamine, formaldehyde, and a lower alcohol, a condensation reaction product of urea and formaldehyde, and a condensation reaction product of urea, formaldehyde, and a lower alcohol. As a compound having a hydroxy group, in addition to the above, a condensation reaction product of melamine and a lower alcohol, a

condensation reaction product of urea and a lower alcohol, etc. can be used. Since the above are easily hydrolyzed with moisture to generate a hydroxy group, they can be used as a compound having a hydroxy group according to the present invention.

When a compound having a mercapto group is used as the reactive compound, with respect to the reaction of the formula (20) (a reaction with an epoxy group of a copolymer (i)), the reaction of the reaction route (C) occurs mainly, and with respect to the reaction of the formula (21) (a reaction with an alkoxysilyl group of a copolymer (i)), the reaction of the reaction route (H) occurs mainly, so that curing occurs.

As a compound having a mercapto group, a multivalent mercapto compound having 2 or more mercapto groups is preferable. Examples of a multivalent mercapto compound include glycerine dithioglycolate, trimethylolpropane tris(thioglycolate), pentaerythritol tetrakis(thioglycolate), dipentaerythritol hexakis(thioglycolate), glycerine di(3-mercaptopropionate), trimethylolpropane tris(3-mercaptopropionate), pentaerythritol tetrakis(3-mercaptopropionate), dipentaerythritol hexakis(3-mercaptopropionate), ethanedithiol, bis(2-mercaptoethyl)sulfide, xylylenedithiol, 1,4-dithiane-2,5-dithiol, 1,4-dithiane-2,5-bis(mercaptomethyl), 4-mercaptomethyl-3,6-dithiaoctane-1,8-dithiol, 4,8-bis(mercaptomethyl)-3,6,9-trithiaundecane-1,11-dithiol, and 1,1,3,3-tetrakis(mercaptomethylthio)propane

When a compound having a carboxy group is used as the reactive compound, with respect to the reaction of the formula (20) (a reaction with an epoxy group of a copolymer (i)), the reaction of the reaction route (D) occurs mainly, and with respect to the reaction of the formula (21) (a reaction with an alkoxysilyl group of a copolymer (i)), the reaction of the reaction route (I) occurs mainly, so that curing occurs.

As the compound having a carboxy group, a multivalent carboxy compound having 2 or more carboxy groups is preferable. Examples of a multivalent carboxy compound include maleic acid, malonic acid, succinic acid, itaconic acid, citraconic acid, phthalic acid, isophthalic acid, 5-hydroxy-isophthalic acid, terephthalic acid, oxydiphthalic acid, naphthalenedicarboxylic acid, trimellitic acid, pyromellitic acid, and L-aspartic acid.

When a compound having an amino group is used as the reactive compound, with respect to the reaction of the formula (20) (a reaction with an epoxy group of a copolymer (i)), the reaction of the reaction route (E) occurs mainly, and with respect to the reaction of the formula (21) (a reaction with an alkoxysilyl group of a copolymer (j)), the reaction of the reaction route (I) occurs mainly, so that curing occurs.

As the compound having an amino group, a multivalent amino compound having 2 or more amino groups is preferable. Examples of a multivalent amino compound include phenylenediamine, toluylenediamine, bis(aminodiphenyl)methane, 2.2-bis(aminodiphenyl)propane, naphthalenediamine, xylylenediamine, ethylendiamine, hexamethylenediamine, *N,N'*-bis(2-aminoethyl)amine, bis(aminomethyl)norbornane, isophoronediamine, bis(aminodicyclohexyl)methane, L-glutamine, L-arginine, L-alanine-L-glutamine, L-cystine, and L-citrulline.

When an acid anhydride is used as the reactive compound, with respect to the reaction of the formula (20) (a reaction with an epoxy group of a copolymer (i)), the reaction of the reaction route (G) occurs mainly, and with respect to the reaction of the formula (21) (a reaction with an alkoxysilyl group of a copolymer (j)), the reaction of the reaction route (L) occurs mainly, so that curing occurs.

Examples of the acid anhydride include maleic anhydride, succinic anhydride, itaconic anhydride, citraconic anhydride, phthalic anhydride, oxydiphthalic anhydride, naphthalenedicarboxylic anhydride, trimellitic anhydride, and pyromellitic anhydride.

When a silane compound having a hydrolyzable group other than a copolymer (i) is used as the reactive compound, with respect to the reaction of the formula (20) (a reaction with an epoxy group of a copolymer (i)), the reaction of the reaction route (A) occurs mainly, and with respect to the reaction of the formula (21) (a reaction with an alkoxysilyl group of a copolymer (i)), the reaction of the reaction route (K) occurs mainly, so that curing occurs.

Among the reactive compounds a silane compound having a hydrolyzable group is preferable, and a silane compound (ii) expressed by the following general formula (7) is more preferable.

When a silane compound (ii) is used as a reactive compound, a mode in which a combination of a silane compound (ii) and at least one compound selected out of a silane compound having a hydrolyzable group other than a silane compound (ii), a compound having an epoxy group other than a copolymer (i), a compound having a hydroxy group, a compound having a mercapto group, a compound having a carboxy group, a compound having an amino group, and an acid anhydride, is also preferable.

By inclusion of such a silane compound (ii) with a specific structure in addition to a copolymer (i), the crosslink density of a cured product (film) formed from the composition is enhanced and a tougher film, can be easily produced.

[Chem. Formula 22]

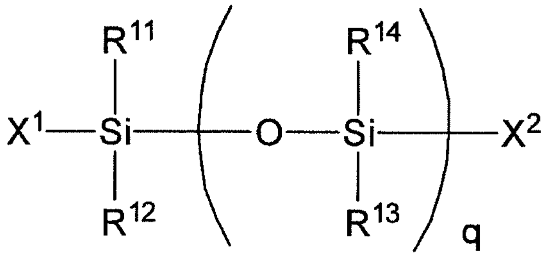

(7)

In the formula (7), q is an integer from 0 to 10,000, preferably an integer from 0 to 100, and more preferably an integer from 0 to 10.

In the formula (7), $R^{11}$ to $R^{14}$ independently represent a hydroxy group, a hydrogen atom, a C1 to C4 alkyl group, a vinyl group, an allyl group, a phenyl group, a 2-phenylethyl group, a C1 to C4 alkoxy group, or a halogen atom.

In the formula (7), $X^1$ and $X^2$ independently represent a hydroxy group, a C1 to C4 alkoxy group, or a halogen atom.

When any of $X^1$, $X^2$, and $R^{11}$ to $R^{14}$ is a hydroxy group, the hydroxy group is a silanol group bonding to a Si atom, and therefore highly reactive such that a reaction involving a silanol group, such as a reaction forming a siloxane bond (Si-O-Si) by dehydration condensation between silanol groups contained respectively in a silane compound (ii) and a copolymer (i), or a reaction between a silanol group contained in a silane compound (ii) and an epoxy group in a copolymer (i), can occur sometimes easily even at room temperature. Further, when any of $X^1$, $X^2$, and $R^{11}$ to $R^{14}$ is an alkoxy group or a halogen atom, the same has similar reactivity as a hydroxy group, and, for example, an alkoxy group or a halogen atom is hydrolyzed to form a hydroxy group (silanol group), and then a reaction involving a silanol group similar to that described above can take place. Further, although an alkoxy group is less reactive than a hydroxy group, a condensation reaction can take place directly, if heated to a relatively high temperature (approx. 100°C or higher), so that a reaction to form a siloxane bond (Si-O-Si), etc. can occur. Consequently, when $X^1$, $X^2$, and $R^{11}$ to $R^{14}$ bonded to a Si atom is a hydroxy group, an alkoxy group, or a halogen atom, a crosslinking reaction between a silane compound (ii) and a copolymer (i), a crosslinking reaction between two silane compounds (ii), or the like, can occur, so that a composition containing a copolymer (i) and a silane compound (ii) can be cured.

When $R^{11}$ to $R^{14}$ are a hydrogen atom, a C1 to C4 alkyl group, a vinyl group, an allyl group, a phenyl group, or a 2-phenylethyl group, they do not participate in a crosslinking reaction by a siloxane bond, etc., and therefore although they can contribute to prevention of cracking of an obtained film, impartment of toughness, etc., decrease in the hardness of the film may also occur.

By regulating the kind and ratio of groups at $X^1$, $X^2$, and $R^{11}$ to $R^{14}$, the physical property, for example hardness, of an obtained film can be regulated.

From a viewpoint of regulation of the hardness of a film, the total number of a hydrogen atom, a C1 to C4 alkyl group, a vinyl group, an allyl group, a phenyl group, and a 2-phenylethyl group, (groups unable to participate in a reaction involving a silanol group) is preferably 2 or less, more preferably 1 or less, with respect to a Si atom contained in a silane compound (ii). Further, the total number of a hydroxy group, a C1 to C4 alkoxy group, and a halogen atom (groups or an atom able to participate in a reaction involving a silanol group) as well as a siloxane bond is preferably 2 to 4, more preferably 3 to 4, with respect to a Si atom contained in a silane compound (ii).

Therefore, with respect to a compound expressed by the formula (7), for example, when q = 0, the total number of a hydrogen atom, a C1 to C4 alkyl group, a vinyl group, an allyl group, a phenyl group, and a 2-phenylethyl group, (groups unable to participate in a reaction involving a silanol group) is ordinarily from 0 to 2, and preferably from 0 to 1, and 0 is also one of preferable modes. Meanwhile, when q = 1 or higher, the total number of a hydrogen atom, a C1 to C4 alkyl group, a vinyl group, an allyl group, a phenyl group, and a 2-phenylethyl group, (groups unable to participate in a reaction involving a silanol group) is ordinarily from 0 to $2 \times (m + 1)$, and preferably from 0 to $(m + 1)$.

Examples of the silane compound (ii) include:

tetraalkoxysilanes, such as tetramethoxysilane, tetraethoxysilane, tetrapropoxysilane, and tetrabutoxysilane;

trialkoxysilanes, such as hydrotrimethoxysilane, methyltrimethoxysilane, methyltriethoxysilane, ethyltriethoxysilane, propyltriethoxysilane, butyltriethoxysilane, phenyltrimethoxysilane, phenyltriethoxysilane, (2-phenylethyl)trimethoxysilane, vinyltrimethoxysilane, vinyltriethoxysilane, allyltrimethoxysilane, and allyltriethoxysilane;

dialkoxysilanes, such as dimethyldimethoxysilane, dihydrodimethoxysilane, dimethyldimethoxysilane, dimethyldiethoxysilane, dimethyldipropoxysilane, dimethyldibutoxysilane, diphenyldimethoxysilane, di(2-phenylethyl)dimethoxysilane, divinyldimethoxysilane, diallyldimethoxysilane, hydrophenyldimethoxysilane, methylphenyldimethoxysilane, hydrovinyldimethoxysilane, methylvinyldimethoxysilane, phenylvinyldimethoxysilane, diphenyldiethoxysilane, di(2-phenylethyl)diethoxysilane, divinyldiethoxysilane, diallyldiethoxysilane, hydrophenyldiethoxysilane, methylphenyldiethoxysilane, hydrovinyldiethoxysilane, methylvinyldiethoxysilane, and phenylvinyldiethoxysilane;
tetrahalogenated silanes, such as tetrachlorosilane, tetrabromosilane, and tetraiodosilane;
trihalogenated silanes, such as hydrotribromosilane, methyltrichlorosilane, ethyltrichlorosilane, propyltrichlorosilane, butyltrichlorosilane, phenyltrichlorosilane, (2-phenylethyl)trichlorosilane, vinyltrichlorosilane, vinyltribromosilane, vinyltriiodosilane, and allyltrichlorosilane; and
dihalogenated silanes, such as dihydrodibromosilane, dimethyldichlorosilane, dimethyldibromosilane, dimethyldiiodosilane, diphenyldichlorosilane, di(2-phenylethyl)dichlorosilane, divinyldichlorosilane, diallyldichlorosilane, hydrophenyldichlorosilane, methylphenyldichlorosilane, hydrovinyldichlorosilane, methylvinyldichlorosilane, and phenylvinyldichlorosilane.

Examples of a silane compound having a hydrolyzable group other than the silane compound (ii) include a silane coupling agent. Examples of a silane coupling agent include vinyltrichlorosilane, vinyltrimethoxysilane, vinyltriethoxysilane, 2-(3,4-epoxycyclohexyl)ethyltrimethoxysilane, 3-glycidyloxypropyltrimethoxysilane, 3-glycidyloxypropyltriethoxysilane, 3-glycidyloxypropyl-methyl-dimethoxysilane, 4-styryltrimethoxysilane, (meth)acryloyloxypropyl-methyl-dimethoxysilane, (meth)acryloyloxypropyl-trimethoxysilane, (meth)acryloyloxypropyl-triethoxysilane, *N*-(2-aminoethyl)-3-aminopropyl-trimethoxysilane, *N*-(2-aminoethyl)-3-aminopropyl-methyl-dimethoxysilane, *N*-(2-aminoethyl)-3-aminopropyl-triethoxysilane, 3-aminopropyl-trimethoxysilane, 3-aminopropyl-triethoxysilane, 3-triethoxysilyl-*N*-(1,3-butylidene)propylamine, *N*-phenyl-3-aminopropyl-trimethoxysilane, 3-ureidepropyl-triethoxysilane, 3-chloropropyltrimethoxysilane, 3-mercaptopropyl-trimethoxysilane, 3-mercaptopropyl-methyl-dimethoxysilane, bis(triethoxysilylpropyl)tetrasulfide, bis(trimethoxysilylpropyl)amine, bis(triethoxysilylpropyl)amine, *N,N*'-bis(trimethoxysilylpropyl)ethylendiamine, *N*,*N*'-bis(triethoxysilylpropyl)ethylendiamine, *N,N*',*N*''-tris(trimethoxysilylpropyl)isocyanurate, 3-isocyanatopropyltrimethoxysilane, and 3-isocyanatopropyltriethoxysilane. Among the silane coupling agents, a silane coupling agent having an epoxy group, such as 2-(3,4-epoxycyclohexyl)ethyltrimethoxysilane, 3-glycidyloxypropyltrimethoxysilane, 3-glycidyloxypropyltriethoxysilane, and 3-glycidyloxypropyl-methyl-dimethoxysilane is used relatively preferably.

For a silane compound having a hydrolyzable group such as the silane compound (ii), an acid catalyst, a base catalyst, etc. may be used in order to improve the rate of a reaction of a hydroxy group, a C1 to C4 alkoxy group, or a halogen atom contained in the silane compound (such as a hydrolysis reaction, and a dehydration condensation reaction of a silanol group).

Examples of the acid catalyst include hydrochloric acid, sulfuric acid, nitric acid, trifluoroacetic acid, acetic acid, phosphoric acid, boric acid, boron trifluoride, tin oxide, and tetraalkoxy titanium. Examples of the base catalyst include sodium hydroxide, sodium alkoxide, potassium hydroxide, ammonia, primary amine, secondary amine, and tertiary amine.

When a silane compound (ii) is used, the addition amount of the acid catalyst or the base catalyst with respect to the total of a copolymer (i) and a silane compound (ii) is preferably in a range of from 0.1 to 10 weight-%, more preferably in a range of from 0.2 to 5 weight-%, and further preferably in a range of from 0.3 to 3 weight-%.

When a film is formed from a composition containing a silane compound (ii), in view of various characteristics, there is further a preferable range for the ratio of the weight of a copolymer (i) to the weight of a silane compound (ii) as reduced to $SiO_2$.

For example, from a viewpoint placing importance on the hardness, the ratio of the weight of a copolymer (i) to the weight of a silane compound (ii) as reduced to $SiO_2$ is preferably in a range of from 60/ 40 to 10/ 90, and more preferably in a range of from 50/ 50 to 10/ 90.

For example, from a viewpoint placing importance on the hydrophilicity, the ratio of the weight of a copolymer (i) to the weight of a silane compound (ii) as reduced to $SiO_2$ is preferably in a range of from 90/ 10 to 20/ 80, and more preferably in a range of from 70/ 30 to 20/ 80. In this regard, a weight as reduced to $SiO_2$ in the formula (7) is calculated as a formula amount corresponding to a chemical formula of $Si_{(m+1)}O_{(4m+4)}/2$.

An obtained film is imparted with high hydrophilicity by a sulfonic acid-containing group contained in a copolymer (i) . By crosslinking between two silane compounds (ii), a rigid film can be obtained, and further owing to the silane compound (ii), the film is imparted with superior weather resistance. An epoxy group in a copolymer (i) reacts with a silanol group in the silane compound (ii) (the reaction formula is shown as the general formula (8)), and further an alkoxysilyl group of a copolymer (i) reacts with the silane compound (ii), so that the copolymer (i) is incorporated in a network of siloxane bonds formed by the silane compound (ii).

[Chem. Formula 23]

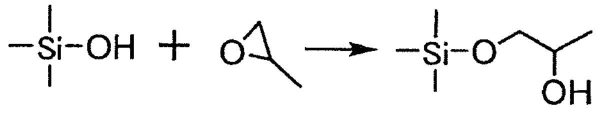

(8)

As the result, a highly hydrophilic copolymer (i) is firmly fixed in a film suppressing bleed-out of the highly hydrophilic copolymer (i) from the film, so that high hydrophilicity can be maintained for a long period of time. Further, by incorporating the highly hydrophilic copolymer (i) in a network of siloxane bonds formed by the silane compound, toughness is imparted to a film so as to enhance the abrasion resistance. Further by forming a network, crystallization and phase separation can be easily suppressed, so that an obtained film can be also superior in transparency. Further, since the film contains an inorganic substance containing a Si atom, which Si atom constitutes a network structure, the film is highly stable, and also superior in weather resistance. Therefore, from a composition according to the present invention, a rigid cured product (a film) able to maintain high hydrophilicity for a long period of time can be obtained.

On the other hand, by a method not according to the present invention, troubles such as the following (a) to (d) are apt to occur, and such a method may not be considered as appropriate.

(a) When a polymer, which has a sulfonic acid-containing group but not an epoxy group nor an alkoxysilyl group, is used instead of a copolymer (i), similarly high hydrophilicity can be attained, however, the polymer is bled out by washing, etc. and the hydrophilicity tends to decrease easily. Further, since the polymer is not incorporated in a network of siloxane bonds, the strength and the toughness are apt to be low, and therefore the abrasion resistance tends to be poor, and due to phase separation of a phase mainly with a polymer from a phase mainly with silica, the transparency may decrease.

(b) When an epoxy compound not having a sulfonic acid-containing group, or a Si compound not having a sulfonic acid-containing group is used instead of a copolymer (i), hydrophilization becomes difficult.

(c) When a compound with a small formula weight, which has a sulfonic acid-containing group and an epoxy group, and can be incorporated in a network of siloxane bonds, is used instead of a copolymer (i), the hydrophilicity is apt to be lower than in the case according to the present invention, because a large number of sulfonic acid-containing groups can hardly be introduced into the compound. Further, since the compound is easily movable due to the small formula weight, a compound not incorporated in siloxane bonds can easily bleed out or flow out from the surface of a film, and therefore the same is not preferable from viewpoints of performance deterioration and safety after curing.

(d) When a mixture of a compound having a sulfonic acid-containing group and a compound having an epoxy group is used instead of a copolymer (i), the compounds are hardly incorporated in a network of siloxane bonds, and further a defect is apt to be generated in the network, because the compound having a sulfonic acid-containing group and the compound having an epoxy group do not react each other, and the compound having a sulfonic acid-containing group does not react with a silane compound (ii) . Therefore, compared to a case where a copolymer (i) is used, the abrasion resistance is apt to decrease due to decrease in the hardness and the toughness. Further, since the compound having an epoxy group has a lower molecular weight and lower polarity compared to a copolymer (i), a hydrophobic compound having an epoxy group can easily migrate to a surface, and therefore high hydrophilicity is not easily attainable.

From a composition containing a copolymer (i) and a silane compound (ii), a network of densely formed siloxane bonds should preferably be formed not only by a crosslinking reaction of an alkoxysilyl group contained in the copolymer (i) and the silane compound (ii), but also by a reaction of an epoxy group in the copolymer (i) and a silanol group originated from the silane compound (ii).

Therefore, a curing catalyst, or a curing material may be added to the composition for promoting a reaction between an epoxy group and a silanol group. Examples of the curing catalyst, or the curing material include hydrochloric acid, sulfuric acid, trifluoroacetic acid, acetic acid, phosphoric acid, boric acid, alumina, trialkoxy aluminum, acetylacetone aluminum salt, triethylendiamine, 2-methylimidazole, and 2,4-diamino-6-[2'-methylimidazole-(1')]-ethyl-s-triazine.

The addition amount of the curing catalyst or the curing material with respect to the total weight of a copolymer (i) and a silane compound (ii) is preferably in a range of from 0.01 to 30 wt%, more preferably in a range of from 0.1 to 10 wt%, and further preferably in a range of from 0.2 to 5 wt%.

In some cases, the concentration of a sulfonic acid-containing group originated from a copolymer (i) in a film formed from the composition gradually increases (concentrates) from the film toward the outer surface forming a gradient. It is presumed that the hydrophilicity of a film surface increases according to the degree of gradient.

The principle for forming this gradient structure is: "to have a hydrophilic copolymer (i) having a sulfonic acid-containing group entrained with an evaporating polar solvent, concentrated in a surface, and cured, when the polar solvent added in advance is evaporated".

In the case where a cured film is formed from the composition on a substrate, when the sulfonic acid concentration in the outer surface opposite to a substrate is defined as Sa and the sulfonic acid concentration at the midpoint between the interface in contact with the substrate and the outer surface is defined as Da, the degree of gradient in the copolymer (i) used in the present invention having a sulfonic acid-containing group is represented by a ratio of the sulfonic acid concentrations (Sa/ Da). That is, a high ratio of the sulfonic acid concentrations (Sa/ Da) indicates that a large amount of sulfonic acid is concentrated in the outer surface of the cured film. This means that the higher the ratio of the sulfonic acid concentrations (Sa/ Da), the higher the hydrophilicity of the cured film surface is, and the more advantageous is for a cured film according to the present invention to be used as a hydrophilic film. In this regard, with respect to the above-described Da, "the midpoint between the interface in contact with the substrate and the outer surface" is ordinarily a point at which the depth from the outer surface toward the interface in contact with the substrate is 1/ 2 of the film thickness (hereinafter, this point is also referred to as "point of 1/ 2 film thickness"). In the descriptions of Sa and Da, the terms "sulfonic acid" and "sulfonic acid concentration" mean "-$SO_3$M group" and "-$SO_3$M group concentration", respectively.

The degree of gradient (ratio of sulfonic acid concentrations (Sa/ Da)) of a film obtained according to the present invention is ordinarily in a range of from 1.01 to 1000, preferably in a range of from 1.1 to 100, and more preferably in a range of from 1.2 to 60. Further, the lower limit of a degree of gradient is more preferably 1.1 or more. When the degree of gradient exceeds 1,000, a reaction between a silanol group of a silane compound (ii) and a highly hydrophilic copolymer (i) (incorporation into a network of siloxane bonds) is likely to become incomplete, so that the toughness, transparency, and durability (hydrophilicity durability) tend to decrease.

In accordance with the present invention, a film with a gradient sulfonic acid concentration exhibits higher hydrophilicity. Although a film, in which the sulfonic acid concentration is not gradient (for example, degree of gradient Sa/ Da = 1), exhibits also high hydrophilicity, it is lower than a case where the sulfonic acid concentration is gradient. Further, for a film, in which the sulfonic acid concentration is not gradient (for example, degree of gradient Sa/ Da = 1), to obtain the same hydrophilicity as a film with a gradient sulfonic acid concentration, a larger amount of a hydrophilic copolymer (i) is required. Therefore, in the case of a film with a gradient sulfonic acid concentration, the hardness, scratch property, abrasion resistance, durability (hydrophilicity durability), etc. can be improved, while maintaining high hydrophilicity, by attaining a state with highly dense crosslinks of siloxane bonds.

In a case where there is a gradient in the concentration of a -$SO_3$M group in a film obtained according to the present invention, it is believed that the balance between the hydrophilicity (water contact angle, etc.) and the hardness of the obtained film is superior.

A composition containing a copolymer (i) and a silane compound (ii) able to react with the copolymer (i) contains ordinarily the copolymer (i), the silane compound (ii), a catalyst, a curing material, and a solvent which can dissolve or disperse the former components uniformly.

Any solvent may be used as the solvent, insofar as a solvent can dissolve or disperse the respective components uniformly. The solvent may be used singly, or a mixture of 2 or more kinds thereof may be used.

With respect to a film obtained from a composition according to the present invention, for forming a gradient in the thickness direction of a hydrophilic copolymer (i) (for concentrating sulfonic acid in a surface of the film), a high polarity solvent with a high SP value (solubility parameter $\sigma$), more specifically at least one kind of solvent with a SP value (solubility parameter $\sigma$) of 9.3 or higher is preferably used.

When it is intended to form a film with a gradient sulfonic acid concentration using a solvent with an SP value less than 9.3, it is preferable to combine the solvent with a solvent with an SP value of 9.3 or higher, provided that the solvent has a lower boiling point (faster evaporation rate) than such a solvent with an SP value of 9.3 or higher.

According to the present invention, a SP value (solubility parameter $\sigma$) $(cal/cm^3)^{1/2}$ of a solvent is a value calculated by the following calculation formulas.

(1) Latent heat of evaporation per mole Hb = 21 $\times$ (273 + Tb) [unit: cal/mol], Tb: boiling point (°C) of solvent

(2) Latent heat of evaporation per mole at 25°C H25 = Hb $\times$ [1 + 0.175 $\times$ (Tb - 25)/ 100] [unit: cal/mol], Tb: boiling point (°C) of solvent

(3) Intermolecular bond energy E = H25 - 596 [unit: cal/mol]

(4) Intermolecular bond energy per 1 mL ($cm^3$) of solvent E1 = E $\times$ D/ Mw [unit: $cal/cm^3$], D: density ($g/cm^3$), Mw: molecular weight of solvent

(5) SP value: Solubility parameter $\sigma = (E1)^{1/2}$ [unit: $(cal/cm^3)^{1/2}$]

Since by using such a solvent having a SP value (solubility parameter $\sigma$) $(cal/cm^3)^{1/2}$) of 9.3 or higher, the

solvent exerts a certain interaction with a hydrophilic sulfonic acid-containing group originated from a copolymer (i), when the mixture is coated onto a substrate and the solvent is subsequently removed from the mixture, the copolymer (i) having a hydrophilic sulfonic acid-containing group moves entrained with the solvent toward a surface of the coated mixture exposed to the air, so that the hydrophilic sulfonic acid-containing group is concentrated in the surface to form a gradient structure, in which the hydrophilic sulfonic acid-containing group is concentrated in the outer surface of a film obtained according to the present invention.

On the other hand, when a solvent having a solubility parameter σ $(cal/cm^3)^{1/2}$ less than 9.3 is used, the above-described interaction is weak, and the above-described gradient structure is not adequately formed. In view of facilitating formation of a gradient structure, the solubility parameter σ $(cal/cm^3)^{1/2}$ is preferably 9. 3 or higher, more preferably 10 or higher, and further preferably 11 or higher.

Further, since curing (crosslinking reactions by forming siloxane bonds) is performed mainly by heating according to the present invention, it is ordinary that a gradient structure is formed and fixed (cured) by evaporating a solvent corresponding to the heating conditions (temperature, time, catalyst, curing material, airflow rate, etc.). Therefore, from a viewpoint of forming the gradient structure and simultaneously curing the same, a solvent tends to be selected out of the above based on the boiling point (evaporation rate) in accordance with the curing temperature. Specifically, a solvent with a boiling point from 30 to 300°C is preferable, a solvent with a boiling point from 40 to 250°C is more preferable, and a solvent with a boiling point from 50 to 210°C is further preferable. In this regard, in the case of a mixed solvent containing 2 or more kinds of solvents, it is only necessary that the boiling point of a solvent with the highest boiling point in the mixed solvent should be within the above-described range.

Examples of a solvent having a solubility parameter σ $(cal/cm^3)^{1/2}$ of 9.3 or higher, and a boiling point of from 50 to 210°C usable as the above-described solvent include:

alcohols, such as methanol, ethanol, 1-propanol, IPA (isopropanol), 1-butanol, isobutanol, 2-butanol, 1-pentanol, cyclohexanol, 2-methoxyethanol, 2-ethoxyethanol, 2-methoxypropanol, 2-methyl-1-butanol, isoamyl alcohol, tetrahydrofurfuryl alcohol, ethylene glycol monoacetate, benzyl alcohol, ethylene glycol, and 1.2-propylene glycol;
ketones, such as cyclohexanone, 2-methylcyclohexanone, and acetone;
carboxylic acids, such as formic acid, acetic acid, and propionic acid;
carboxylates, such as methyl acetate, and ethylene glycol diacetate;
ethers, such a dioxane, anisole, and THF (tetrahydrofuran);
amides, such as DMF (*N,N*'-dimethylformamide), and DMAC (*N,N*'-dimethylacetamide);
nitriles, such as acetonitrile; and
water.

Among the solvents, water having the highest solubility parameter σ of 21.4 $(cal/cm^3)^{1/2}$, and an alcohol are preferable. Among alcohols, a primary alcohol, such as methanol, ethanol, 1-propanol, 2-methoxyethanol (EGM), 2-ethoxyethanol, 2-methoxypropanol (PGM), 1-butanol, 1-pentanol, 2-methyl-1-butanol, and 1-pentanol, tends to be preferable. Although the alcohol may be used singly, however the alcohol may be preferably mixed with water and used.

The solvents having a solubility parameter σ $(cal/cm^3)^{1/2}$ of 9.3 or higher to be contained in a solvent may be used singly or a mixture of 2 or more kinds thereof may be used.

In a case where the solvent is a mixed solvent containing 2 or more solvents, it is adequate if at least one thereof satisfies the condition concerning a solubility parameter. This is because, if the solubility parameter of the one solvent in the mixed solvent satisfies the above-described condition, a hydrophilic sulfonic acid-containing group originated from a copolymer (i) exerts certain interaction with the one solvent, and therefore, when the mixture is coated onto a substrate and a solvent is subsequently removed from the mixture, the copolymer (i) having a hydrophilic sulfonic acid-containing group still moves entrained with the one solvent toward a surface of the coated mixture exposed to the air without any particular change, and as the result the hydrophilic sulfonic acid-containing group comes to be concentrated in the surface.

In the case of a mixed solvent containing 2 or more solvents, a compound having the highest boiling point tends to affect the formation of a gradient structure. Therefore, the solubility parameter σ $(cal/cm^3)^{1/2}$ of a solvent having the highest boiling point contained in the mixed solvent is preferably 9.3 or higher.

Even in the case of a mixed solvent composed of solvents having a solubility parameter of 9.3 or higher, it is preferable to use solvents having a solubility parameter as high (high polarity) as possible. Further, it is also preferable that the solubility parameter σ $(cal/cm^3)^{1/2}$ of a solvent having a higher boiling point is higher than that of a solvent having a lower boiling point, because a film, in which the sulfonic acid concentration gradually increases toward the surface, can be formed easily.

As for the mixing ratio of a mixed solvent containing 2 or more solvents, the ratio of the weight of a solvent with the highest solubility parameter to the weight of other solvent(s) is preferably in a range of from 99. 9/ 0.1 to 1/ 99, more preferably from 99/ 1 to 10/ 90, and further preferably from 98/ 2 to 30/ 70.

However, in the case of a mixed solvent of water, and a solvent other than water, if a solvent other than water is a low polarity solvent, which may separate from water, or the addition amount of water is large, or a solvent which evaporation rate is excessively high (low boiling point) is mixed, a coated composition of the present invention is apt to form a droplet in a solvent drying step, so that a transparent and smooth film can hardly be obtained due to decrease in a leveling property, etc.. Therefore, in cases where a mixed solvent with water is selected, first of all it is important to use a high polarity solvent having high affinity for water, so that a composition of the present invention is formed into a uniform solution or a uniform dispersion. Further for obtaining a transparent and smooth film, the weight ratio of water to a solvent other than water should be rather preferably from 80/ 20 to 1/ 99, more preferably from 70/ 20 to 5/ 95, further preferably from 70/ 30 to 5/ 95, and especially preferably from 60/ 40 to 10/ 90.

Examples of a method of selecting the kind of a solvent other than water to be mixed with water include a method of selecting a high polarity solvent having a solubility parameter $\sigma$ $(cal/cm^3)^{1/2}$ of 9.3 or higher; and further a selection method based on the ratio of evaporation rate (evaporation rate compared to water) R at an inner temperature actually measured in a solvent drying step. Specifically, a solvent with the ratio of evaporation rate with respect to water R at an inner temperature in a drying step in a range of from 0.1 to 2.0 is preferable, a solvent with the ratio of evaporation rate R in a range of from 0.2 to 1.8 is more preferable,, and a solvent with the ratio of evaporation rate R in a range of from 0.3 to 1.5 is further preferable.

The ratio of evaporation rate R is herein calculated by the following simplified calculation formulas (A) and (B).

(A) Evaporation rate = saturated vapor pressure (mmHg) at a drying temperature $\times$ $\sqrt{}$(molecular weight); and
(B) Ratio of evaporation rate with respect to water R = evaporation rate of solvent other than water/ evaporation rate of water.

For example, the evaporation rate of water at 50°C is calculated to be 92.6, and the ratios of evaporation rate R of typical solvents to be dried at 50°C are calculated as follows.

For example, methanol = 4.3, ethanol = 2.4, IPA (2-propanol) = 1.8, 1-propanol = 1.0, 1-butanol = 0.4, EGM (methoxyethanol) = 0.4, and EGE (ethoxyethanol) = 0.3

Meanwhile, examples of another mode of the present invention include a cured film which is formed on a substrate, and includes a $-SO_3M$ group (wherein, M represents a hydrogen atom, an alkali metal, an alkaline earth metal, or an ammonium ion), and a Si-O-Si structure or a Si-O-C structure, wherein the ratio (Sa/ Da) of the $SO_3M$ group concentration in the outer surface of the film (Sa) to the $SO_3M$ group concentration at the midpoint between the interface in contact with a substrate and the outer surface (Da), is from 2 to 1,000. In this regard, the Si-O-Si structure can be detected by IR between 1, 090 and 1, 010 $cm^{-1}$, and the Si-O-C structure can be detected similarly near 1,100 to 1,200 $cm^{-1}$, and near 800 to 810 $cm^{-1}$.

The degree of gradient (ratio of sulfonic acid concentrations (Sa/ Da)) in the film according to the present invention is ordinarily in a range of from 1.01 to 1,000, preferably in a range of from 1.1 to 100, and more preferably in a range of from 1.2 to 60. In any cases, it is more preferable that the lower limit value is 1.1 or more.

Since the film according to the present invention has hydrophilicity as well as a Si-O-Si structure, or a Si-O-C structure, it is superior in hardness, abrasion resistance, weather resistance, etc.

In order to improve the physical properties of a film obtained from a copolymer (i) or a composition containing a copolymer (i), an additive, a modifying material, or the like may be added to the copolymer (i) or the composition. Examples of an additive, or a modifying agent include a UV absorber, a HALS (hindered amine light stabilizer), an antioxidant, a radical scavenger, a filler, a pigment, a color-adjusting agent, a high refractive index agent, an aromatic chemical, a surfactant, a defoaming agent, a leveling agent, a sagging prevention material, and other modifying agents.

The UV absorber and the HALS are added mainly for improving further weather resistance. The antioxidant and the radical scavenger are added mainly for improving heat resistance or suppressing deterioration. The filler is added mainly for improving abrasion resistance or imparting toughness. Examples of the filler include organic fillers, such as an acrylic resin, a polyester resin, a polyurethane resin, a phenolic resin, and a polyolefin resin; and inorganic fillers, such as silica particles, and glass fibers. The pigment and dye are added mainly for coloring. The color-adjusting agent is added mainly for color complementing. An example of the color-complementing agent is a bluing agent. The high refractive index agent is added mainly for increasing the refractive index of a film to be obtained. Examples of the high refractive index agent include metallic oxides such as titanium oxide, and sulfur compounds such as a thioepoxy compound. The aromatic chemical is added mainly for improving an odor, etc. The surfactant, the defoaming agent, the leveling agent, and the sagging prevention material are added mainly for improving a coating property, the appearance of a cured film, etc.

Examples of the surfactant include sodium lauryl sulfate, triethanolamine lauryl sulfate, sodium polyoxyethylene lauryl ether sulfate (EMAL 270J, Kao Corporation), sodium dodecylbenzene sulfonate, sodium alkyl naphthalene sulfonate (PELEX NB-L, Kao Corporation), sodium dialkyl sulfosuccinate (PELEX TR, PELEX OT-P, Kao Corporation), sodium dioctyl sulfosuccinate (NEOCOL P, Dai-ichi Kogyo Seiyaku Co., Ltd.), polyoxyalkyl alkenyl ether ammonium

sulfate (LATEMUL PD-104, Kao Corporation), dipotassium alkenyl succinate (LATEMUL SAK, Kao Corporation), alkyl aryl, polyoxyethylene tridecyl ether phosphate (PLYSURF A212C, Dai-ichi Kogyo Seiyaku Co., Ltd.), polyoxyethylene styryl phenyl ether phosphate (PLYSURF AL, Dai-ichi Kogyo Seiyaku Co., Ltd.), polyoxyethylene alkylene alkyl ether (EMULGEN LS-144, Kao Corporation), polyoxyethylene sorbit tetraoleate (RHEODOL 440V, Kao Corporation), glycerine monooleate, alkyl alkanolamide (AMINON L-02, Kao Corporation), stearyl methyl ammonium chloride, and stearyl betaine (AMPHITOL 24B, Kao Corporation).

Examples of the defoaming agent include Shin-Etsu Chemical Co., Ltd. KS-604; Shin-Etsu Chemical Co., Ltd. KF-604; Shin-Etsu Chemical Co., Ltd. KS-66; Shin-Etsu Chemical Co., Ltd. KM-88P; Shin-Etsu Chemical Co., Ltd. KM-601S; Shin-Etsu Chemical Co., Ltd. KM-72; Shin-Etsu Chemical Co., Ltd. KM-73; Shin-Etsu Chemical Co., Ltd. KM-85; Shin-Etsu Chemical Co., Ltd. KS-508; Shin-Etsu Chemical Co., Ltd. KS-530; Shin-Etsu Chemical Co., Ltd. KS-538; Shin-Etsu Chemical Co., Ltd. KP-650; Kyoeisha Chemical Co., Ltd. AQUALEN 8020; Kyoeisha Chemical Co., Ltd. AQUALEN 8021N; Kyoeisha Chemical Co., Ltd. AQUALEN HS-01; Kyoeisha Chemical Co., Ltd. AQUALEN SB-520; and Kyoeisha Chemical Co., Ltd. AQUALEN SB-630.

Examples of the leveling agent include modified silicone oil (Shin-Etsu Chemical Co., Ltd. KF355A; Shin-Etsu Chemical Co., Ltd. KF640); Shin-Etsu Chemical Co., Ltd. KP-341; Shin-Etsu Chemical Co., Ltd. KP-326; Shin-Etsu Chemical Co., Ltd. KP-104; Shin-Etsu Chemical Co., Ltd. KP-110; Kyoeisha Chemical Co., Ltd. POLYFLOW KL-100; Kyoeisha Chemical Co., Ltd. POLYFLOW KL-800; Kyoeisha Chemical Co., Ltd. KL-800; Kyoeisha Chemical Co., Ltd. POLYFLOW WS; Kyoeisha Chemical Co., Ltd. POLYFLOW WS-30; and Kyoeisha Chemical Co., Ltd. POLYFLOW WS-314.

Examples of the sagging prevention material include Kyoeisha Chemical Co., Ltd. TALEN 7200-20; Kyoeisha Chemical Co., Ltd. TALEN BA-600; Kyoeisha Chemical Co., Ltd. TALEN KU-700; Kyoeisha Chemical Co., Ltd. TALEN KY-2000; Kyoeisha Chemical Co., Ltd. TALEN 1450; Kyoeisha Chemical Co., Ltd. TALEN 2000; Kyoeisha Chemical Co., Ltd. TALEN 2200A; Kyoeisha Chemical Co., Ltd. TALEN 2450; Kyoeisha Chemical Co., Ltd. TALEN 2550; Kyoeisha Chemical Co., Ltd. FLOWNON HR-2; Kyoeisha Chemical Co., Ltd. FLOWNON SP-1000; Kyoeisha Chemical Co., Ltd. FLOWNON SP-1000AF; Kyoeisha Chemical Co., Ltd. FLOWNON SD-700; Kyoeisha Chemical Co., Ltd. FLOWNON SDR-80; Kyoeisha Chemical Co., Ltd. THIXOL K-130B; Kyoeisha Chemical Co., Ltd. THIXOL K-502; Kyoeisha Chemical Co., Ltd. THIXOL W-300; and Kyoeisha Chemical Co., Ltd. THIXOL W-400LP.

Examples of other modifying agents include polyacrylate, and polymethacrylate.

By curing a copolymer (i) or a composition containing the copolymer (i) and a silane compound (ii) obtained as above, a film can be formed. Curing means herein also a case, where, for example, once a solvent is removed from a copolymer (i) or a composition containing the copolymer (i), typically solubility in the solvent has been reduced or lost. When a copolymer (i) or a composition containing the copolymer (i) is cured, typically a network (cross-linked structure) mainly constituted with siloxane bonds formed by reacting groups contained in a copolymer (i), or a composition containing the copolymer (i) and a silane compound (ii) (typically, a halogen atom, a hydroxy group, and an alkoxy group, bonded to a Si atom) is formed in the film.

Curing is preferably performed by heating. The heating temperature is approximately in a range of from 30 to 300°C, preferably in a range of from 40 to 200°C, and more preferably in a range of from 50 to 180°C. The heating time is ordinarily in a range of from 0.02 hour to 200 hours, preferably in a range of from 0.1 hour to 8.0 hours, and more preferably in a range of from 0.3 hour to 4.0 hours.

Curing is also possible by a method other than heating. An example is a curing method, by which the copolymer (i), or the composition containing the copolymer (i) is irradiated with a microwave (a kind of radiation, typical example: frequency: 2.45 GHz, wavelength: 12.2 cm).

For example, curing is also possible by adding a publicly known multifunctional (meth)acrylate, a publicly known multifunctional epoxy compound, a publicly known multifunctional vinyl compound, or the like to the copolymer (i), or the composition containing the copolymer (i), and if necessary, adding further an UV radical polymerization initiator, an UV cationic polymerization initiator, or the like, and performing irradiation with ultraviolet light (UV) which is a kind of radiation.

In this regard, in the case of radiation irradiation, from a viewpoint of sure formation of a network constituted mainly with siloxane bonds in a film, curing by a combination of heating and radiation irradiation is one of preferable modes.

In a case where curing is performed using radiation, as the radiation, energy rays in a wavelength range of from 0.0001 to 800 nm can be employed. The radiation is classified into α-ray, β-ray, γ-ray, X-ray, electron beam, ultraviolet ray, visible light, microwave, etc., and may be selected and used appropriately corresponding to the composition of the copolymer (i) or the silane compound (ii). Among them, an ultraviolet ray is preferable, and the output peak is preferably in a range of from 200 to 450 nm, more preferably in a range of from 210 to 445 nm, further preferably in a range of from 220 to 430 nm, and especially preferably in a range of from 230 to 400 nm. When an ultraviolet ray having an output peak in the range is used, occurrence of defects such as yellowing and thermal deformation during curing is minimal, and even when an ultraviolet absorber is added, the curing can be completed within a relatively short period of time. Further, as the kind of UV lamp, an electrodeless UV (ultraviolet) lamp is preferable, which emits less infrared

light and gives a higher illumination intensity than an ordinary UV (ultraviolet) lamp with electrode. Further, when an UV absorber, or a HALS is added to the copolymer (i) or the composition, use of a UV lamp having a peak intensity in terms of output performance between 240 and 270 nm tends to be preferable.

Although the atmosphere, in which the copolymer (i) or the composition containing the copolymer (i) according to the present invention is cured, may be an inert gas atmosphere such as nitrogen, the air atmosphere is preferable. Further, with respect to the humidity of the atmosphere, it is preferably as low as possible, because a surface of a cured film is likely to become ununiform under high humidity, and the humidity is preferably approximately in a range of from 20 to 70% RH, more preferably in a range of from 30 to 60% RH, and further preferably in a range of from 40 to 60% RH.

The film is a film with a thickness of 0.1 μm (100 nm) or less. A film with such a thickness is useful for an optical article or an optical device composed of a multilayer structure, and is useful for making a lower layer of the film exert the functions of the same, and making the film exert the antifogging, antifouling, and antistatic functions of the same.

Examples of an optical article or an optical device composed of a multilayer structure include a spectacle lens. A spectacle lens is in general constituted with a spectacle lens substrate, and either or both of a HC (hard coat) layer, and an AR (antireflection) layer layered on the substrate. In the optical use, where high transparency is required, it is preferable first of all that the transparency of a material itself to be used for the optical substrate is high, and the internal loss of transmitted light (*e.g.* scattering) is low. Further, in many cases, the light reflection at a surface is reduced by an AR (antireflection) layer, etc. so as to achieve higher transparency. Meanwhile, if a film in an order of micrometer or higher as in the case of a general purpose film is laminated on the antireflection layer, reflection takes place on a surface of a laminated film to impair transparency. Therefore, there is a trend toward decrease in the film thickness. Further, in many cases a scratch resistance function is imparted by a HC (hard coat) layer, etc. However, if a film with a scratch property inferior to the HC layer and a thickness in an order of micrometer or higher is laminated on the HC layer, the scratch resistance function of the HC layer is impaired. Therefore, there is a trend toward decrease in the film thickness. A preferable thickness is, for example, in a range of from 0.1 to 100 nm (0.0001 to 0.1 μm), more preferably in a range of from 0.5 to 10 nm (0.0005 to 0.01 μm), and further preferably in a range of from 1 to 5 nm (0.001 to 0.005 μm).

The film can be produced, for example, by applying the copolymer (i) or a composition containing the copolymer (i) on a substrate described below, and curing the same.

Examples of a method for applying the copolymer (i) or a composition containing the copolymer (i) on a substrate include a brush coating method, a spray coating method, a wire bar coating method, a bar coater method, a blade coating method, a roll coating method, a spin coating method, a dipping method and other publicly known coating methods.

The coating amount may be so selected that the thickness of a film becomes within a desired range.

The thickness of the film is preferably in the range of from 0.1 to 100 nm, more preferably in the range of from 0.5 to 10 nm, and further preferably in the range of from 1 to 5 nm.

For example, in an optical use, etc., where high transparency is required, it is preferable first of all that the transparency of a material itself to be used for the optical substrate is high, and the internal loss of transmitted light (*e.g.* scattering) is low. Further, in many cases, the light reflection at a surface is reduced by an AR (antireflection) layer, etc. so as to achieve higher transparency. Meanwhile, if a film in an order of micrometer or higher as in the case of a general purpose film is laminated on the antireflection layer, reflection takes place on a surface of a laminated film to impair transparency. Therefore, there is a trend toward decrease in the film thickness. Specifically, a preferable thickness on such an optical substrate, as is laminated with an antireflection film is, for example, in a range of from 0.1 to 100 nm (0.0001 to 0.1 μm), more preferably in a range of from 0.5 to 10 nm (0.0005 to 0.01 μm), and further preferably in a range of from 1 to 5 nm (0.001 to 0.005 μm).

Further, a laminate having at least one layer (Z) composed of the film and a substrate is produced by applying a copolymer (i), or a composition containing the copolymer (i) on a substrate and curing the same under the above-described conditions, and an obtained laminate can be also used as it is.

Examples of a material for the substrate include organic materials, such as PMMA, polycarbonate (PC), PET, ABS, triacetylcellulose (TAC), poly(vinyl chloride), polyethylene (PE), polypropylene (PP), poly(lactic acid) (PLA), a poly(thio)urethane resin, a poly(thio)urea resin, and a (thio)epoxy resin; inorganic materials, such as glass, iron, stainless steel, aluminum, nickel, zinc, gold, silver, copper, a metallic oxide, ceramics, cement, slate, marble or granite, and mortar; and composite materials, such as a SMC (Sheet Molding Compound) hybridizing an inorganic material, such as a glass fiber, and calcium carbonate, with an organic material, such as an unsaturated polyester resin.

An organic substrate, an inorganic substrate, and a composite substrate composed respectively of such an organic material, an inorganic material, and a composite material may be used as they are, however the same may be also used after various surface treatments. By a surface treatment, for example, the adhesion between the substrate and a layer composed of a film (Z) can be enhanced. Examples of surface-treated substrates include a substrate with a metal-plated surface, a substrate with a surface chemically treated with a chemical such as a zinc phosphate aqueous solution, a corona-treated substrate, a plasma-treated substrate, a glow discharge-treated substrate, a flame-treated substrate, an ITRO-treated substrate, a primed substrate, an under-coated substrate, and an anchor-coated substrate.

Examples of a coating agent to be used in the above-described priming treatment, undercoating treatment, or

anchor-coating treatment include coating agents containing a resin as a main component of a vehicle, such as a polyester resin, a polyamide resin, a polyurethane resin, an epoxy resin, a phenolic resin, a (meth)acrylic resin, a poly(vinyl acetate) resin, a polyolefin resin (*e.g.*, polyethylene and polypropylene) as well as a copolymer or modified resin thereof, and a cellulosic resin. The coating agent may be either of a solution-type coating agent and an aqueous dispersion-type coating agent.

Among the coating agents, are preferable a silane coupling agent-type coating agent, a mixture coating agent of a silane coupling agent and a filler, a modified polyolefin-type coating agent, an ethyl vinyl alcohol-type coating agent, a polyethylenimine-type coating agent, a polybutadiene-type coating agent, a polyurethane-type coating agent, a polyester-type polyurethane emulsion coating agent, a poly (vinyl chloride) emulsion coating agent, a urethane acrylic emulsion coating agent, a silicon acrylic emulsion coating agent, a vinyl acetate acrylic emulsion coating agent, an acrylic emulsion coating agent;

a styrene-butadiene copolymer latex coating agent, an acrylonitrile-butadiene copolymer latex coating agent, a methyl methacrylate-butadiene copolymer latex coating agent, a chloroprene latex coating agent, a polybutadiene latex rubber-type latex coating agent, a polyacrylate ester latex coating agent, a poly(vinylidene chloride) latex coating agent, a polybutadiene latex coating agent, and a coating agent composed of a carboxylic acid-modified latex or dispersion of a resin contained in the above latex coating agents.

The coating agents can be applied by, for example, a gravure coating method, a reverse roll coating method, a knife coating method, or a kiss coating method, and the amount thereof to be applied to a substrate is ordinarily from 0.005 $g/m^2$ to 5 $g/m^2$ in a dry state.

Among the coating agents, a silane coupling agent-type coating agent, a mixture coating agent of a silane coupling agent and the above filler, and a polyurethane-type coating agent represented by "TAKELAC™" and "TAKENATE™" (both produced by Mitsui Chemicals, Inc.) are more preferable.

The silane coupling agent-type coating agent, and the mixture coating agent of a silane coupling agent and the filler are characterized in that a silane coupling agent is included in the coating agent. Examples of a typical silane coupling agent included in the coating agent include vinyltrichlorosilane, vinyltrimethoxysilane, vinyltriethoxysilane, 2-(3,4-epoxycyclohexyl)ethyltrimethoxysilane, 3-glycidyloxypropyltrimethoxysilane, 3-glycidyloxypropyltriethoxysilane, 3-glycidyloxypropylmethyldimethoxysilane, 4-styryltrimethoxysilane, (meth)acryloyloxypropyl(methyl)dimethoxysilane, [(meth)acryloyloxypropyl]trimethoxysilane, [(meth)acryloyloxypropyl]triethoxysilane, *N*-(2-aminoethyl)-3-aminopropyl-trimethoxysilane, *N*-(2-aminoethyl)-3-aminopropyl-methyl-dimethoxysilane, *N*-(2-aminoethyl)-3-aminopropyl-triethoxysilane, 3-aminopropyl-trimethoxysilane, 3-aminopropyl-triethoxysilane, 3-triethoxysilyl-*N*-(1,3-butylidene)propylamine, *N*-phenyl-3-aminopropyl-trimethoxysilane, 3-ureidepropyl-triethoxysilane, 3-chloropropyltrimethoxysilane, 3-mercaptopropyl-trimethoxysilane, 3-mercaptopropyl-methyl-dimethoxysilane, bis(triethoxysilylpropyl)tetrasulfide, bis(trimethoxysilylpropyl)amine, bis(triethoxysilylpropyl)amine, *N,N*'-bis(trimethoxysilylpropyl)ethylenediamine, N,N'-bis(triethoxysilylpropyl)ethylenediamine, *N,N',N*''-tris(trimethoxysilylpropyl)-isocyanurate, 3-isocyanatopropyltrimethoxysilane, and 3-isocyanatopropyltriethoxysilane.

Among the silane coupling agents, a silane coupling agent having an epoxy group, a mercapto group, or an amino group is relatively preferable, a silane coupling agent having an amino group is more preferable, and bis(trimethoxysilylpropyl)amine, bis(triethoxysilylpropyl)amine, *N,N'*-bis(trimethoxysilylpropyl)ethylenediamine, and *N,N*'-bis(triethoxysilylpropyl)ethylenediamine are most preferable.

The polyurethane-type coating agent has a urethane bond in a backbone or a side chain of a resin contained in the coating agent. The polyurethane-type coating agent is a coating agent containing polyurethane obtained by reacting a polyol, such as a polyester polyol, a polyether polyol, and an acrylic polyol, and an isocyanate compound.

Among the polyurethane-type coating agents, a polyurethane-type coating agent obtained by mixing a polyester polyol, such as a condensation-type polyester polyol, and a lactone-type polyester polyol, and an isocyanate compound, such as tolylene diisocyanate, hexamethylene diisocyanate, isophorone diisocyanate, methyl norbornane diisocyanate, and xylylene diisocyanate, is preferable, because of superior adhesion.

There is no particular restriction on a method of mixing a polyol compound and an isocyanate compound. Further, there is no particular restriction either on the blend ratio, however if the content of an isocyanate compound is too low, curing may become defective. Therefore, the appropriate ratio of an OH group in the polyol compound to an NCO group in the isocyanate compound is in terms of equivalent in a range of from 2/ 1 to 1/ 40. Further, a publicly known silane coupling material may be added to the polyol compound and the isocyanate compound.

The film thickness of a coating agent to be used for the priming treatment, the undercoating treatment, or the anchor-coating treatment, may be decided optionally according to a use, etc. For example, when an optical substrate, which requires frequently antireflection performance, is coated, the film thickness is in a range of from approx. 0.0001 $\mu$m (0.1 nm) to 0.1 $\mu$m (100 nm), and more preferably in a range of from 0.001 $\mu$m (1 nm) to 0.05 $\mu$m (50 nm). For example, when a substrate other than an optical substrate is coated, the film thickness is in a range of from approx. 0.1 to 400 $\mu$m, more preferably in a range of from 0.5 to 200 $\mu$m, and further preferably from 1 to 100 $\mu$m.

The surface treatment may be performed also for other purpose than enhancement of adhesion, for example,

for imparting antireflection performance, and an example of a substrate undergone such a surface treatment is a glazing substrate, on which surface minute ruggedness is formed. Further, a painted substrate, which is prepared by applying a paint onto a surface of such a substrate, can be also used.

The substrate may be used singly as a single layer, or plural substrates selected from organic substrates, inorganic substrates, and composite substrates and combined as a laminated substrate may be also used.

Further, as an optical substrate to be used for an optical article and an optical device represented by a lens, a spectacle, a camera, a display apparatus (a display), a projector, etc., a transparent substrate composed of, for example, a material having transparency out of the above-described organic material, inorganic material, and hybrid material, may be also used.

Although there is no particular restriction on the position where the layer (Z) is placed in the laminate according to the present invention, a mode in which the layer (Z) constitutes the outermost layer of the laminate is preferable.

Further, the laminate having a substrate and the layer (Z) may be provided with various functional layers. Examples of the functional layers include a hard coat layer, and an antireflection (AR) layer.

Examples of the hard coat layer include a layer made of an acrylic material, and a layer made of a silica material.

Examples of the antireflection layer include a layer made of a low refractive index material, and a multilayer antireflection layer which is constituted by layering alternately a layer made of a low refractive index material, and a layer made of a high refractive index material.

The functional layer may be placed outside the substrate and the layer (Z), but also between the substrate and the layer (Z), for example, on the substrate. For example, with respect to the a hard coat layer, or an antireflection layer, a mode, in which it is placed between the substrate and the layer (Z), for example, on the substrate, is preferable.

A laminate according to the present invention may include a plurality of above-described functional layers.

When the laminate is used in an optical use, it requires generally high transparency. In such a case, as a matter of tendency, each layer of the laminate should preferably be as thin as possible. The functional layer can be provided by a publicly known method in a laminate.

In preparing the laminate, a mode, in which lamination is performed such that a layer adjacent to the layer (Z) made of the film according to the present invention contains $SiO_2$ as a main component, is preferable. If laminated so, a laminate with the layer (Z) superior in adhesion tends to be obtained.

Especially in the case of a laminate including an optical substrate and the layer (Z), since demand for antifogging performance is strong, with respect to the ratio a for a constitutional unit of a copolymer (i) expressed by the formula (1), b for a constitutional unit expressed by the formula (2), and c for a constitutional unit expressed by the formula (3), a higher ratio of a for a constitutional unit expressed by the formula (1) is preferable because higher hydrophilicity can be obtained. Specifically, preferably a for a constitutional unit expressed by the formula (1) is in a range of from 0. 990 to 0. 600, b for a constitutional unit expressed by the formula (2) is in a range of from0.005 to 0.200, and c for a constitutional unit expressed by the formula (3) is in a range of from 0.005 to 0.200, and more preferably a is in a range of from 0.980 to 0.700, b is in a range of from 0.010 to 0.150, and c is in a range of from 0.010 to 0.150.

Further, with respect to the ratio (i)/ (ii) of the weight of the copolymer (i) to the weight of the silane compound (ii) reduced to a $SiO_2$ weight, a higher ratio of a copolymer (i) tends to be preferable due to the same reason as above. The weight ratio is preferably in a range of from 99/ 1 to 40/ 60, and more preferably in a range of from 95/ 5 to 60/ 40.

With respect to the laminate, when the film is, for example, an antifogging coating film, an antifouling coating film, or an antistatic coating film, a laminate in which a substrate is coated with, for example, an antifogging coating film, an antifouling coating film, or an antistatic coating film is obtained.

For example, in a case where a substrate is a film, on a surface not provided with a film according to the present invention, an adhesive layer described below may be placed, and further a release film may be placed on a surface of the adhesive layer. If an adhesive layer is layered on one side of the substrate film, a laminate film including a film according to the present invention can be easily stuck to a glass, a mirror in a bath room, *etc*., a surface of a display material of a display, a TV set, etc., a signboard, an advertisement, an information board such as an information board, a sign for railway, road, or the like, an exterior wall of a building, a window glass, etc. as an antifogging film, or an antifouling film.

There is no particular restriction on an adhesive to be used for an adhesive layer for a laminate, etc., and a publicly known adhesive can be used. Examples of an adhesive include an acrylic adhesive, a rubber adhesive, a vinyl ether polymer adhesive, and a silicone adhesive. The thickness of an adhesive layer is ordinarily in a range of from 2 to 50 $\mu$m, and preferably in a range of from 5 to 30 $\mu$m.

Further, with respect to a film according to the present invention, or a laminate with the film laminated, a surface of the film exposed to the air may be covered with a covering material. The film covered with a covering material, or the laminate with the film can be protected from damage or fouling of the film in the course of transportation, storage, exhibition, or the like.

When a copolymer (i), or a composition containing the copolymer (i) is coated and subjected to radiation irradiation as above, the coat with a closely attached covering material may be irradiated with a radiation and cured, for

a purpose of avoiding polymerization inhibition by oxygen, such that a substrate, a film according to the present invention, and a covering material layered one on another to a laminate can be directly a final product. By doing so, a laminate protected from a damage or fouling of a film can be obtained.

Examples of a material to be used favorably as the covering material (typically a film) include vinyl alcohol polymers, such as poly (vinyl alcohol) (PVA), and an ethylene-vinyl alcohol copolymer, polyacrylamide, poly(isopropylacrylamide), polyacrylonitrile, polycarbonate (PC), poly(methyl methacrylate) (PMMA), poly(ethylene terephthalate) (PET), polystyrene (PS), and biaxially orientated polypropylene (OPP).

A laminate according to the present invention can be formed to laminates in various forms by devising an appropriate shape of a substrate. A film and a laminate obtainable according to the present invention may be used in a form of a film, a sheet, a tape, etc. The film may be used also as a primer layer.

Further, a copolymer (i), or a composition containing the copolymer (i) and a silane compound (ii) may be cured in molds in various shapes, so that cured products having various shapes, such as a film, and a formed body, can be obtained.

A film to be obtained according to the present invention is superior in hydrophilicity, durability, abrasion resistance, and weather resistance, and has high antifogging performance, antifouling performance, antistatic performance, and a quick-drying property (water evaporation).

The water contact angle of a film to be obtained according to the present invention is ordinarily 30° or less, preferably 20° or less, and more preferably 10° or less. A film with a water contact angle not higher than the upper limit has high hydrophilicity, has good affinity (wettability) with water, and superior as a hydrophilic material.

The film to be obtained according to the present invention is preferably in a state where the change in a water contact angle, before and after an ultrasonic treatment immersed in water at 25 ° C for 10 min, is ordinarily 20° or less, preferably 10° or less, and more preferably 5° or less. In such a state, a copolymer (i) or a composition, which is initially soluble in water or highly wettable with water, has been networked or immobilized by an adequately advanced reaction between groups contained in the copolymer (i) or the composition, such that the same does not dissolve any more easily in water (has been cured adequately). A film with such characteristics can be produced by curing the composition by heating, etc.

Consequently, a film to be obtained according to the present invention is useful for, for example, an antifogging material, an antifogging coating film (hereinafter, also referred to as an "antifogging coat"), an antifouling material, an antifouling coating film or a self-cleaning coat, an antistatic material, a quick-drying material or a quick-drying coat, and an antistatic coating film or a dust adhesion prevention coat.

For example, when a film according to the present invention is used as an antifogging coat, a water droplet spreads over a film surface to from a water film so that an excellent antifogging effect is exhibited. When the same is used as a self-cleaning coat, water intrudes between a dirt and a coat surface to raise the dirt and remove the same so that an excellent antifouling effect is exhibited. Further, a film according to the present invention is superior in antistatic performance, and useful for an antistatic material, and an antistatic coating film or a dust adhesion prevention coat.

A laminate to be obtained according to the present invention is also superior in hydrophilicity and durability, and useful as an antifogging material, an antifouling material, an antistatic material, etc. For example, a laminate to be obtained by laminating the film of the present invention on a substrate made of a transparent material, such as a transparent resin, and glass, can be used as a laminate superior in transparency, hydrophilicity, antifogging performance, antifouling performance, and further antistatic performance, quick-drying property, water condensation prevention performance, weather resistance, and abrasion resistance.

Therefore, a film and a laminate, to be obtained according to the present invention, can be used in a variety of uses including:

articles for transport machine represented by an automobile, a ship and an airplane, such as a body, a wheel, an exterior part and an interior part; building articles and housing articles, such as an exterior wall material, an interior wall material, flooring, furniture, bathroom articles, powder room articles, kitchen articles (*e.g.* a sink, a ventilator, and cooking range associated articles), toilet articles, and piping articles; construction materials, such as a sound-insulating board to be installed on an expressway; clothing materials, such as clothes, fabrics and fibers; optical articles or optical devices, such as a window, a mirror, an optical film, an optical disk, a contact lens, a goggle, a reflection film and a reflective plate, glasses, sunglasses, a camera, a lens, an antireflection film, a display apparatus (display devices, including a touch panel, a flat panel, and an electronic paper), a projector, and a shield; illumination articles, such as a lamp part and a lighting article; industrial articles, such as cooler or heat exchange fins; electric and electronic articles, such as an electric appliance part, and a wiring article; printing articles, such as an ink jet registration plate, and a printing primer; and commodities, such as a cosmetic container.

[Examples]

The invention will be described below in more detail by way of Examples, etc., provided that the invention be not limited only to the scope of the following Examples.
The structure of a copolymer (i) was evaluated herein as follows.

<Relative composition of copolymer>

The ratio among a unit (1) having a sulfonic acid-containing group, a unit (2) having an epoxy group, and a unit (3) having a trialkoxysilyl group, namely the ratio (1) / (2) / (3) was analyzed by $^{13}C$-NMR. The analysis conditions are described below.

Analysis conditions

* Apparatus: AVANCE III Cryo-500 Modell nuclear magnetic resonance apparatus, produced by Bruker BioSpin
* Observed nucleus: $^{13}C$ (125 MHz)
* Measurement mode: single pulse proton broad band decoupling
* Pulse width: 45° (5.0 μsec)
* Number of points: 64 K
* Measurement range: -25 to 225 ppm
* Number of scans: 1,000
* Measurement solvent: $D_2O$
* Measurement temperature: room temperature
* Sample concentration: 40 mg/ 0.6 mL-$D_2O$

Analysis of unit ratio (1) / (2) / (3)

The unit ratio was calculated in terms of the integrated intensity ratio among the peak of the f-carbon (near 57 to 59 ppm) in the following formula (200), the peak of the k-carbon (near 51 to 52 ppm) in the following Formula (300), and the peak of the k-carbon (near 4 to 6 ppm) in the following Formula (400).
That is, the unit ratio was determined as:

Unit ratio (1)/ (2)/ (3) = Integrated intensity of f-carbon peak/ Integrated intensity of k-carbon peak/ Integrated intensity of t-carbon peak

[Chem. Formula 24]

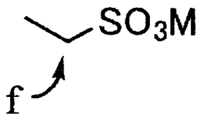

(2 0 0)

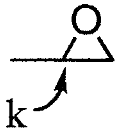

(3 0 0)

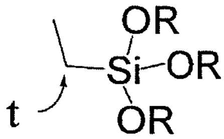

(4 0 0)

<Weight-average molecular weight (Mw), Dispersion (Mw/Mn)>

Mw (weight-average molecular weigh) and Mw/ Mn (dispersion = weight-average molecular weight/ number-average molecular weight) were analyzed by GPC. The analysis conditions are described below.

<u>Analysis conditions</u>

* Apparatus: GPC-900, JASCO Corporation
* Column: Shodex Asahipac "GF-7M HQ", Φ7. 5 mm × 300 mm; Showa Denko K.K.
* Measuring temperature: 40°C
* Eluent: water/ methanol/ $NaHPO_4$/ $NaHPO_4 \cdot 2H_2O$ = 850.0/ 150.0/ 2.7/ 7.3 (weight ratio)
* Flow rate: 0.5 mL/min

In the present invention, the physical properties of a coating film were evaluated as described below.

<Measurement of water contact angle>

Using a water contact angle measuring apparatus, model CA-V produced by Kyowa Interface Science Co., Ltd., the water contact angle was measured at 3 spots for each sample and the average of the measured values was defined as the water contact angle value.

<Measurement of haze>

Using a haze meter NDH2000 produced by Nippon Denshoku Industries Co., Ltd., the haze was measured at 4 spots for each sample and the average of the measured values was defined as the haze value.

<Scratch resistance test>

Using a steel wool #0000, a sample was rubbed back and forth 10 times with a certain load. It was rated as "A", when no scratch was made; rated as "B", when 1 to 5 scratches were made; and rated as "C", when 6 to countless scratches were made.

<Taber abrasion test (JIS K 7204)>

Measuring apparatus: Rotary abrasion tester, Toyo Seiki Seisaku-sho, Ltd.
Abrasive wheel: C180 OXF

Load: 500 g (250 g + 250 g) × 2

<Evaluation of adhesion (JIS K 7204)>

The adhesion was evaluation by a cross-cut tape peel test.

<Evaluation of antifogging performance>

It was rated as "A", when a sample was not fogged by exhaled air, and rated as "C", when a sample was fogged.

<Evaluation of antifouling performance>

A mark was put using an oil-based marker, "Mckee Extra Fine" (black, product number: MO-120-MC-BK) produced by Zebra Co., Ltd. Then a water droplet was dripped on the mark, left to stand for 30 sec, and then wiped off with tissue paper. Rating of "A" was given, when the mark could be wiped out, and rating of "C" was given, when the mark could not be wiped off and remained.

<Measurement of degree of gradient>

A sample composed of a substrate 10 and a coating layer 20 formed thereon was cut on an angle according to the sample preparation shown in Figure 2, and using a time-of-flight secondary ion mass spectrometer (TOF-SIMS) the sulfonic acid concentration in the outer surface (Sa) and the sulfonic acid concentration at the midpoint between the interface in contact with the substrate 10 and the outer surface (Da) were measured. From these values, the degree of gradient (Sa/Da), which is represented by the ratio of the sulfone concentration in the outer surface of the film exposed to the air with respect to the sulfone concentration at the midpoint between the inner surface and the outer surface of the film, was determined. In this regard, in the laminate according to the present invention, a film according to the present invention constitutes the coating layer 20.

<u>Analyzer and analysis conditions</u>

TOF-SIMS: TOF-SIMS 5, produced by ION-TOF GmbH
Primary ion: $Bi_3^{2+}$ (acceleration voltage: 25 kV)
Measurement area: 300 to 340 $\mu m^2$

For measurement, an electron gun for charge compensation was used.

<u>Sample preparation, *etc*.</u>

As shown in Figure 2, a sample in which a coating layer 20 was provided on a surface of a substrate 10 was precisely cut on an angle in the cutting direction 30. Then, a sample in a size of about 10 × 10 $mm^2$ was sliced out, a mesh was placed on a measuring surface thereof, and the sample was fixed on a sample holder. Then, using the time-of-flight secondary ion mass spectrometer (TOF-SIMS), sulfonic acid concentrations at a coating layer surface 40 exposed to the air and at a coating layer inside 50, which is an inner part of the film (the point of 1/2 film thickness, the inner surface of the coating layer extending to the substrate 10), were measured.

<u>Evaluation</u>

Evaluation was performed using the following calculation formula. In this regard, for the ionic concentration at each measurement point, a relative intensity (with respect to the total detected ions) was used.

Degree of gradient Sa/Da (ratio of sulfonic acid concentrations, degree of gradient) = Sulfonic acid concentration at the coating layer surface 40/ Sulfonic acid concentration at the point of 1/2 film thickness of the coating layer 20

<Measurement of film thickness>

Measuring apparatus and condition
Apparatus: field-emission transmission electron microscope (FE-TEM); JEM-2200FS (produced by JEOL Ltd.)
Acceleration voltage: 200 kV
FIB (Focused Ion Beam System) processing equipment: SMI2050 (produced by Seiko Instruments Inc.)

Sample preparation, *etc.*

A central part of a convex surface of a sample was sliced out, and the outermost surface of the sample underwent Pt coating and carbon vapor deposition. This sample was processed by FIB processing to a thin film and used as a measurement specimen. The measurement specimen was observed with the field-emission transmission electron microscope (FE-TEM) to determine the film thickness.

<Measurement of glass transition temperature Tg>

Measuring apparatus: Automated differential scanning calorimeter DSC-60A, Shimadzu Corporation
Measurement temperature range: -30 to 200°C (temperature increase rate 20°C /min)
Reference: $Al_2O_3$ 10 mg
Sample: 10 mg

<Adhesion test>

A test was conducted according to JIS K5600-5-6 (adhesion - cross-cut method). In this connection, an evaluation was conducted based of the number of cells not peeled off (namely, remained intact) out of 25 cells, provided that the evaluation was expressed by the number as reduced to 100 cells.

<Evaluation of color L*a*b*>

The color was measured by a colorimeter "CR-400", Konica Minolta Optics, Inc.

[Synthesis example 1]

<Production of copolymer CH120417, source material concentration 15 wt%>

First, 559. 6 g of methanol, which was degassed under reduced pressure, was charged in a reaction flask, to which 25.0 g (0.379 mol) of KOH flakes with purity of 85 wt% were added gradually with stirring to be dissolved completely. Then, 81.0 g (0.382 mol) of acrylamide-t-butyl sulfonic acid (hereinafter abbreviated as "ATBS") was charged dividedly for neutralization (pH = 7.4) to yield a neutralized mixture containing acrylamide-t-butyl sulfonic acid potassium salt (hereinafter abbreviated as "ATBS-K").

Next a mixture liquid of 2.75 g (0.0191 mol) of glycidyl methacrylate (hereinafter abbreviated as "GMA"), 5.63 g (0.0191 mol) of methacryloyloxypropyltrimethoxysilane (hereinafter abbreviated as "KBM-503"), and 2.0 g of methanol, and a mixture liquid of 0.14 g of t-butylperoxy-2-ethyl hexanoate (hereinafter abbreviated as "PERBUTYL-O") as a

polymerization initiator and 1.4 g of methanol were prepared respectively. Each of them was charged dividedly in 3 portions over 2 hours into a reaction flask in which the neutralized mixture was heated at reflux (internal temperature 66°C). After charging, polymerization was carried out further for 5 hours with heating at reflux and stirring.

A reaction product was cooled down to room temperature, and a crystallized copolymer was filtrated. The obtained filter cake was rinsed with methanol, and dried thoroughly at 50 °C under reduced pressure (below 100 mm Hg) until a constant weight is reached to obtain 100.1 g of a copolymer in a white color (yield 96%).

The obtained copolymer was analyzed by GPC to find the weight-average molecular weight Mw = 96, 000, and Mw/Mn = 2.9. Further, as the result of $^{13}C$-NMR analysis, the constitutional unit ratio of the copolymer was ATBS-K unit/ GMA unit/ KBM-503 unit = 0.86/ 0.08/ 0.06. Meanwhile, a unit derived from a ring opened epoxy group was not detected. Further, the obtained polymer was analyzed by DSC (differential scanning calorimetry, analyzed in a range of from -30 to 200°C) to detect Tg (glass transition temperature) solely at 52°C.

[Synthesis example 2]

<Production of copolymer ATBS-K/ GMA, CH110901>

First, 535. 5 g of methanol, which was degassed under reduced pressure, was charged in a reaction flask, to which 23.6 g (0.357 mol) of KOH flakes with purity of 85 wt% were added gradually with stirring to be dissolved completely. Next, 75.7 g (0.357 mol) of ATBS was charged dividedly for neutralization (pH = 7.5) to yield a neutralized mixture containing ATBS-K.

Next a mixture liquid of 5.14 g (0.036 mol) of GMA and 0.13 g of PERBUTYL-O as a polymerization initiator was charged into a reaction flask in which the neutralized mixture was heated at reflux (internal temperature 63°C). After charging, polymerization was carried out further for 4.5 hours with heating at reflux and stirring.

A reaction product was cooled down to room temperature, and a crystallized copolymer was filtrated. The obtained filter cake was rinsed with methanol, and dried thoroughly at 50 ° C under reduced pressure (below 100 mm Hg) until a constant weight is reached to obtain 88.8 g of a copolymer in a white color (yield 94%).

The obtained copolymer was analyzed by GPC to find the weight-average molecular weight Mw = 163, 000, and Mw/Mn = 3.4. Further, as the result of $^{13}C$-NMR analysis, the constitutional unit ratio of the copolymer was ATBS-K unit/ GMA unit = 0.87/ 0.13. Meanwhile, a unit derived from a ring opened epoxy group was not detected.

[Synthesis example 3]

<Production of copolymer ATBS-K/ KBM-503, CH111011>

First, 400.0 g of methanol, which was degassed under reduced pressure, was charged in a reaction flask, to which 15.7 g (0.237 mol) of KOH flakes with purity of 85 wt% were added gradually with stirring to be dissolved completely. Next, 50.1 g (0.237 mol) of ATBS was charged dividedly for neutralization (pH = 7.5) to yield a neutralized mixture containing ATBS-K.

Next a mixture liquid of 5.99 g (0.0237 mol) of KBM-503 and 0.08 g of PERBUTYL-O as a polymerization initiator was charged into a reaction flask in which the neutralized mixture was heated at reflux (internal temperature 63°C). After charging, polymerization was carried out further for 4.5 hours with heating at reflux and stirring.

A reaction product was cooled down to room temperature, and a crystallized copolymer was filtrated. The obtained filter cake was rinsed with methanol, and dried thoroughly at 50 ° C under reduced pressure (below 100 mm Hg) until a constant weight is reached to obtain 65.4 g of a copolymer in a white color (yield 83%).

The obtained copolymer was analyzed by GPC to find the weight-average molecular weight Mw = 102, 000, and Mw/Mn = 2.8. Further, as the result of $^{13}C$-NMR analysis, the constitutional unit ratio of the copolymer was ATBS-K unit/ KBM-503 unit = 0.92/0.08.

[Synthesis example 4]

<Production of copolymer CH120531, source material concentration 5 wt%>

First, 1,156.5 g of methanol, which was degassed under reduced pressure, was charged in a reaction flask, to which 15.0 g (0.227 mol) of KOH flakes with purity of 85 wt% were added gradually with stirring to be dissolved completely. Then, 48.7 g (0.230 mol) of ATBS was charged dividedly for neutralization (pH = 7.5) to yield a neutralized mixture containing ATBS-K.

Next a mixture liquid of 1.63 g (0.0115 mol) of GMA, and 3.34 g (0.0115 mol) of KBM-503, and a mixture liquid of 0.32 g of PERBUTYL-O as a polymerization initiator and 3.2 g of methanol were prepared respectively. Each of them

was charged dividedly in 3 portions over 2 hours into a reaction flask in which the neutralized mixture was heated at reflux (internal temperature 63°C). After charging, polymerization was carried out further for 15 hours with heating at reflux and stirring.

A reaction product was cooled down to room temperature, and a crystallized copolymer was filtrated. The obtained filter cake was rinsed with methanol, and dried thoroughly at 50°C under reduced pressure (below 100 mm Hg) until a constant weight is reached to obtain 52.2 g of a copolymer in a white color (yield 83%).

The obtained copolymer was analyzed by GPC to find the weight-average molecular weight Mw = 34, 000, and Mw/Mn = 1.9. Further, as the result of $^{13}$C-NMR analysis, the constitutional unit ratio of the copolymer was ATBS-K unit/ GMA unit/ KBM-503 unit = 0.88/ 0.06/ 0.06. Meanwhile, a unit derived from a ring opened epoxy group was not detected. Further, the obtained polymer was analyzed by DSC (differential scanning calorimetry, analyzed in a range of from -30 to 200°C) to detect Tg (glass transition temperature) solely at 55°C.

[Synthesis example 5]

<Production of copolymer CH130117, source material concentration 10 wt%>

First, 1,062.1 g of methanol, which was degassed under reduced pressure, was charged in a reaction flask, to which 28.0 g (0.424 mol) of KOH flakes with purity of 85 wt% were added gradually with stirring to be dissolved completely. Then, 89.9 g (0.424 mol) of ATBS was charged dividedly for neutralization (pH = 7.6) to yield a neutralized mixture containing ATBS-K.

Next a mixture liquid of 11.3 g (0.0795 mol) of GMA, and 7.70 g (0.0265 mol) of methacryloyloxypropyltriethoxysilane (hereinafter abbreviated as "KBE 503"), and a mixture liquid of 3.44 g of PERBUTYL-O as a polymerization initiator and 34.4 g of methanol were prepared respectively. Each of them was charged dividedly in 3 portions over 2 hours into a reaction flask in which the neutralized mixture was heated at reflux (internal temperature 63°C). After charging, polymerization was carried out further for 6 hours with heating at reflux and stirring.

A reaction product was cooled down to room temperature, and a crystallized copolymer was filtrated. The obtained filter cake was rinsed with methanol, and dried thoroughly at 50 ° C under reduced pressure (below 100 mm Hg) until a constant weight is reached to obtain 92.5 g of a copolymer in a white color (yield 74%).

The obtained copolymer was analyzed by GPC to find the weight-average molecular weight Mw = 71, 000, and Mw/Mn = 2.5. Further, as the result of $^{13}$C-NMR analysis, the constitutional unit ratio of the copolymer was ATBS-K unit/ GMA unit/ KBM-503 unit = 0.82/ 0.14/ 0.04. Meanwhile, a unit derived from a ring opened epoxy group was not detected.

[Synthesis example 6]

<Production of copolymer CH120517, source material concentration 15 wt%>

First, 550. 0 g of methanol, which was degassed under reduced pressure, was charged in a reaction flask, to which 25.0 g (0.379 mol) of KOH flakes with purity of 85 wt% were added gradually with stirring to be dissolved completely. Then, 81.0 g (0.382 mol) of ATBS was charged dividedly for neutralization (pH = 7.6) to yield a neutralized mixture containing ATBS-K.

Next a mixture liquid of 5.43 g (0.0382 mol) of GMA, and 11.10 g (0.0382 mol) of KBM-503, and a mixture liquid of 0.83 g of PERBUTYL-O as a polymerization initiator and 8. 3 g of methanol were prepared respectively. Each of them was charged dividedly in 3 portions over 1 hour into a reaction flask in which the neutralized mixture was heated at reflux (internal temperature 63°C). After charging, polymerization was carried out further for 5 hours with heating at reflux and stirring.

A reaction product was cooled down to room temperature, and a crystallized copolymer was filtrated. The obtained filter cake was rinsed with methanol, and dried thoroughly at 50 °C under reduced pressure (below 100 mm Hg) until a constant weight is reached to obtain 101.8 g of a copolymer in a white color (yield 91%).

The obtained copolymer was analyzed by GPC to find the weight-average molecular weight Mw = 145,000, and Mw/Mn = 3.7. Further, as the result of $^{13}$C-NMR analysis, the constitutional unit ratio of the copolymer was ATBS-K unit/ GMA unit/ KBM-503 unit = 0.83/ 0.09/ 0.08. Meanwhile, a unit derived from a ring opened epoxy group was not detected.

[Synthesis example 7]

<Production of copolymer CH130115, source material concentration 10 wt%>

First, 1,032.9 g of methanol, which was degassed under reduced pressure, was charged in a reaction flask, to

which 28.0 g (0.424 mol) of KOH flakes with purity of 85 wt% were added gradually with stirring to be dissolved completely. Then, 89.9 g (0.424 mol) of ATBS was charged dividedly for neutralization (pH = 7.6) to yield a neutralized mixture containing ATBS-K.

Next a mixture liquid of 3.77 g (0.0265 mol) of GMA, and 23.10 g (0.0795 mol) of KBE-503, and a mixture liquid of 3.44 g of PERBUTYL-O as a polymerization initiator and 34.4 g of methanol were prepared respectively. Each of them was charged dividedly in 3 portions over 2 hours into a reaction flask in which the neutralized mixture was heated at reflux (internal temperature 65°C). After charging, polymerization was carried out further for 6 hours with heating at reflux and stirring.

A reaction product was cooled down to room temperature, and a crystallized polymer was filtrated. The obtained filter cake was rinsed with methanol, and dried thoroughly at 50 °C under reduced pressure (below 100 mm Hg) until a constant weight is reached to obtain 69.2 g of a copolymer in a white color (yield 52%).

The obtained copolymer was analyzed by GPC to find the weight-average molecular weight Mw = 68, 000, and Mw/Mn = 2.5. Further, as the result of $^{13}$C-NMR analysis, the constitutional unit ratio of the copolymer was ATBS-K unit/ GMA unit/ KBM-503 unit = 0.86/ 0.05/ 0.09. Meanwhile, a unit derived from a ring opened epoxy group was not detected.

[Synthesis example 8]

<Production of copolymer CH121112, source material concentration 10 wt%>

First, 556. 4 g of methanol, which was degassed under reduced pressure, was charged in a reaction flask, to which 13.0 g (0.197 mol) of KOH flakes with purity of 85 wt% were added gradually with stirring to be dissolved completely. Then, 41.7 g (0.197 mol) of ATBS was charged dividedly for neutralization (pH = 7.6) to yield a neutralized mixture containing ATBS-K.

Next a mixture liquid of 6.00 g (0.0422 mol) of GMA, and 10.48 g (0.0422 mol) of KBM-503, and a mixture liquid of 1.83 g of PERBUTYL-O as a polymerization initiator and 1.8 g of methanol were prepared respectively. Each of them was charged dividedly in 3 portions over 2 hours into a reaction flask in which the neutralized mixture was heated at reflux (internal temperature 66°C). After charging, polymerization was carried out further for 6 hours with heating at reflux and stirring.

A reaction product was cooled down to room temperature, and a crystallized polymer was filtrated. The obtained filter cake was rinsed with methanol, and dried thoroughly at 50 °C under reduced pressure (below 100 mm Hg) until a constant weight is reached to obtain 36.4 g of a copolymer in a white color (yield 55%).

The obtained copolymer was analyzed by GPC to find the weight-average molecular weight Mw = 112, 000, and Mw/Mn = 4.6. Further, as the result of $^{13}$C-NMR analysis, the constitutional unit ratio of the copolymer was ATBS-K unit/ GMA unit/ KBM-503 unit = 0.77/ 0.11/ 0.12. Meanwhile, a unit derived from a ring opened epoxy group was not detected.

[Synthesis example 9]

<Production of copolymer CH121029, source material concentration 10 wt%>

First, 543. 0 g of methanol, which was degassed under reduced pressure, was charged in a reaction flask, to which 8.00 g (0.121 mol) of KOH flakes with purity of 85 wt% were added gradually with stirring to be dissolved completely. Then, 25.7 g (0.121 mol) of ATBS was charged dividedly for neutralization (pH = 7.6) to yield a neutralized mixture containing ATBS-K.

Next a mixture liquid of 12. 92 g (0.0909 mol) of GMA, and 22.58 g (0.0909 mol) of KBM-503, and a mixture liquid of 6.56 g of PERBUTYL-O as a polymerization initiator and 6. 6 g of methanol were prepared respectively. Each of them was charged dividedly in 3 portions over 2 hours into a reaction flask in which the neutralized mixture was heated at reflux (internal temperature 65°C). After charging, polymerization was carried out further for 8 hours with heating at reflux and stirring.

Then the obtained polymerization solution was concentrated under reduced pressure in a rotary evaporator to obtain a residue, to which 590 g of isopropanol and 590 g of cyclohexane were added and mixed vigorously.

The precipitated polymer was filtrated, and the obtained filter cake was rinsed with ethanol, and dried thoroughly at 50 °C under reduced pressure (below 100 mm Hg) until a constant weight is reached to obtain 58.9 g of a copolymer in a white color (yield 89%).

The obtained copolymer was analyzed by GPC to find the weight-average molecular weight Mw = 14, 000, and Mw/Mn = 1.8. Further, as the result of $^{13}$C-NMR analysis, the constitutional unit ratio of the copolymer was ATBS-K unit/ GMA unit/ KBM-503 unit = 0.46/ 0.29/ 0.25. Meanwhile, a unit derived from a ring opened epoxy group was not detected.

[Synthesis example 10]

<Production of copolymer CH130219, source material concentration 10 wt%>

First, 52.43 g (0.2425 mol) of 3-sulfopropyl acrylate sodium salt (hereinafter abbreviated as "SPA-Na"), 2.43 g (0.0121 mol) of 4-glycidyloxybutyl acrylate (hereinafter abbreviated as "GOBA"), 2.84 g (0.0121 mol) of 3-acryloyloxypropyltrimethoxysilane (hereinafter abbreviated as "KBM-5103"), and 488.9 g of methanol, which was degassed under reduced pressure, were charged in a reaction flask to prepare a mixture liquid.

Next, to this mixture liquid in a state of being heated at reflux (internal temperature 65°C), a mixture liquid of 0.12 g of PERBUTYL-O and 1.2 g of methanol was charged, thereafter polymerization was carried out for another 4 hours with heating at reflux and stirring.

Then the obtained polymerization solution was concentrated under reduced pressure in a rotary evaporator to obtain a residue, to which 400 g of isopropanol and 400 g of cyclohexane were added and mixed vigorously.

The precipitated polymer was filtrated, and the obtained filter cake was rinsed with ethanol, and dried thoroughly at 50°C under reduced pressure (below 100 mm Hg) until a constant weight is reached to obtain 52.5 g of a copolymer in a white color (yield 91%).

The obtained copolymer was analyzed by GPC to find the weight-average molecular weight Mw = 96, 000, and Mw/Mn = 3.9. Further, as the result of $^{13}$C-NMR analysis, the constitutional unit ratio of the copolymer was SPA-Na unit/ GOBA unit/ KBM-5103 unit = 0.91/ 0.05/ 0.04. Meanwhile, a unit derived from a ring opened epoxy group was not detected.

[Synthesis example 11]

<Production of copolymer CH130319, source material concentration 10 wt%>

First, 1,019.3 g of methanol, which was degassed under reduced pressure, was charged in a reaction flask, to which 30.0 g (0.455 mol) of KOH flakes with purity of 85 wt% were added gradually with stirring to be dissolved completely. Then, 97.5 g (0.460 mol) of ATBS was charged dividedly for neutralization (pH = 7.6) to yield a neutralized mixture containing ATBS-K.

Next a mixture liquid of 2.06 g (0.0145 mol) of GMA, and 4.21 g (0.0145 mol) of KBE-503, and a mixture liquid of 3.14 g of PERBUTYL-O as a polymerization initiator and 31.4 g of methanol were prepared respectively. Each of them was charged dividedly in 3 portions over 2 hours into a reaction flask in which the neutralized mixture was heated at reflux (internal temperature 67°C). After charging, polymerization was carried out further for 5 hours with heating at reflux and stirring.

After cooling, the precipitated copolymer was filtrated, and the obtained filter cake was rinsed with methanol, and dried thoroughly at 50°C under reduced pressure (below 100 mm Hg) until a constant weight is reached to obtain 106.7 g of a copolymer in a white color (yield 89%).

The obtained copolymer was analyzed by GPC to find the weight-average molecular weight Mw = 54, 000, and Mw/Mn = 2.3. Further, as the result of $^{13}$C-NMR analysis, the constitutional unit ratio of the copolymer was ATBS-K unit/ GMA unit/ KBE-503 unit = 0.94/ 0.03/ 0.03. Meanwhile, a unit derived from a ring opened epoxy group was not detected.

[Example 1A]

(Coating 1 on optical substrate having antireflection layer)

<Preparation of optical substrate>

A homogeneous solution was prepared by mixing 50.6 g of MR-8A™, 23.9 g of MR-8B1™, and 25.5 g of MR-8B2™ (all of them are produced by Mitsui Chemicals, Inc.), 0.035 g of dibutyltin dichloride, 1.5 g of an ultraviolet absorber (Trade name: Biosorb 583, produced by Kyodo Chemical Co., Ltd.), and 0.1 g of an internal mold releasing agent (Internal releasing agent for the MR (trade name), produced by Mitsui Chemicals, Inc.).

After defoaming the solution under a reduced pressure of 400 Pa for 1 hour, the solution was passed through a filter made of 1-μm PTFE, and the obtained filtrate was cast into a mold composed of a glass mold and a tape. The mold filled with the solution was placed in a polymerization oven, and the solution was allowed to cure by raising the temperature gradually from 25°C to 120°C over 21 hours.

After cooling down to room temperature, the tape and the glass mold were released from the mold and a plastic lens formed inside was taken out. Then, in order to remove strain, the plastic lens was heated again at 120°C for 2 hours and subsequently slowly cooled to room temperature. The thus obtained MR-8™ plastic lens had physical properties favorable to a plastic lens for spectacles, with a refractive index ($n_e$) of 1.60, an Abbe number ($v_e$) of 40, a specific gravity

of 1.29 and heat resistance of 90°C or higher.

Next, on the surface of this MR-8™ plastic lens, a hard coat layer containing polysiloxane as a main component (hereinafter abbreviated as "HC layer") was formed by a sol gel reaction, etc. to yield an MR-8™ spectacle lens having a HC layer on the surface.

Further, an MR-8™ spectacle lens laminated with a layer having a multilayer structure with antireflection performance (hereinafter abbreviated as "AR layer") was obtained by forming a multilayer structure layering one after another alternately a layer containing $ZrO_2$ as a main component and a layer containing $SiO_2$ as a main component (the final outer surface was a layer containing $SiO_2$ as a main component) on a surface of the obtained MR-8™ spectacle lens having a HC layer (on the HC layer).

<Preparation of coating composition-100>

To 0.5 g of the copolymer CH120531 prepared in Synthesis example 4, 2.5 g of water was added to form an aqueous solution, to which 170.31 g of EGM, 1. 3 g of TEOS, and 0. 39 g of 5 wt%-sulfuric acid were added. The obtained mixture liquid was passed through a filter with an average pore size of 0. 5 μm to obtain a colorless, transparent coating composition-100 with a solid content (total amount of copolymer and TEOS as reduced to $SiO_2$) (NV) of 0.5 wt%. The weight ratio of polymer/ TEOS (as reduced to $SiO_2$) in the composition was 4/ 3 (57/ 43).

<Formation and evaluation of coating film>

Onto a surface of an AR layer of the MR-8™ spectacle lens having an AR layer, the coating composition-100 was applied by a spin coater (spinning speed 4,000 rpm), and heated at 80 °C for 3 hours. After cooling down to room temperature, the coating film surface was washed with water, and dried in a warm-air drier at 40°C to obtain an MR-8™ spectacle lens with a 4 nm-thick coating film formed on the AR layer. The obtained MR-8™ spectacle lens (laminate) was evaluated at room temperature. The obtained MR-8™ spectacle lens (laminate) with the formed coating film was transparent, highly hydrophilic, and superior in antifogging and antifouling performance.

The obtained MR-8™ spectacle lens (laminate) with the formed coating film was dipped in pure water and irradiated with ultrasonic waves (output 240 W, frequency 40 Hz), and evaluated with respect to water resistance (durability of hydrophilicity). The results are entered in Table 1, and Table 2. Further, the measurement result of reflectance is shown in Figure 4.

[Comparative Examples 1A to 4A]

Currently commercially-supplied antifogging spectacle lenses (spectacle lens requiring periodical application of a surfactant designated by the lens producer) were coated with a surfactant designated by the producer, and evaluated similarly as in Example 1A. The results are entered in Table 1.

[Comparative Example 5A] (Blank evaluation)

An MR-8™ spectacle lens having an AR layer on the surface was evaluated without any other treatment. The results are entered in Table 1, and Table 2. Further, the measurement result of reflectance is shown in Figure 4.
[Table 1]

Table 1

| | Product name | Antireflection performance * | Dipped in water(25°c) Ultrasonic irradiation time | | | | | |
|---|---|---|---|---|---|---|---|---|
| | | | Evaluation item | 0 min | 0.2 min | 1 min | 10 min | 30 min |
| Example 1A | MR-8™ lens, on which a hydrophilic coating film according to the present invention is formed | A | Water contact angle | 4 | 4 | 4 | 4 | 4 |
| | | | Antifogging performanceagainst exhaled air | A | A | A | A | A |
| | | | Antifouling performance | A | A | A | A | A |

(continued)

| | Product name | Antireflection performance * | Dipped in water(25°c) Ultrasonic irradiation time | | | | | |
|---|---|---|---|---|---|---|---|---|
| | | | Evaluation item | 0 min | 0.2 min | 1 min | 10 min | 30 min |
| Comparative Example 1A | Tokai Optical Co., Ltd., Foggy Guard Coating | - | Water contact angle | 25 | 46 | | | |
| | | | Antifogging performance against exhaled air | A | C | | | |
| Comparative Example 2A | Nikon-Essilor Co., Ltd. Optifog Coat | - | Water contact angle | 4 | 33 | | | |
| | | | Antifogging performance against exhaled air | A | C | | | |
| Comparative Example 3A | Showa Opt. Co., Ltd. Crystal Coat | - | Water contact angle | 4 | 15 | 20 | | |
| | | | Antifogging performance against exhaled air | A | A | C | | |
| Comparative Example 4A | Seiko Optical Products Co., Ltd. Fogless Coat | - | Water contact angle | 4 | 6 | 17 | 16 | |
| | | | Antifogging performance against exhaled air | A | A | C | C | |
| Comparative Example 5A | MR-8™ lens | A | Water contact angle | 20 | | | | |
| | | | Antifogging performance against exhaled air | C | | | | |
| | | | Antifouling performance | C | | | | |
| * It was rated by visual inspection as "A", when the reflection of an image was weak and the see-through range was deep, and rated as "C", when the reflection of an image was strong and the see-through range was shallow. | | | | | | | | |

[Reference Experimental Example 2A]

<Preparation of coating composition-101>

To 0.5 g of a polymer of the copolymer CH120531 prepared in Synthesis example 4, 2.5 g of water was added to form an aqueous solution, to which 39.1 g of EGM, 1.3 g of TEOS, and 0.39 g of 5 wt%-sulfuric acid were added. The obtained mixture liquid was passed through a filter with an average pore size of 0.5 $\mu$m to obtain a colorless, transparent coating composition-101 with a solid content (total amount of copolymer and TEOS as reduced to $SiO_2$) (NV) of 2.0 wt%. The weight ratio of polymer/ TEOS (as reduced to $SiO_2$) in the composition was 4/ 3 (57/ 43).

<Formation and evaluation of coating film>

Onto a surface of a HC layer of the MR-8™ spectacle lens having a HC layer, the coating composition-101 (solid content (NV) 2.0 wt%) was applied by a spin coater (spinning speed 4,000 rpm), and heated at 80°C for 3 hours. After cooling down to room temperature, the coating film surface was washed with water, and dried in a warm-air drier at 40°C to obtain an MR-8™ spectacle lens with a 140 nm-thick coating film formed on the HC layer. The obtained MR-8™ spectacle lens (laminate) was evaluated at room temperature. The results are entered in Table 2.

[Example 3A]

Onto a surface of a well washed glass plate (the water contact angle of the surface was less than 8°), the coating composition-100 (solid content (NV) 0.5wt%) prepared in Example 1A was applied by a spin coater (spinning

speed 4,000 rpm), and heated at 80 ° C for 3 hours. After cooling down to room temperature, the coating film surface was washed with water, and dried in a warm-air drier at 40°C to obtain a glass plate provided with a 4 nm-thick coating film. The film was evaluated at room temperature. The results are entered in Table 2.

[Example 4A]

<Preparation of coating composition-103>

To 0.5 g of the copolymer CH130115 prepared in Synthesis example 7, 2.5 g of water was added to form an aqueous solution, to which 170.31 g of EGM, 1. 3 g of TEOS, and 0.39 g of 5 wt%-sulfuric acid were added. The obtained mixture liquid was passed through a filter with an average pore size of 0. 5 μm to obtain a colorless, transparent coating composition-103 with a solid content (total amount of copolymer and TEOS as reduced to $SiO_2$) (NV) of 0.5 wt%. The weight ratio of polymer/ TEOS (as reduced to $SiO_2$) in the composition was 4/ 3 (57/ 43).

<Formation and evaluation of coating film>

Onto a surface of an AR layer of the MR-8™ spectacle lens having an AR layer, the coating composition-103 prepared in Example 4A (solid content (NV) 0.5 wt%) was applied by a spin coater (spinning speed 4,000 rpm), and heated at 80 °C for 3 hours. After cooling down to room temperature, the coating film surface was washed with water, and dried in a warm-air drier at 40 °C to obtain an MR-8™ spectacle lens with a 4 nm-thick coating film formed on the AR layer. The obtained MR-8™ spectacle lens (laminate) was evaluated at room temperature. The results are entered in Table 2.

[Example 5A]

<Preparation of coating composition-104>

To 0.5 g of the copolymer CH121112 prepared in Synthesis example 8, 2.5 g of water was added to form an aqueous solution, to which 96.7 g of EGM, and 0.23 g of 5 wt%-sulfuric acid were added. The obtained mixture liquid was passed through a filter with an average pore size of 0.5 μm to obtain a colorless, transparent coating composition-104 with a solid content (NV) of 0.5 wt%.

<Formation and evaluation of coating film>

Onto a surface of an AR layer of the MR-8™ spectacle lens having an AR layer, the coating composition-104 prepared in Example 5A (solid content (NV) 0.5 wt%) was applied by a spin coater (spinning speed 4,000 rpm), and heated at 80 °C for 3 hours. After cooling down to room temperature, the coating film surface was washed with water, and dried in a warm-air drier at 40°C to obtain an MR-8™ spectacle lens with a 4 nm-thick coating film formed on the AR layer. The obtained MR-8™ spectacle lens (laminate) was evaluated at room temperature. The results are entered in Table 2.
[Table 2]

Table 2

| | | Example 1A | Reference Experimental Example 2A | Example 3A | Example 4A | Example 5A | Comparative Example 5A |
|---|---|---|---|---|---|---|---|
| Polymer (sulfonic acid unit molar ratio) | | CH120531 (0.88) | CH120531 (0.88) | CH120531 (0.88) | CH130115 (0.86) | CH12112 (0.77) | None |
| Coating surface (substrate) | | AR layer | HC layer | glass | AR layer | AR layer | AR layer |
| Coating concentration [%] | | 0.5 | 2.0 | 0.5 | 0.5 | 0.5 | - |
| Film thickness of hydrophilic layer [nm] | | 4 | 140 | 4 | 4 | 4 | 0 (None) |
| Polymer/ $SiO_2$ | | 1/ 0.75 | 1/ 0.75 | 1/ 0.75 | 1/ 0.75 | 1/ 0 | - |
| Appearance | | transparent | transparent | transparent | transparent | transparent | transparent |
| Contact angle [°] | After curing | 3.1 | 4.8 | 3.9 | 5.8 | 5.4 | 20.0 |
| | After water washing | 2.8 | 4.5 | 4.8 | 5.5 | 9.9 | - |
| Antifogging performance against exhaled air | | A | A | A | A | A | C |
| Antifouling performance | | A | A | A | A | A | C |
| Adhesion | | 100/100 | 100/100 | 100/100 | 100/100 | 100/100 | 100/100 |
| Antireflection performance (Visual inspection) | | A | | | A | A | A |
| 450-750 nm Average reflectance (single side, Figure 4) | | 1.3% | | | | | 1.3% |

[Example 1B] (Formation of film on silane coupling agent primer layer)

<Preparation of priming composition-20>

To 0.5 g of bis(trimethoxysilylpropyl)amine (hereinafter abbreviated as "KBM-666P") that is a silane coupling agent, 94.5 g of EGM, and 5.0 g of water were added to prepare a priming composition-20 with a solid content of 0.5 wt%.

<Preparation of coating composition-20>

With 1.25 g of the copolymer CH120531 prepared in Synthesis example 4, 62.5 g of water was mixed to prepare an aqueous solution, to which 185.5 g of EGM, and 0.1 g of 5 wt%-sulfuric acid were added with stirring at room temperature. The obtained mixture liquid was passed through a filter with an average pore size of 0.5 μm to obtain a colorless, transparent coating composition-20 with a solid content (NV) of 0.5 wt%.

<Formation and evaluation of coating film>

(Formation of primer layer)

A well washed glass plate (the water contact angle of the surface was less than 8°) was set on a spin coater (MIKASA SPINCOATER 1H-DX2) and the prepared priming composition-20 (solid content 0.5 wt%) was dropped at a spinning speed of 500 rpm, and 5 sec after dropping the spinning speed was increased to 4,000 rpm, and the glass plate was spun at the speed for further 10 sec, so that the priming composition-20 was coated uniformly on the glass plate surface. The obtained coated glass plate was pre-dried in an oven at 50 °C for 1 min, and then heated in an oven at 150°C for 1 hour to form a 5 nm-thick primer layer composed of a silane coupling agent on the glass plate.

(Formation of coating film)

On the primer layer surface the coating composition-20 (solid content 0.5 wt%) was applied similarly as the formation of a primer layer with a spin coater (MIKASA SPINCOATER 1H-DX2), pre-dried in an oven at 50°C for 1 min, and then heated at 150°C for 1 hour to form a 5 nm-thick coating film on the silane coupling layer.

Thus, a laminate, in which a primer layer and a coating film (the total thickness of the two was 10 nm) were formed on a glass plate was obtained. The laminate was cooled down to room temperature, and the film evaluation was conducted (appearance, water contact angle, antifogging performance, antifouling performance, and adhesion). The appearance was evaluated after the above operations, however, the antifogging performance and antifouling performance were evaluated after water washing. With respect to the water contact angle, both a value after the heating and cooling operations, and a value after water washing were measured.

In this connection, water washing was conducted under running water by scrubbing with BEMCOT M-3 II (Asahi Kasei Fibers Corporation). After water washing the film surface was dried with an air blow gun, and evaluated. The results are entered in Table 3.

[Reference Example 1B] (Use of copolymer of sulfonic acid and epoxy CH110901)

<Preparation of coating composition, and formation and evaluation of coating film>

A coating composition was prepared, and a coating film was formed, rinsed with water, and thereafter evaluated identically with Example 1B except that 1.25 g of the copolymer CH110901 prepared in Synthesis example 2 was used instead of 1.25 g the copolymer CH120531. The results are entered in Table 3.

[Reference Example 2B] (Use of copolymer of sulfonic acid and silyl CH111011)

A coating composition was prepared, and a coating film was formed, rinsed with water, and thereafter evaluated identically with Example 1B except that 1.25 g of the copolymer CH111011 prepared in Synthesis example 3 was used instead of 1.25 g the copolymer CH120531. The results are entered in Table 3.

[Table 3]

Table 3 (Film 5 nm/ silane coupling agent primer layer 5 nm)

| | Polymer structure | | | | | | Evaluation of film | | | | | |
|---|---|---|---|---|---|---|---|---|---|---|---|---|
| | Polymer No. | Unit ratio | | | Mw | Mw/Mn | Appearance | Water contact angle (°) | | Antifogging performance | Antifouling performance | Adhesion |
| | | ATBS-K | GM | KBM-503 | | | | After curing | * After water washing | * After water washing | * After water washing | * After water washing |
| Example 1B | CH 120531 | 0.88 | 0.06 | 0.06 | 34,000 | 1.9 | transparent | 5 | 6 | A | A | 100/100 |
| Reference Example 1B | CH 110901 | 0.87 | 0.13 | - | 163,000 | 3.4 | transparent | 5 | 21 | C | A | 100/100 |
| Reference Example 2B | CH 111011 | 0.92 | - | 0.08 | 102,000 | 2.8 | transparent | 7 | 13 | C | A | 100/100 |

* Washed under running water by scrubbing with BEMCOT M-3 II (Asahi Kasei Fibers Corporation), and dried with an air blow gun.

[Example 2B] (Formation of film on silane coupling agent primer layer 2)

<Preparation of priming composition-23>

To 0.5 g of KBM-666P that is a silane coupling agent, 148.7 g of EGM, and 0.8 g of silica sol with a solid content of 30 wt% (methanol solution, produced by Nissan Chemical Ind., Ltd) were added successively to prepare 150 g of a priming composition-23 with a solid content of 0.5 wt%.

<Preparation of coating composition, and formation and evaluation of coating film>

A coating composition was prepared, and a coating film was formed, rinsed with water, and thereafter evaluated identically with Example 1B except that the priming composition-20 was changed to the priming composition-23. The obtained cured film was transparent, the water contact angle was 5°, and the adhesion was 100/ 100.

[Example 3B] (Coating 2 on optical substrate having antireflection layer)

<Preparation of coating composition>

With 1.0 g of the copolymer CH120531 prepared in Synthesis example 4, 5.0 g of water was mixed to prepare an aqueous solution, to which 100.0 g of EGM, 2.6 g of TEOS, and 2.5 g of 5 wt%-sulfuric acid were added. The obtained mixture liquid was passed through a filter with an average pore size of 0.5 μm to obtain a colorless, transparent coating composition with a solid content (total amount of copolymer and TEOS as reduced to $SiO_2$) (NV) of 3.0 wt%. The weight ratio of polymer/ TEOS (as reduced to $SiO_2$) in the composition was 4/ 3 (57/ 43).

<Formation and evaluation of coating film>

On a 2 mm-thick optical glass plate provided with AR (antireflection) layers on both surfaces, the composition was coated by a tissue soaked with the same on both the surfaces, pre-dried at 50°C for 3 min, then heated at 170°C for 1 hour to form coating films. After cooling down to room temperature, the coating film surfaces were rinsed with water, and dried with an air blow gun to form 10 nm-coating films on the AR layers. The evaluation results of the films are entered in Table 4.

In this regard, the reflectance was measured under the following conditions.

<Measurement of reflectance>

Measurement apparatus: UV-Visible-NIR spectrophotometer "U-4100" produced by Hitachi, Ltd.
Measuring method: transmission method, specular reflection method (incident angle 5°, absolute reflectance)
Measurement wavelength region: 450 to 750 nm
Scanning speed: 300 nm/min
Sampling interval: 1 nm
Split width: 6 nm

A substrate used in the above Example 3B is made of a highly transparent material (glass) causing almost no internal loss of transmitted light (*e.g.* scattering), and further has a structure that reduces reflection of light at a surface by means of an AR (antireflection) layer. In Example 3B, a 10 nm-thick thin film was formed on the AR layer. As also shown in Figure 3, the formed thin film has high transparency, which is adequate for use in an optical application, and does not impair the antireflection effect of the AR layer. Moreover, a laminate imparted with high hydrophilicity could be obtained. Meanwhile, in general, when a film with a thickness in a micron order or larger is formed, the transparency is expected to be greatly impaired due to reflection at the film surface.
[Table 4]

Table 4

| | | Example 3B |
|---|---|---|
| Coating agent | Polymer No. | CH120531 |
| | Polymer/ $SiO_2$ (weight ratio) | 4/3 (57/43) |
| Evaluation of cured film | Film thickness | 10 nm |
| | Appearance | transparent |
| | Water contact angle | 5° |
| | * Antifogging performance | A |
| | Antifouling performance | A |
| | ** Antireflection performance (visual inspection) | A |
| | Reflectance (both sides) | Figure 3 |

* It was rated as "A", when a sample was not fogged by exhaled air, and rated as "C", when a sample was fogged.
** It was rated by visual inspection as "A", when the reflection of an image was weak and the see-through range was deep, and rated as "C", when the reflection of an image was strong and the see-through range was shallow.

[Reference Experimental Example 1a] (Copolymer CH120417)

<Preparation of coating composition>

With 5 g of the copolymer CH120417 produced in Synthesis example 1, 28 g of water was mixed to prepare a solution, to which 35 g of 2-methoxyethanol (hereinafter abbreviated as "EGM"), 26 g of tetraethoxysilane (hereinafter abbreviated as "TEOS"), and 6 g of 5 wt%-sulfuric acid were added with stirring. The obtained mixture liquid was passed through a filter with an average pore size of 0.5 μm to obtain a colorless, transparent coating composition with a solid content (total amount of copolymer and TEOS as reduced to $SiO_2$) (NV) of 13 wt%. The weight ratio of polymer/ TEOS (as reduced to $SiO_2$) in the composition was 40/ 60.

<Formation and evaluation of coating film>

To a well washed surface of a glass plate (the water contact angle of the surface was less than 8°), the coating composition was applied with a #24 bar coater, pre-dried at 50°C for 5 min, and then heated at 150 °C for 1 hour to form a 3 μm-thick coating film on the glass plate surface. After cooling down to room temperature, the coating film surface was rinsed with water, dried with an air blow gun, and the film was evaluated (appearance, water contact angle, antifogging performance, antifouling performance, and abrasion test). The results are entered in Table 5. In this regard, in Example 1a scratch resistance, and adhesion were also evaluated, and the results are shown respectively in Table 6, and Table 7.

[Reference Example 1a] (Copolymer CH110901)

<Preparation of coating composition and formation of coating film>

A coating composition was prepared, and a coating film was formed, rinsed with water, and thereafter evaluated identically with Example 1, except that 5 g of the ATBS-K/ GMA copolymer CH110901 prepared in Synthesis example 2 was used instead of 5 g of the copolymer CH120417. The results are entered in Table 5.

[Reference Example 2a] (Copolymer CH111011)

<Preparation of coating composition, and formation and evaluation of coating film>

A coating composition was prepared, and a coating film was formed, rinsed with water, and thereafter evaluated identically with Example 1a, except that 5 g of the ATBS-K/ KBM-503 copolymer CH111011 prepared in Synthesis example 3 was used instead of 5 g of the copolymer CH120417. The results are entered in Table 5.

[Reference Example 3a]

<Preparation of coating composition, and formation and evaluation of coating film>

A coating composition was prepared, and a coating film was formed, rinsed with water, and thereafter evaluated identically with Reference Example 2a, except that a mixture of 4.8 g of the copolymer CH11011 and 0.2 g of glycerinetriglycidyl ether (hereinafter abbreviated as "EX-314") was used instead of 5 g of the copolymer CH11011. The results are entered in Table 5.

[Reference Example 4a]

<Preparation of coating composition, and formation and evaluation of coating film>

A coating composition was prepared, and a coating film was formed, rinsed with water, and thereafter evaluated identically with Reference Example 3a, except that TEOS was not added in preparing a coating composition. The results are entered in Table 5.

[Reference Comparative Example 1a] (Evaluation of PSS + epoxy compound + TEOS)

<Preparation of coating composition, and formation and evaluation of coating film>

A coating composition was prepared, and a coating film was formed, rinsed with water, and thereafter evaluated identically with Example 1a, except that a mixture of 23 g of PSS-Na (a 21 wt%-aqueous solution of poly(styrenesulfonic acid sodium salt)) with a weight-average molecular weight Mw = 500,000, and 0.2 g of EX-314 was used instead of 5 g of the copolymer CH120417, and that the water amount added thereto was changed from 28 g to 10 g. The results are entered in Table 5.

[Reference Comparative Example 2a] (Evaluation of PSS + TEOS)

<Preparation of coating composition, and formation and evaluation of coating film>

A coating composition was prepared, and a coating film was formed, rinsed with water, and thereafter evaluated identically with Example 1a, except that 24 g of PSS-Na (a 21 wt%-aqueous solution of poly(styrenesulfonic acid sodium salt)) with a weight-average molecular weight Mw = 500,000 was used instead of 5 g of the copolymer CH120417, and that the water amount added thereto was changed from 28 g to 9 g. The results are entered in Table 5.

[Reference Comparative Example 3a] (Evaluation of epoxy compound + TEOS)

<Preparation of coating composition, and formation and evaluation of coating film>

A coating composition was prepared, and a coating film was formed, rinsed with water, and thereafter evaluated identically with Example 1a, except that 5 g of EX-314 was used instead of 5 g of the copolymer CH120417. The results are entered in Table 5.

[Reference Comparative Example 4a] (Evaluation of TEOS only)

<Preparation of coating composition, and formation and evaluation of coating film>

A coating composition was prepared, and a coating film was formed, rinsed with water, and thereafter evaluated identically with Example 1a, except that the copolymer CH120417 was not used and 28 g of water was not added. The results are entered in Table 5.
[Table 5]

Table 5 (Film thickness 3 μm)

| | Appearance | Water angle (°) | Antifogging performance | antifouling performance | Abrasion test (Haze value) | | Film composition (weight ratio) |
|---|---|---|---|---|---|---|---|
| | | | | | 0 revolution | 50 revolutions | |
| Reference Experimental Example 1a | Transparent | 7 | A | A | 0.3% | 6.1% | Sulfonic acid-epoxy-silyl copolymer/ silica= 40/60 |
| Reference Example 1a | Transparent | 7 | A | A | 0.1% | 6.0% | Sulfonic acid-epoxy copolymer/ silica= 40/60 |
| Reference Example 2a | Transparent | 14 | C | A | 0.2% | 6.4% | Sulfonic acid-silyl copolymer/ silica= 40/60 |
| Reference Example 3a | Transparent | 36 | C | C | - | - | Sulfonic acid-silyl copolymer/ epoxy compound/ silica= 38.4/ 1.6/ 60 |
| Reference Example 4a | Transparent | 35 | C | C | - | - | Sulfonic acid-silyl copolymer/ epoxy compound= 38.4/ 1.6 |
| Reference Comparative Example 1a | Transparent | 15 | C | A | 3.2% | 19.1% | PSS/ epoxy compound/ silica= 38.4/ 1.6/ 60 |
| Reference Comparative Example 2a | Transparent | 8 | A | A | 2.5% | cracked/ detached | PSS/ silica= 40/ 60 |
| Reference Comparative Example 3a | Transparent | 44 | C | C | 1.1% | 3.1% | epoxy compound/ silica= 40/ 60 |
| Reference Comparative Example 4a | Transparent | 25 | C | A | 1.7% | cracked/ detached | silica (TEOS)= 100 |

[Reference Experimental Example 1b] (Weathering test)

The film prepared in Reference Experimental Example 1a was subjected to a xenon weathering test, in which the water contact angle and the b* were measured at test time of 0 hour, 1,000 hours, and 2,000 hours, wherein the value expressed by b* refers to a value of the b* component in the L*a*b* color system. Meanwhile, for comparison with the experimental results of Reference Example 1b described below, the results of the film evaluation (appearance, scratch resistance, abrasion test) before the xenon weathering test are entered in Table 6.

<Test conditions for weathering test>

Measuring apparatus: Ci40000, Toyo Seiki Seisaku-Sho, Ltd. Xenon weathering test conditions:

Light source: xenon lamp, radiation intensity: 60 W/$m^2$ (300 to 400 nm), BPT: 63°C, rainfall: 18/120 min
Filter: inner/outer = borosilicate S/ borosilicate S

[Reference Example 1b] (Hydrophilic acrylic resin film: WO2007/064003, etc.)

<Preparation of coating solution>

First, 0.30 g of IRGACURE-127 (Ciba Japan K. K.) was mixed with 2.0 g of methanol to prepare a methanol solution, to which 0.01 g of Nylostab S-EED (Clariant (Japan) K. K.), 0.12 g of 3-sulfopropyl acrylate, 0.12 g of 2,2-bis(acryloyloxymethyl)propionic acid-3-sulfopropyl ester potassium salt, and 6.0 g of 2-methoxyethanol were added with stirring to prepare a solution.

Subsequently, to this solution, 1.57 g of ethoxylated glycerine triacrylate (A-GLY-9E, Shin-Nakamura Chemical Co., Ltd.), and 6.30 g of dipentaerythritol penta-(or hexa)acrylate (A-9530, Shin-Nakamura Chemical Co., Ltd.) were added to obtain a coating solution with a solid content (NV) of 50 wt%.

<Formation and evaluation of coating film>

The obtained coating solution with a solid content (NV) of 50 wt% was coated on a substrate (a 100 mm-long x 100 mm-wide x 2 mm-thick polycarbonate plate, produced by Takiron Co., Ltd.) with a bar coater #06, and immediately placed in a warm-air drier at 40 to 50 °C for 2 min to evaporation the solvent. Thereafter, the work was finally passed through a UV conveyor produced by Fusion UV Systems Japan K. K. (electrodeless discharge lamp H bulb, conveyor speed 6 m/min, cumulative amount of light 900 mJ/$cm^2$) to form a transparent film with a thickness of 4 $\mu$m on a surface of the substrate, and finally the film surface was washed with running water and dried with an air blow gun. The film was evaluated in terms of appearance, scratch resistance, abrasion test. Further, a weathering test was conducted similarly as in Reference Experimental Example 1b, and the water contact angle was measured at test time of 0 hour, 1,000 hours, and 2,000 hours. The results are entered in Table 6, wherein "acrylic resin 100" in the column concerning the film composition (weight ratio) for Reference Example 1b in Table 6 means that the content of an acrylic resin in the polymer component constituting a coating solution is 100% in Reference Example 1b.
[Table 6]

Table 6 (Weathering test, film thickness: Reference Experimental Example 1b: 3 $\mu$m, Reference Example 1b: 4 $\mu$m)

| | | Reference Experimental Example 1b | Reference Example 1b |
|---|---|---|---|
| Film composition (weight ratio} | | Copolymer CH120417/ silica= 40/60 | Acrylic resin = 100 |
| Appearance | | transparent | transparent |
| Scratch resistance | Load 1 Kg | A | A |
| Abrasion test<br>(Haze value) | 0 revolut.<br>50 revolut. | 0.3%<br>6.1% | 0.2%<br>9.1% |

(continued)

| | | Reference Experimental Example 1b | Reference Example 1b |
|---|---|---|---|
| Weathering test | 0 hour | Water contact angle 8°<br>b* 1.9 | Water contact angle 5°<br>b 1.8 |
| | 1000 hours | Water contact angle 8°<br>b* 2.0 | Film was degraded and detached |
| | 2000 hours | Water contact angle 9°<br>b* 2.0 | - |

[Reference Experimental Example 1c] (Weight ratio of copolymer CH120417/ TEOS (as reduced to $SiO_2$) = 4/ 3)

<Preparation of coating composition, and formation and evaluation of coating film>

A coating composition was prepared, and a coating film was formed, rinsed with water, and thereafter evaluated (appearance, water contact angle, antifogging performance, antifouling performance, abrasion test, and adhesion) identically with Reference Experimental Example 1a, except that the amount of the copolymer CH120417 was changed from 5.0 g to 7.1 g, and the amount of TEOS was changed from 26 g to 18.6 g. The results are entered in Table 7. The evaluation results concerning the film obtained in Reference Experimental Example 1a are also shown in Table 7.

[Reference Experimental Example 2c] (Weight ratio of copolymer CH120417/ TEOS (as reduced to $SiO_2$) = 1/ 1)

<Preparation of coating composition, and formation and evaluation of coating film>

A coating composition was prepared, and a coating film was formed, rinsed with water, and thereafter evaluated identically with Reference Experimental Example 1c, except that the amount of the copolymer CH120417 was changed from 5.0 g to 6.3 g, and the amount of TEOS was changed from 26 g to 21.7 g. The results are entered in Table 7.

[Reference Experimental Example 3c] (Weight ratio of copolymer CH120417/ TEOS (as reduced to $SiO_2$) = 1/ 2)

<Preparation of coating composition, and formation and evaluation of coating film>

A coating composition was prepared, and a coating film was formed, rinsed with water, and thereafter evaluated identically with Reference Experimental Example 1c, except that the amount of the copolymer CH120417 was changed from 5.0 g to 4.2 g, and the amount of TEOS was changed from 26 g to 28.9 g. The results are entered in Table 7.

[Reference Experimental Example 4c] (Weight ratio of copolymer CH120417/ TEOS (as reduced to $SiO_2$) = 1/ 3)

<Preparation of coating composition, and formation and evaluation of coating film>

A coating composition was prepared, and a coating film was formed, rinsed with water, and thereafter evaluated identically with Reference Experimental Example 1c, except that the amount of the copolymer CH120417 was changed from 5.0 g to 3.1 g, and the amount of TEOS was changed from 26 g to 32.5 g. The results are entered in Table 7.
[Table 7]

Table 7 (Copolymer CH120417, film thickness 3 μm)

| | Film composition (weight ratio) | | Appearance | Water contact angle (°) | Antifogging performance | Antifouling performance | Abrasion test | | Adhesion |
|---|---|---|---|---|---|---|---|---|---|
| | Copolymer | $SiO_2$ | | | | | 0 revolut. | 50 revolut. | |
| Reference Experimental Example 1c | 57 | 43 | transparent | 5 | A | A | 0.4 | 26.7 | 100/100 |
| Reference Experimental Example 2c | 50 | 50 | transparent | 5 | A | A | 0.2 | 20.7 | 100/100 |
| Reference Experimental Example 1a | 40 | 60 | transparent | 8 | A | A | 0.3 | 6.1 | 100/100 |
| Reference Experimental Example 3c | 33 | 67 | transparent | 14 | C | A | 0.2 | 3.7 | 100/100 |
| Reference Experimental Example 4c | 25 | 75 | transparent | 32 | C | A | 0.2 | 1.1 | 100/100 |

[Reference Experimental Example 1d] (Copolymer CH120531)

<Preparation of coating composition>

With 3.3 g the copolymer CH120531 prepared in Synthesis example 4, 22 g of water was mixed to prepare a solution. To the solution 28 g of EGM, 22 g of TEOS, and 4.5 g of a 5 wt%-sulfuric acid were added. The obtained mixture liquid was passed through a filter with an average pore size of 0. 5 μm to obtain a colorless, transparent coating composition with a solid content (total amount of copolymer and TEOS as reduced to $SiO_2$) (NV) of 12 wt%. The weight ratio of polymer/ TEOS (as $SiO_2$) in the composition was 33/ 67.

<Formation and evaluation of coating film>

To a well washed surface of a glass plate (the water contact angle of the surface was less than 8°), the coating composition was applied with a #24 bar coater, pre-dried at 50°C for 5 min, and then heated at 150°C for 1 hour to form a 3 μm-thick coating film on the glass plate surface. After cooling down to room temperature, the coating film surface was rinsed with water, and the film was evaluated (appearance, water contact angle, and abrasion test). The results are entered in Table 8.

[Reference Experimental Example 2d] (Copolymer CH130117)

<Preparation of coating composition, and formation and evaluation of coating film>

A coating composition was prepared, and a coating film was formed, rinsed with water, and thereafter evaluated identically with Reference Experimental Example 1d, except that 3.3 g of the copolymer CH130117 prepared in Synthesis example 5 was used instead of 3.3 g of the copolymer CH120417. The results are entered in Table 8.

[Reference Experimental Example 3d] (Copolymer CH120517)

<Preparation of coating composition, and formation and evaluation of coating film>

A coating composition was prepared, and a coating film was formed, rinsed with water, and thereafter evaluated identically with Reference Experimental Example 1d, except that 3.3 g of the copolymer CH120517 prepared in Synthesis example 6 was used instead of 3.3 g of the copolymer CH120417. The results are entered in Table 8.

[Reference Experimental Example 4d] (Copolymer CH130115)

<Preparation of coating composition, and formation and evaluation of coating film>

A coating composition was prepared, and a coating film was formed, rinsed with water, and thereafter evaluated identically with Reference Experimental Example 1d, except that 3.3 g of the copolymer CH130115 prepared in Synthesis example 7 was used instead of 3.3 g of the copolymer CH120417. The results are entered in Table 8.

[Example 5d] (Copolymer CH121112)

<Preparation of coating composition, and formation and evaluation of coating film>

A coating composition was prepared, and a coating film was formed, rinsed with water, and thereafter evaluated identically with Example 1d, except that 3.3 g of the copolymer CH121112 prepared in Synthesis example 8 was used instead of 3.3 g of the copolymer CH120417. The results are entered in Table 4.

[Reference Experimental Example 6d] (Copolymer CH121029)

<Preparation of coating composition, and formation and evaluation of coating film>

A coating composition was prepared, and a coating film was formed, rinsed with water, and thereafter evaluated identically with Reference Experimental Example 1d, except that 3.3 g of the copolymer CH121029 prepared in Synthesis example 9 was used instead of 3.3 g of the copolymer CH120417. The results are entered in Table 8.

[Reference Experimental Example 7d] (Copolymer CH130219)

<Preparation of coating composition, and formation and evaluation of coating film>

A coating composition was prepared, and a coating film was formed, rinsed with water, and thereafter evaluated identically with Reference Experimental Example 1d, except that 3.3 g of the copolymer CH130219 prepared in Synthesis example 10 was used instead of 3.3 g of the copolymer CH120417. The results are entered in Table 8.

[Reference Experimental Example 8d] (Copolymer CH130319)

<Preparation of coating composition, and formation and evaluation of coating film>

A coating composition was prepared, and a coating film was formed, rinsed with water, and thereafter evaluated identically with Reference Experimental Example 1d, except that 3.3 g of the copolymer CH130319 prepared in Synthesis example 11 was used instead of 3.3 g of the copolymer CH120531. The results are entered in Table 8.
[Table 8]

Table 8 (Copolymer/ $SiO_2$ = 33/67, film thickness 3 μm)

| | Performance of cured film | | | | Structure of polymer | | | | | | | | |
|---|---|---|---|---|---|---|---|---|---|---|---|---|---|
| | Appearance | Water contact angle (°) | Abrasion resistance | | Polymer No. | Sulfonic acid unit a | | Epoxy unit b | | Silyl unit c | | Mw | Mw/Mn |
| | | | 0 revolut. | 50 revolut. | | Kind | Molar ratio | Kind | Molar ratio | Kind | Molar ratio | | |
| Reference Experimental Example 1d | transparent | 15 | 1.5 | 3.6 | CH120531 | ATBS-K | 0.88 | GMA | 0.06 | KBM-503 | 0.06 | 34,000 | 1.9 |
| Reference Experimental Example 2d | transparent | 18 | 0.6 | 3.2 | CH130117 | ATBS-K | 0.82 | GMA | 0.14 | KBE-503 | 0.04 | 71,000 | 2.5 |
| Reference Experimental Example 3d | transparent | 18 | 0.2 | 3.5 | CH120517 | ATBS-K | 0.83 | GMA | 0.09 | KBM-503 | 0.08 | 145,000 | 3.7 |
| Reference Experimental Example 4d | transparent | 18 | 0.2 | 3.7 | CH130115 | ATBS-K | 0.86 | GMA | 0.05 | KBE-503 | 0.09 | 68,000 | 2.5 |
| Reference Experimental Example 5d | transparent | 21 | 0.2 | 3.8 | CH121112 | ATBS-K | 0.77 | GMA | 0.11 | KBM-503 | 0.12 | 145,000 | 3.7 |
| Reference Experimental Example 6d | transparent | 45 | 0.3 | 2.6 | CH121029 | ATBS-K | 0.46 | GMA | 0.29 | KBM-503 | 0.25 | 14,000 | 1.8 |
| Reference Experimental Example 7d | transparent | 12 | 0.2 | 4.2 | CH130219 | SPA-Na | 0.91 | GOBA | 0.05 | KBM-5103 | 0.04 | 96,000 | 3.9 |
| Reference Experimental Example 8d | transparent | 9 | 0.2 | 8.5 | CH130319 | ATBS-K | 0.94 | GMA | 0.03 | KBE-503 | 0.03 | 54,000 | 2.3 |

[Reference Experimental Example 1e] (Measurement of degree of gradient-1)

<Preparation of coating composition>

To 6.0 g of the copolymer CH120531 prepared in Synthesis example 4, 29.0 g of water was added to form an aqueous solution, to which 38.0 g of EGM, 21.0 g of TEOS, and 6. 0 g of a 5 wt%-sulfuric acid were added with stirring at room temperature. The obtained mixture liquid was passed through a filter with an average pore size of 0. 5 μm to obtain 100.0 g of a colorless, transparent coating composition with a solid content (NV) of 12 wt%. The weight ratio of polymer/ TEOS (as reduced to $SiO_2$) in the composition was 1/ 1 (50/ 50).

<Formation and evaluation of coating film>

To a well washed surface of a glass plate (the water contact angle of the surface was less than 8°), the coating composition was applied with a #12 bar coater, pre-dried at 50°C for 5 min, and then heated at 150 °C for 1 hour to form a 1.5 μm-thick coating film on the glass plate surface. After cooling down to room temperature, the coating film surface was rinsed with water, and the film was evaluated (appearance, water contact angle, and sulfonic acid concentration). The results are entered in Table 9.

[Reference Experimental Example 2e] (Measurement of degree of gradient-2)

<Preparation of urethane priming composition>

By mixing 10.0 g of TAKELAC A315 (solid content 50 wt%) produce by Mitsui Chemicals, Inc., 104.0 g of 2-pentanone as a solvent, and 1.0 g of TAKENATE A10 (solid content 75 wt%) produce by Mitsui Chemicals, Inc. to be dissolved, 115.0 g of a urethane primer solution with a solid content of 5 wt% was prepared.

<Preparation of coating composition>

The coating composition obtained in Reference Experimental Example 1e was used as it was.

<Formation and evaluation of coating film>

To a well washed surface of a glass plate (the water contact angle of the surface was less than 8°), the priming composition was applied with a #2 bar coater, and then heated at 150°C for 10 min to form a 0.1 μm-thick primer layer on the glass plate surface.

On a surface of the primer layer, a 1.5 μm-thick coating film was formed using the coating composition similarly as in Reference Experimental Example 1e, and after water washing of the coating film surface the film was evaluated. The results are entered in Table 9.

[Table 9]

Table 9

| | Reference Experimental Example 1e | Reference Experimental Example 2e |
|---|---|---|
| Substrate | Glass | Glass |
| Urethane primer | Without | With (0.1 μm) |
| Kind of polymer | CH120531 | CH120531 |
| Polymer/ $SiO_2$ weight ratio | 50/50 | 50/50 |
| Hydrophilic layer film thickness | 1.5 μm | 1.5 μm |
| Appearance | transparent | transparent |
| Water contact angle | 5° | 13° |
| * Surface concentration of sulfonic acid Sa | 3.8E+00 | 3.0E+00 |
| ** Internal concentration of sulfonic acid Da | 2.4E+00 | 2.5E+00 |

(continued)

| Table 9 | | |
|---|---|---|
| | Reference Experimental Example 1e | Reference Experimental Example 2e |
| Degree of gradient Sa/ Da | 1.5 | 1.2 |
| * Intensity of sulfonic acid ($SO_3^-$) at a surface of a hydrophilic film according to TOF-SIMS analysis<br>** Intensity of sulfonic acid ($SO_3^-$) at the point of 1/2 film thickness inside a hydrophilic film according to TOF-SIMS analysis | | |

[Reference Experimental Example 1f] (Formation of coating film on plastic substrate)

<Preparation of coating composition-16>

With 3.0 g of the copolymer CH120517 prepared in Synthesis example 6, 10.0 g of water was mixed to prepare an aqueous solution, to which 15. 0 g of EGM, 1.5 g of glycidyloxypropyltrimethoxysilane (hereinafter abbreviated as "KBM-403"), 0. 03 g of POLYFLOW KL-100 (produced by Kyoeisha Chemical Co., Ltd.) as an additive, and 5.0 g of 5 wt%-sulfuric acid were added.

Into the obtained mixture liquid, 1.2 g of a methanol silica sol with a solid content of 30 wt% (Nissan Chemical Ind., Ltd.) was dropped with stirring by a super homo-mixer (ROBOMICS, F-Model; rotating speed 6,000 rpm, TOKUSHU GIKEN CO., LTD.). After completion of dropping, stirring was continued for another 3 min to obtain a coating composition with a solid content (NV) of 13 wt%.

The relative content (weight ratio) of main components of the obtained coating composition was copolymer/ KBM-403/ silica = 50/ 25/ 6 (61.7/ 30.9/ 7.4).

<Formation and evaluation of coating film>

(Formation of primer layer)

A 2 mm-thick polycarbonate plate (Takiron Co., Ltd.) was set on a spin coater (MIKASA SPINCOATER 1H-DX) and the urethane priming composition (solid content 5 wt%) prepared in Reference Experimental Example 2e was dropped at a spinning speed of 500 rpm, and 5 sec after dropping the spinning speed was increased to 4,000 rpm, and the polycarbonate plate was spun at the speed for further 10 sec, so that the urethane priming composition was coated uniformly on the polycarbonate plate surface. The obtained coated plate was pre-dried in an oven at 50 °C for 1 min, and then heated in an oven at 120 °C for 10 min to form a 0.05 μm-thick primer layer on the polycarbonate plate surface.

(Formation of coating film)

The coating composition-16 was applied onto the primer layer surface with a bar coater #40, pre-dried at 50°C for 5 min, and then heated at 120 °C for 1 hour to form a 5 μm-thick coating film on the primer layer. After cooled down to room temperature, the coating film surface was washed with water, and the film was evaluated (appearance, water contact angle, and adhesion).

The obtained film was transparent, the water contact angle of the film was 15°, and the result of an adhesion test (cross-cut peel test) was 100/ 100.

[Reference Experimental Example 1g] (Curing by combination of heat and UV)

<Preparation of coating composition-17>

With 6.0 g of the copolymer CH120417 prepared in Synthesis example 1, 29.0 g of water was mixed to prepare a solution, to which 38.0 g of EGM, 20.8 g of TEOS, and 6.0 g of 5 wt%-sulfuric acid were mixed with stirring at room temperature. To the obtained mixture liquid, 1.2 g of Denacol acrylate DX-314 (a multifunctional acrylate, Nagase ChemteX Corporation; equivalent to 10 wt% of the total weight of the copolymer CH120417 and TEOS (as reduced to $SiO_2$)), and 0.06 g of DAROCUR-1173 (an UV polymerization initiator, BASF SE Japan Ltd.) were added, and the mixture was passed through a filter with an average pore size 0.5 μm to obtain 101 g of a colorless, transparent coating composition with a solid content (NV) of 13 wt%. The weight ratio of polymer/ multifunctional acrylate/ TEOS (as reduced to $SiO_2$) in

the composition was 5/ 1/ 5 (45.5/ 9.0/ 45.5).

<Formation and evaluation of coating film>

To a well washed surface of a glass plate (the water contact angle of the surface was less than 8°), the coating composition-17 was applied with a #24 bar coater, pre-dried at 50°C for 5 min, and thereafter irradiated with UV (electrodeless discharge lamp H bulb, illuminance 800 mW/$cm^2$, cumulative amount of light 390 mJ/ $cm^2$), and then heated at 150 °C for 1 hour to form a 3 μm-thick coating film on the glass plate surface. After cooling down to room temperature, the coating film surface was rinsed with water, and the film was evaluated (water contact angle, antifogging performance, and antifouling performance).
The water contact angle of the obtained film was 6°, and the film was superior in antifogging performance, and antifouling performance.

[Industrial Applicability]

A film formed by curing a copolymer (i) or a composition containing the copolymer (i), and a laminate including at least one layer of the film, obtainable according to the present invention, are advantageously usable as an antifogging material, an antifouling material, a quick-drying material, an antistatic material, an under-coat material, etc.

## Claims

1. A film which is obtained from a copolymer (i) comprising constitutional units expressed by the following general formulas (1), (2), and (3), or from a composition comprising the copolymer (i), and which has a thickness of not more than 100 nm,

[Chem. Formula 1]

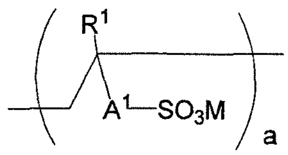

(1)

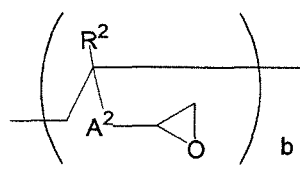

(2)

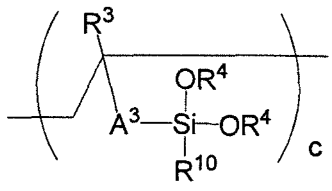

(3)

wherein in the formulas (1), (2) and (3), each of a, b, and c represents the constitutional ratio of each constitutional unit, satisfying a = 0.998 to 0.001, b = 0.001 to 0.998, c = 0.001 to 0.998, and a + b + c = 1;
$A^1$ is a single bond, a C1 to C 10 divalent hydrocarbon group, a group expressed by the following formula (1-1), or a group expressed by the following formula (1-2); $A^2$ is a single bond, a C1 to C 10 divalent hydrocarbon

group, a group expressed by the following formula (2-1), or a group expressed by the following formula (2-2) ; $A^3$ is a single bond, a C1 to C 10 divalent hydrocarbon group, a group expressed by the following formula (3-1), or a group expressed by the following formula (3-2);
$R^1$, $R^2$ and $R^3$ independently represent a hydrogen atom, or a methyl group; $R^4$ independently represents a hydrogen atom, a methyl group, an ethyl group, a propyl group, or a butyl group; $R^{10}$ represents a hydrogen atom, a methyl group, an ethyl group, a propyl group, a butyl group, a methoxy group, an ethoxy group, a propoxy group, or a butoxy group; and
M represents a hydrogen atom, an alkali metal ion, a semi-valent alkaline earth metal ion, an ammonium ion, or an amine ion; and

[Chem. Formula 2]

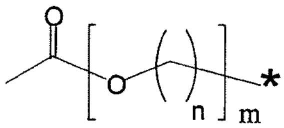
(1—1)

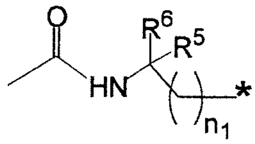
(1—2)

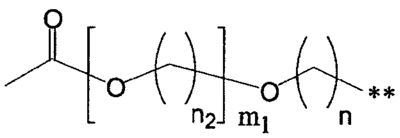
(2—1)

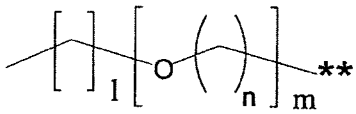
(2—2)

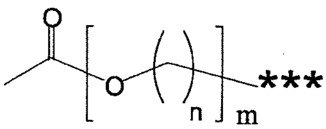
(3—1)

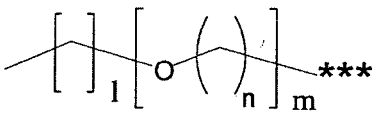
(3—2)

wherein in the formulas (1-1), (1-2), (2-1), (2-2), (3-1), and (3-2), n and $n_2$ independently are an integer from 1 to 10; $n_1$ is an integer from 0 to 10; m is an integer from 1 to 6; $m_1$ is an integer from 0 to 6; 1 is an integer from 0 to 4; $R^5$ and $R^6$ independently represent a hydrogen atom, or a methyl group; * represents an end bonding to $SO_3M$; ** represents an end bonding to an epoxy group; and *** represents an end bonding to a Si atom.

2. The film according to claim 1, wherein the constitutional units expressed by the general formulas (1), (2), and (3) comprise respectively constitutional units expressed by the following general formulas (4), (5) and (6):

[Chem. Formula 3]

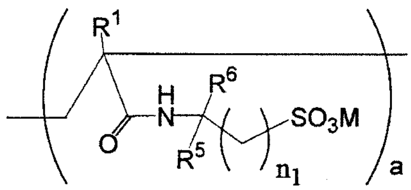

(4)

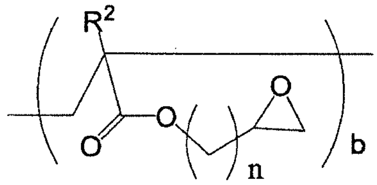

(5)

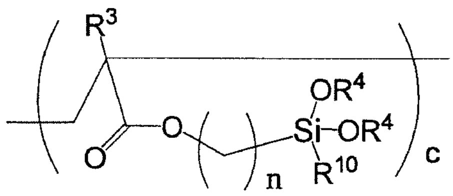

(6)

wherein in the formulas (4), (5) and (6), each of a, b, and c represents the constitutional ratio of each constitutional unit, satisfying a = 0.998 to 0.001, b = 0.001 to 0.998, c = 0.001 to 0.998, and a + b + c = 1;
n is an integer from 1 to 10; $n_1$ is an integer from 0 to 10;
$R^1$, $R^2$, $R^3$, $R^5$, and $R^6$ independently represent a hydrogen atom, or a methyl group; $R^4$ independently represents a hydrogen atom, a methyl group, an ethyl group, a propyl group, or a butyl group; $R^{10}$ represents a hydrogen atom, a methyl group, an ethyl group, a propyl group, a butyl group, a methoxy group, an ethoxy group, a propoxy group, or a butoxy group; and
M represents a hydrogen atom, an alkali metal ion, a semi-valent alkaline earth metal ion, an ammonium ion, or an amine ion.

3. The film according to claim 1 or 2, wherein the weight-average molecular weight of the copolymer (i) measured by GPC is from 500 to 3,000,000.

4. The film according to any one of claims 1 to 3, which is obtained from a composition comprising the copolymer (i) and a silane compound (ii) expressed by the following general formula (7) :

[Chem. Formula 4]

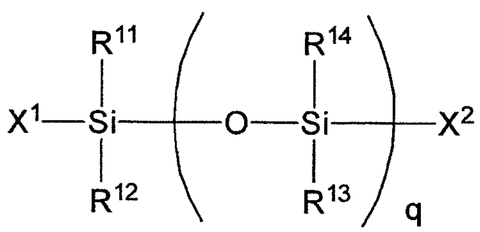

(7)

wherein in the formula (7), $X^1$ and $X^2$ independently represent a hydroxy group, a C1 to C4 alkoxy group, or a halogen atom;
$R^{11}$ to $R^{14}$ independently represent a hydroxy group, a hydrogen atom, a C1 to C4 alkyl group, a vinyl group, an allyl group, a phenyl group, a 2-phenylethyl group, a C1 to C4 alkoxy group, or a halogen atom; and
q is an integer from 0 to 10,000.

**5.** The film according to claim 4, wherein the ratio of the weight of the copolymer (i) to the weight of the silane compound (ii) reduced to a $SiO_2$ weight is in a range from 99.9/ 0.1 to 0.1/ 99.9.

**6.** The film according to any one of claims 1 to 5, which is obtained by heating.

**7.** A laminate comprising a layer (Z) that comprises the film according to any one of claims 1 to 6 and a substrate.

**8.** The laminate according to claim 7, wherein the layer (Z) is an outermost layer of the laminate.

**9.** The laminate according to claim 7 or 8, which comprises a hard coat layer between the layer (Z) and the substrate.

**10.** The laminate according to any one of claims 7 to 9, which comprises an antireflection layer between the layer (Z) and the substrate.

**11.** The laminate according to any one of claims 7 to 10, wherein the layer (Z) has a change in a water contact angle of 20° or less, the water contact angle being observed before and after the layer (Z), immersed in 25°C water, is ultrasonically treated for 10 minutes.

**12.** An optical article or an optical device, comprising the laminate according to any one of claims 7 to 11.

[Fig. 1]

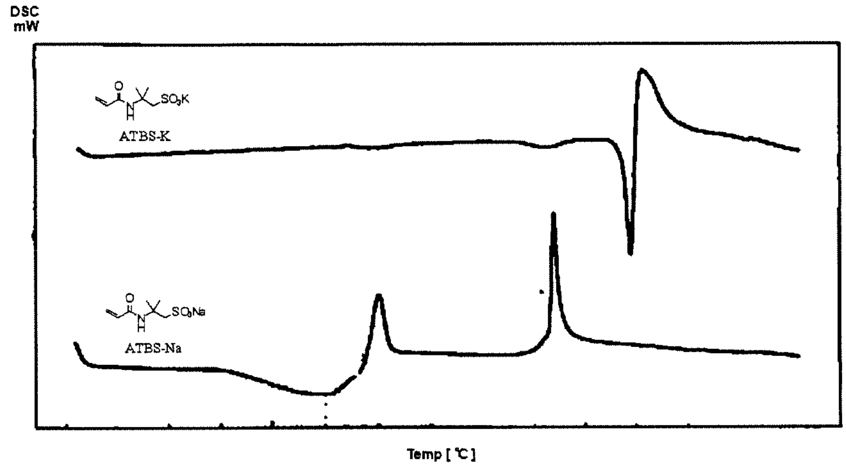


[Fig. 2]

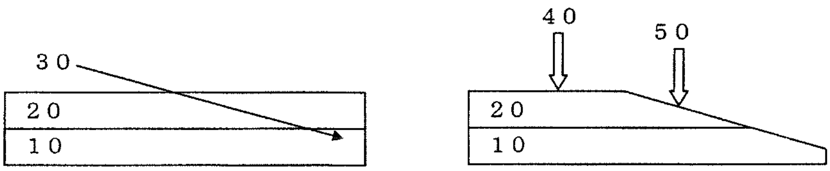

[Fig. 3]

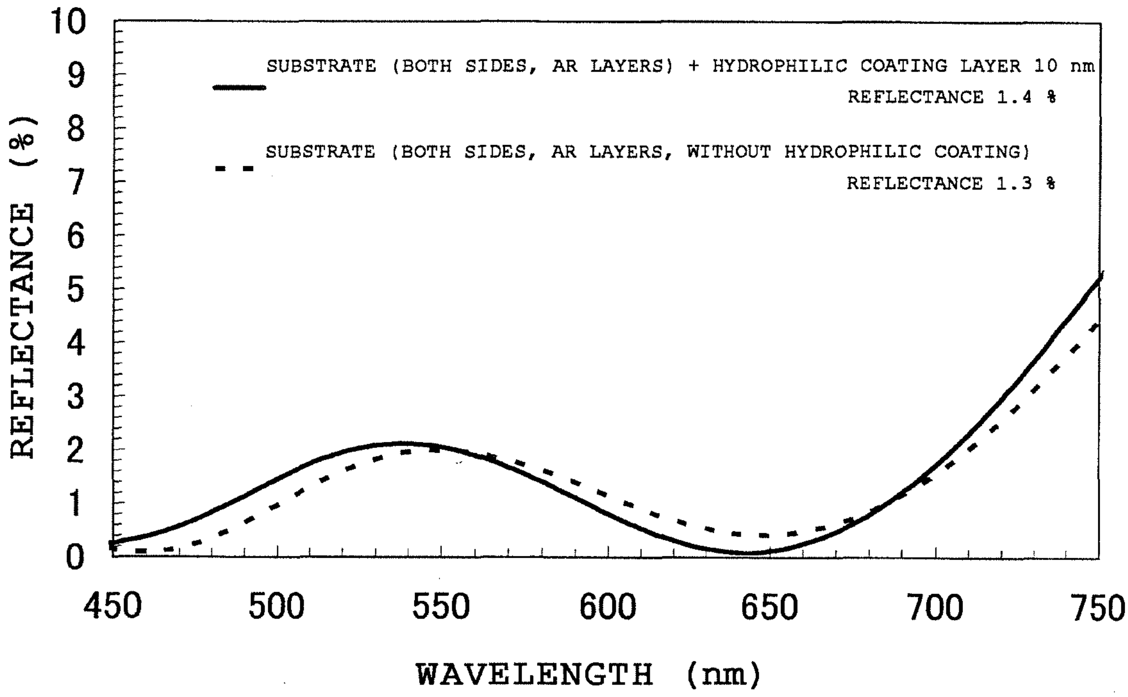
10
9
8
7
6
5
4
3
2
1
0
REFLECTANCE (%)
SUBSTRATE (BOTH SIDES, AR LAYERS) + HYDROPHILIC COATING LAYER 10 nm
REFLECTANCE 1.4 %
SUBSTRATE (BOTH SIDES, AR LAYERS, WITHOUT HYDROPHILIC COATING)
REFLECTANCE 1.3 %
450
500
550
600
650
700
750
WAVELENGTH (nm)

[Fig. 4]

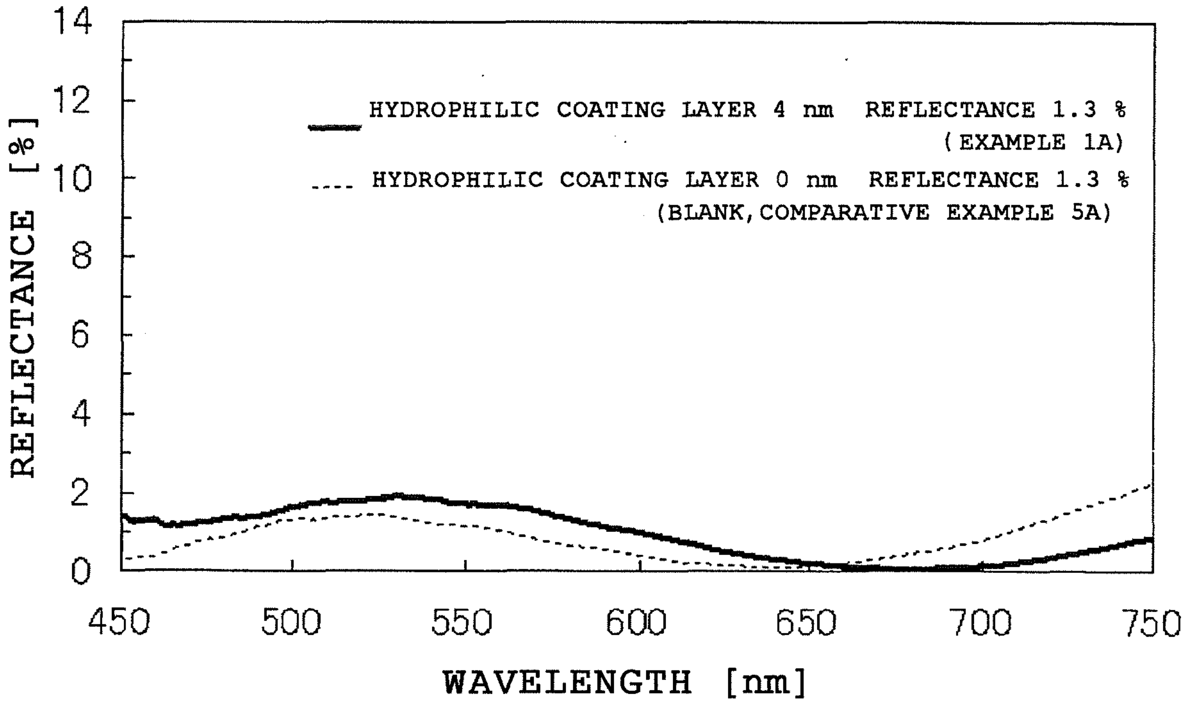
14
12
10
8
6
4
2
0
REFLECTANCE [%]
HYDROPHILIC COATING LAYER 4 nm REFLECTANCE 1.3 %
(EXAMPLE 1A)
HYDROPHILIC COATING LAYER 0 nm REFLECTANCE 1.3 %
(BLANK, COMPARATIVE EXAMPLE 5A)
450
500
550
600
650
700
750
WAVELENGTH [nm]

## INTERNATIONAL SEARCH REPORT

International application No.
PCT/JP2014/060119

A. CLASSIFICATION OF SUBJECT MATTER
*C09D143/00*(2006.01)i, *B32B27/28*(2006.01)i, *C09D5/02*(2006.01)i, *C09D5/16*(2006.01)i, *C09D7/12*(2006.01)i, *C09D201/02*(2006.01)i, *C09D201/06*(2006.01)i, *C09D201/10*(2006.01)i

According to International Patent Classification (IPC) or to both national classification and IPC

B. FIELDS SEARCHED

Minimum documentation searched (classification system followed by classification symbols)
C09D143/00, B32B27/28, C09D5/02, C09D5/16, C09D7/12, C09D201/02, C09D201/06, C09D201/10

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)
CAplus/REGISTRY(STN)

C. DOCUMENTS CONSIDERED TO BE RELEVANT

| Category* | Citation of document, with indication, where appropriate, of the relevant passages | Relevant to claim No. |
|---|---|---|
| A | JP 2010-070735 A (Fujifilm Corp.), 02 April 2010 (02.04.2010), claims; examples (Family: none) | 1-12 |
| A | JP 2008-088261 A (Fujifilm Corp.), 17 April 2008 (17.04.2008), claims; examples & US 2008/0207849 A1 & EP 1905784 A1 | 1-12 |
| A | WO 2007/064003 A1 (Mitsui Chemicals, Inc.), 07 June 2007 (07.06.2007), claims; examples & US 2009/0191373 A1 & EP 1955782 A1 & CN 101309760 A & KR 10-2008-0075540 A | 1-12 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 01 July, 2014 (01.07.14) | 15 July, 2014 (15.07.14) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.
PCT/JP2014/060119

C (Continuation). DOCUMENTS CONSIDERED TO BE RELEVANT

| Category* | Citation of document, with indication, where appropriate, of the relevant passages | Relevant to claim No. |
|---|---|---|
| A | JP 08-290531 A (Teijin Ltd.), 05 November 1996 (05.11.1996), claims; examples (Family: none) | 1-12 |
| A | JP 11-021512 A (Asahi Denka Co., Ltd.), 26 January 1999 (26.01.1999), claims; examples (Family: none) | 1-12 |
| A | JP 2013-020103 A (Mitsubishi Paper Mills Ltd.), 31 January 2013 (31.01.2013), claims; paragraphs [0032], [0063] (Family: none) | 1-12 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2007064003 A
- JP S5622365 A
- JP S61166824 A
- JP H06166847 A
- JP H11021512 A
- JP 2006342221 A
- JP 2006089589 A


### Non-patent literature cited in the description


- Toagosei Research Annual Report. *TREND,* February 1999, 39-44
- *High Polymers, Japan (Kobunshi),* 1995, vol. 44 (5), 307
- *Expected Materials for the Future,* 2002, vol. 2 (1), 36-41
- Technology and Application of Plastic Lens System. CMC Publishing Co., Ltd, 30 June 2003, 165-166